(19) Europäisches Patentamt
European Patent Office
Office européen des brevets

(11) Veröffentlichungsnummer: **0 142 104 B1**

(12) **EUROPÄISCHE PATENTSCHRIFT**

(45) Veröffentlichungstag der Patentschrift: **03.01.90**

(51) Int. Cl.$^5$: **C 09 B 62/012**, D 06 P 3/10

(21) Anmeldenummer: **84113183.2**

(22) Anmeldetag: **02.11.84**

# (54) Faserreaktive Chromkomplexe, deren Herstellung und Verwendung.

(30) Priorität: **04.11.83 CH 5966/83**

(43) Veröffentlichungstag der Anmeldung: **22.05.85 Patentblatt 85/21**

(45) Bekanntmachung des Hinweises auf die Patenterteilung: **03.01.90 Patentblatt 90/01**

(84) Benannte Vertragsstaaten:
**BE CH DE FR GB IT LI**

(56) Entgegenhaltungen:
DE-C- 933 622
FR-A- 1 310 178
FR-A- 2 225 486
FR-A- 2 333 029
GB-A- 793 903
**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Schütz, Hans Ulrich**
**Hans Huber-Strasse 23**
**CH-4053 Basel (CH)**
Erfinder: **Schlesinger, Ulrich, Dr.**
**Hermann Sautter 5**
**D-7851 Binzen (DE)**
Erfinder: **Back, Gerhard, Dr.**
**Hammerstrasse 5**
**D-7850 Lörrach (DE)**

(74) Vertreter: **Zumstein, Fritz, Dr. et al**
**Bräuhausstrasse 4**
**D-8000 München 2 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Metallkomplexfarbstoffe sind seit langem bekannt und werden in grossem Umfang für das Färben und Bedrucken von Textilien aus Fasermaterialien in den verschiedensten Nuancen eingesetzt. Angesichts der immer höheren Anforderungen an diese Farbstoffe z. B. in bezug auf die Egalität der Ausfärbungen und das Echtheitsniveau, ist der erreichte technische Stand vielfach nicht voll befriedigend. So genügen viele der bekannten 1 : 2-Metallkomplexazo- der -azomethinfarbstoffe in Bezug auf die Egalität der Ausfärbungen wegen mangelndem Diffusionsvermögen der Farbstoffe in der Faser nicht den heutigen Anforderungen ; die meisten der bekannten 1 : 1-Metallkomplexazo- oder -azomethinfarbstoffe haben den Nachteil, dass sie bei einem stark sauren pH-Wert gefärbt werden müssen, bei dem einige Fasermaterialien bereits geschädigt werden.

Die der vorliegenden Erfindung zugrunde liegende Aufgabe war es, neue Metallkomplexazo- oder -azomethinfarbstoffe zu finden, die bei leichter Zugänglichkeit und einfacher Applikationstechnik egale Ausfärbungen bei gleichzeitig guten Allgemeinechtheiten, insbesondere Nassechtheiten, ergeben, die den heutigen Anforderungen genügen. Es hat sich gezeigt, dass die weiter unten definierten neuen Chromkomplexfarbstoffe diesen Anforderungen genügen.

Gegenstand der vorliegenden Erfindung sind Chromkomplexfarbstoffe der Formel

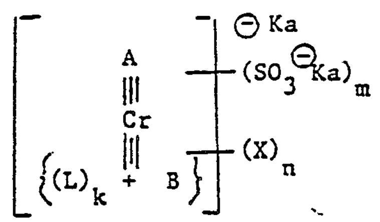
(1)

worin A der Rest eines dicyclisch metallisierbaren Azo- oder Azomethinfarbstoffes, B der Rest einer potentiell zwei- oder dreizähnigen, bianionischen, komplexbildenden organischen Verbindung, der keine Azo- oder Azomethingruppe enthält, L ein farbloser monofunktioneller Ligand, X ein faserreaktiver Rest, Ka ein Kation, k = 0 oder 1, m = 1, 2 oder 3 und n = 1 oder 2 ist, wobei der Rest X und die Gruppe $SO_3^{\ominus}$ Ka an den Rest A und/oder B gebunden ist.

Die erfindungsgemässen Chromkomplexe der Formel (1) sind anionisch. So ist der Rest B als potentiell zwei- oder dreizähnige, komplexbildende, organische Verbindung mit zwei kovalenten und gegebenenfalls einer koordinativen Bindung an dem Chromkomplex beteiligt. Da die Chromkomplexe der Formel (1) ihre maximale Koordinationszahl 6 betätigen, können die Komplexe je nach Art und Bindungsweise des Restes B noch einen monofunktionellen Liganden L enthalten, bei dem sich freie Elektronenpaare der Donatoratome an der Bindung beteiligen. Gemäss der allgemein üblichen und anschaulichen generischen Schreibweise der Metallkomplexe kommen für die Chromkomplexe der Formel (1) ohne Berücksichtigung der $—SO_3^{\ominus}$ Ka und X Substituenten folgende Chromkomplexe in Betracht :

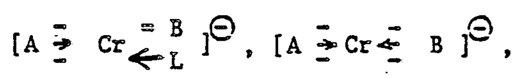

wobei ein ausgezogener Strich die kovalente Bindung und ein Pfeil die Bindung freier Elektronenpaare der Donatoratome symbolisiert.

Der Azo- oder Azomethinfarbstoffrest A in Formel (1) kann ausser den komplexbildenden Gruppen die üblichen in Farbstoffen vorkommenden Substituenten enthalten, wie z. B. Alkylgruppen mit 1 bis 5 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Mono- oder Dialkylamino mit je 1 bis 4 Kohlenstoffatomen im Alkylrest, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, $C_{1-4}$-Alkylsulfonyl, wie z. B. Methylsulfonyl, Carboxy, Sulfomethyl und Sulfo sowie einen bis zwei faserreaktive Reste X und Arylazogruppen, wie z. B. die Phenylazo- und Naphthylazogruppe.

Als Azo- oder Azomethinfarbstoffrest A kommt insbesondere der Rest der Formel

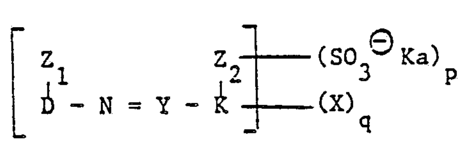
(2)

in Betracht, worin D der Rest einer Diazokomponente der Benzol- oder Naphthalinreihe, Y ein Stickstoffatom oder die CH-Gruppe, K für den Fall, dass Y ein Stickstoffatom ist, der Rest einer Kupplungskomponente, insbesondere der Benzol- oder Naphthalinreihe oder der heterocyclischen Reihe, oder, für den Fall, dass Y die CH-Gruppe ist, der Rest eines o-Hydroxybenzaldehyds oder eines o-Hydroxynaphthaldehyds, $Z_1$ in o-Stellung zu dem Rest —N=Y— die —O— oder —COO-Gruppe und $Z_2$ die —O— oder —N(R)-Gruppe ist, wobei R Wasserstoff, gegebenenfalls substituiertes $C_{1-4}$-Alkyl, wie z. B. Methyl, Aethyl, β-Hydroxyäthyl, Isopropyl, n-Propyl, sek.-Butyl, Isobutyl, tert.-Butyl und n-Butyl, oder gegebenenfalls substituiertes Phenyl bedeutet und $Z_2$ in Nachbarstellung zu dem Rest —N=Y— an K gebunden ist, Ka und X die unter Formel (1) angegebenen Bedeutungen haben, p = 0, 1, 2 oder 3 und q = 0, 1 oder 2 ist, wobei, falls p = 0 ist, der Rest B mindestens eine ($SO_3^{\ominus}$ Ka)-Gruppe und, falls q = 0 ist, mindestens einen faserreaktiven Rest X enthält.

Aus der grossen Zahl möglicher, potentiell zwei- oder dreizähniger, bianionischer, komplexbildender organischer Verbindungen, die den Rest B enthalten, sind die chelatbildenden Mittel bevorzugt, die sich mit dem Chrom über zwei kovalente und gegebenenfalls eine koordinative Bindung verbinden, wobei sie mit dem Chrom einen oder zwei Ringe, insbesondere 5-oder 6-Ringe bilden können.

Insbesondere bevorzugt sind diejenigen Verbindungen, worin B eine potentiell zweizähnige, bianionische, komplexbildende, organische Verbindung der Benzol-, Naphthalin- oder Heterocyclenreihe oder der aliphatischen Reihe ist, die 1 bis 2 Sulfonsäuregruppen und einen faserreaktiven Rest X enthalten kann.

Insbesondere ist B ein Rest der o-Hydroxybenzoesäure-, 8-Carboxy-1-naphthol-, Phthalsäure- oder Brenzkatechinreihe, oder ein Rest der Formeln

$$HOOC-R_1-COOH, \quad R_2-\underset{OH}{CH}-COOH, \quad HOOC-R'_2-\underset{OH}{CH}-COOH, \quad HOOC-R'_2-\underset{OH}{\overset{R'_2-COOH}{C}}-COOH,$$

wobei $R_1$ die direkte Bindung, $C_{1-2}$-Alkylen, wie Methylen oder Aethylen, oder —CH=CH—, $R_2$ $C_{1-4}$-Alkyl, wie Methyl, Aethyl, Isopropyl, Propyl, sek.-Butyl, Isobutyl, tert.-Butyl und n-Butyl und $R'_2$ $C_{1-4}$-Alkylen, wie z. B. Methylen, Aethylen, Propylen, Butylen, Isopropylen, Isobutylen bedeuten und die Reste $R_1$, $R_2$ und $R'_2$ gegebenenfalls weitersubstituiert sind, z. B. durch Halogen, wie Fluor, Chlor oder Brom, $C_{1-4}$-Alkoxy, wie Methoxy oder Aethoxy.

Ganz besonders bevorzugt sind Verbindungen, worin B den Rest von Oxalsäure bedeutet.

Der monofunktionelle Ligand L in Formel (1) bedeutet vorwiegend $H_2O$, $NH_3$, $R_2$—OH, $R_2$—$NH_2$, $(R_2)_2NH$, $(R_2)_3N$ oder Pyridin, wobei $R_2$ die oben angegebene Bedeutung hat.

Unter dem faserreaktiven Rest X in Formel (1) werden solche Acylreste verstanden, die eine oder mehrere reaktive Gruppen oder abspaltbare Substituenten im Molekül aufweisen, welche z. B. mit Cellulosematerialien in Gegenwart säurebindender Mittel und gegebenenfalls unter Einwirkung von Wärme mit den Hydroxylgruppen der Cellulose oder mit synthetischen oder natürlichen Polyamidfasern, wie z. B. Wolle, mit den $NH_2$-Gruppen dieser Fasern unter Ausbildung kovalenter Bindungen zu reagieren vermögen. Derartige faserreaktive Gruppierungen sind aus der Literatur in grosser Zahl bekannt.

Vorzugsweise bedeutet X einen faserreaktiven Rest der aliphatischen oder heterocyclischen Reihe, der direkt oder über ein Brückenglied an den Azo- oder Azomethinfarbstoffrest A und/oder an den Rest B gebunden ist.

Vorzugsweise ist X über eine gegebenenfalls monoalkylierte Aminogruppe wie z. B. —NH—, —$N(CH_3)$—, —$N(C_2H_5)$— oder —$N(C_3H_7)$ oder über ein eine Aminogruppe enthaltendes Brückenglied an den Rest A und/oder B gebunden.

Im einzelnen sind beispielsweise zu nennen Mono- oder Dihalogensymmetrische-triazinylreste, z. B. 2,4-Dichlortriazinyl-6-, 2-Amino-4-chlortriazinyl-6-, 2-Alkylamino-4-chlortriazinyl-6-, wie 2-Methylamino-4-chlor-triazinyl-6-, 2-Aethylamino- oder 2-Propylamino-4-chlortriazinyl-6-, 2-β-Oxäthylamino-4-chlortriazinyl-6-, 2-Di-β-oxäthylamino-4-chlortriazinyl-6- und die entsprechenden Schwefelsäurehalbester, 2-Diäthylamino-4-chlortriazinyl-6-, 2-Morpholino- oder 2-Piperidino-4-chlor-triazinyl-6-, 2-Cyclohexylamino-4-chlortriazinyl-6-, 2-Arylamino- und substituierte 2-Arylamino-4-chlortriazinyl-6-, wie 2-Phenylamino-4-chlortriazinyl-6-, 2-(o-, m- oder p-Carboxy- oder -Sulfophenyl)-amino-4-chlortriazinyl-6-, 2-Alkoxy-4-chlor-triazinyl-6-, wie 2-Methoxy- oder 2-Aethoxy-4-chlortriazinyl-6-, 2-Cyclohexyloxy-4-chlortriazinyl-6-, 2-(Phenylsulfonyl)-methoxy-4-chlortriazinyl-6-, 2-Aryloxy- und substituiertes Aryloxy-4-chlortriazinyl-6-, wie 2-Phenoxy-4-chlortriazinyl-6-, 2-(p-Sulfophenyl)-oxy-4-chlortriazinyl-6-, 2-(o-, m- oder p-Methyl- oder -Methoxyphenyl)-oxy-4-chlortriazinyl-6-, 2-Alkylmercapto- oder 2-Aryl-mercapto-4-chlortriazinyl-6-, wie 2-β-Hydroxy- äthylmercapto-4-chlortriazinyl-6-, 2-Phenyl-mercapto-4-chlortriazinyl-6-, 2-(4'-Methylphenyl)-mercapto-4-chlortriazinyl-6-, 2-(2', 4'-Dinitro)-phenylmercapto-4-chlortriazinyl-6-, 2-Methyl-4-chlortriazinyl-6-, 2-Phenyl-4-chlortriazinyl-6- und der 2-Methoxy-4-fluortriazinyl-6- Rest.

Besonders interessante faserreaktive Reste sind Fluor-1,3,5-triazinreste der Formel

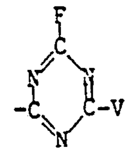

,

wobei als Substituenten V am Triazinring insbesondere zu nennen sind : Reste von primären, sekundären und tertiären Aminen, wie $—NH_2$, $—NHC_2H_5$, $—N(C_2H_5)_2$, $—NH—CH(CH_3)_2$, $—NHC_2H_4OH$, $—N(C_2H_4OH)$, Morpholino, Piperidino, N-Phenylamino, N-(2-, 3- oder 4-Sulfophenyl)-amino, N-Toluidino, N-(2,4- oder 2,5-Disulfophenyl)-amino und N-(γ-Methoxypropyl)-amino, $C_{1-4}$-Alkoxyreste, wie Methoxy, Aethoxy, Isopropoxy, Propoxy und Phenoxy.

Von Interesse sind ferner Reaktivreste, die der folgenden Formel entsprechen :

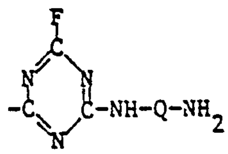

,

worin Q ein aliphatisches oder aromatisches Brückenglied darstellt. Derartige Reste können mit 2,4,6-Trifluor-1,3,5-triazin zu einem Rest der Formel

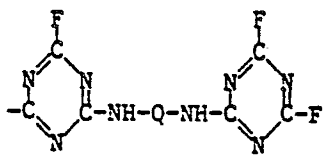

weitersubstituiert sein und dieser schliesslich mit einem Amin zur Reaktion gebracht werden. Geeignete derartige Amine sind z. B. Ammoniak, Methylamin, Aethylamin, Dimethylamin, Diäthylamin, Aethanolamin, Diäthanolamin, Morpholin, Piperidin, 2-, 3- oder 4-Aminotoluol, Metanilsäure, Sulfanilsäure, Anilin, N-Methylanilin, 4-Aminobenzylsulfonsäure, 2-, 3- oder 4-Aminobenzoesäure, Naphthylaminomono-, -di- und -trisulfonsäuren sowie auch aminogruppenhaltige Farbstoffe.

Geeignete Diamine, die den Rest der Formel $—HN—Q—NH_2$ einführen, sind z. B. : Aethylendiamin, 1,3-Diaminopropan, 1,6-Diaminohexan, 1,3- und 1,4-Phenylendiamin, 1,3-Phenylendiamin-4-sulfonsäure, 1,4-Phenylendiamin-2-sulfonsäure, 2,4-Diaminotoluol, 4,4′-Diaminodiphenyl-2,2′-disulfonsäure, 4,4′-Diamino-diphenylharnstoff-2,2′-disulfonsäure, 2,5-Diaminonaphthalin-4,8-disulfonsäure, 4,4′-Diaminodiphenyläther und 2,5-Diaminobenzoesäure.

Des weiteren sind von Interesse Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder trichlormethyl- oder 5-carbalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-sulfonyl-, 1,4-Dichlorphthalazin-6-sulfonyl- oder 6-carbonyl-, 2,4-Dichlorchinazolin-7- oder -6-sulfonyl- oder -carbonyl-, 2- oder 3- oder 4-(4′,5′-Dichlorpyridazon-6′-yl-1′)-phenylsulfonyl- oder -carbonyl-, β-(4′,5′-Dichlorpyridazon-6′-yl-1′)-äthylcarbonyl-, N-Methyl-N′-(2,4-dichlortriazinyl-6)carabamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Aethyl-N-(2,4-dichlortriazinyl-6)-aminoacetyl-, N-Methyl-N-(2,3-dichlorchinoxalin-6-sulfonyl)-aminoacetyl-, N-Methyl-N-(2,3-dichlorchinoxalin-6-carbonyl)- aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-chlor-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl ; sulfonylgruppenhaltige Triazinreste, wie 2,4-Bis-(phenylsulfonyl)-triazinyl-6-, 2-(3′-Carboxyphenyl)-sulfonyl-4-chlortriazinyl-6-, 2-(3′-Sulfophenyl)-sulfonyl-4-chlortriazinyl-6-, 2,4-Bis-(3′-carboxyphenylsulfonyl)-triazinyl-6- ; sulfonylgruppenhaltige Pyrimidinringe, wie 2-Carboxymethylsulfonyl-pyrimidinyl-4-, 2-Methyl sulfonyl-6-methylpyrimidinyl-4-, 2-Methylsulfonyl-6-äthylpyrimidinyl-4-, 2-Phenylsulfonyl-5-chlor-6-methylpyrimidinyl-4-, 2,6-Bimethylsulfonyl-pyrimidinyl-4-, 2,6-Bis-methylsulfonyl-5-chlor-pyrimidinyl-4-, 2,4-Bis-methylsulfonyl-pyrimidinyl-5-sulfonyl, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-äthyl-pyrimidinyl-4-, 2-Methylsulfonyl-5-chlor-6-chlormethyl-pyrimidinyl-4-, 2-Methylsulfonyl-4-chlor-6-methyl-pyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Aethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfo-äthylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxy-methylsulfonyl-5-chlor-6-methyl-pyrimidinyl-4-, 2-Methylsulfonyl-6-chlorpyrimidinyl-4- und -5-carbonyl-, 2,6-Bis-(methylsulfonyl)-pyrimidin-4- oder -5-carbonyl-, 2-Aethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl ; ammoniumgruppenhaltige Triazinringe, wie 2-Trimethylammonium-4-phenylamino- oder -4-(o-, m- oder p-sulfophenyl)-amino-triazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbindung das 1,4-Bis-aza-bicyclo-[2,2,2]-octan oder das 1,2-Bis-azo-bicyclo-[0,3,3]-octan quartär gebunden enthalten, 2-Pyridinium-4-phenylamino- oder -4-(-o-, m- oder p-sulfophenyl)-amino-triazinyl-6- sowie entsprechende 2-Onium-triazinyl-6-Reste, die in 4-Stellung durch Alkylamino-, wie Methylamino-, Aethylamino-, oder β-Hydroxy-äthylamino-, oder Alkoxy-, wie Methoxy- oder Aethoxy-, oder Aryloxy-, wie Phenoxy-, oder Sulfophenoxy-Gruppen substituiert sind ; 2-Chlorbenzthiazol-5- oder -6-carbonyl- oder -5- oder -6-sulfonyl-, 2-Arylsulfonyl- oder -Alkylsulfonylbenztriazol-5- oder -6-carbonyl- oder -5- oder -6-sulfonyl-, wie 2-Methylsulfonyl- oder 2-Aethylsulfonyl-benzthiazol-5- oder -6-sulfonyl- oder -carbonyl- und die entsprechenden, im ankondensierten Benzolring Sulfogruppen enthaltenden 2-Sulfonylbenzthiazol-5- oder -6-carbonyl- oder 6-sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxyd des 4-Chlor- oder 4-Nitrochinolin-5-carbonyl-.

Des weiteren sind Reaktivgruppen der aliphatischen Reihe zu nennen wie Mono-, Di- oder Trichloracryloylreste oder Mono- oder Dibromacryloylreste, z. B. α,β-Dibrompropionyl, $—CO—CH=CH—Cl$, $—COCCl=CH_2$, $—CO—CCl=CH—CH_3$, ferner $—CO—CCl=CH—COOH$, $—CO—CH=CCl—COOH$, β-Chlorpropionyl-, 3-Phenylsulfonylpropionyl-, 3-Methylsulfonyl-propionyl-, β-Sulfato-äthylaminosulfonyl-, Vinylsulfonyl-, β-Chloräthylsulfonyl-, β-Sulfatoäthylsulfonyl-, β-Methylsulfonyl-äthylsulfonyl-, β-Phenylsulfonyläthylsulfonyl-, 2-Fluor-2-chlor-3,3-difluorcyclobutan-1-carbonyl-, 2,2,3,3-Tetrafluorcyclobutancarbonyl-1- oder -sulfonyl-1-, β-(2,2,3,3-Tetrafluorcyclobutyl-1)-acryloyl-, α- oder β-Bromacryloyl-, die α- oder β-Alkyl- oder -Arylsulfonyl-acryloyl-Gruppe, wie α- oder β-Methylsulfonylacryloyl.

Das Kation Ka in Formel (1) bedeutet ein Wasserstoff-, Natrium-, Kalium-, Lithium- oder Ammonium-Ion oder das Kation eines organischen Amins wie z. B. des Triäthanolamins.

Besonders bevorzugt sind die Chromkomplexe der Formel

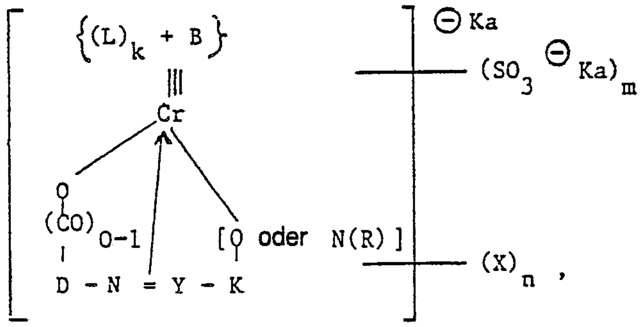

(3)

worin B der Rest einer potentiell zwei- oder dreizähnigen, bianionischen, komplexbildenden, organischen Verbindung der Benzol-, Naphthalin- oder Heterocyclenreihe oder der aliphatischen Reihe ist, L ein farbloser monofunktioneller Ligand, D der Rest einer Diazokomponente der Benzol- oder Naphthalinreihe, der die $-(CO)_{0-1}-O$-Gruppe in o-Stellung zur —N=Y-Gruppe enthält, Y ein Stickstoffatom oder die —CH-Gruppe, K für den Fall, dass Y ein Stickstoffatom ist, der Rest einer Kupplungskomponente der Benzol- oder Naphthalinreihe oder der 5-Pyrazolon-, 5-Aminopyrazol-, Acetoacetarylid-, Chinolon- oder Benzoylessigsäurearylidreihe ist, der den Rest -[O oder N(R)]- in Nachbarstellung zur Azobrücke enthält und wobei R Wasserstoff, gegebenenfalls substituiertes $C_{1-4}$-Alkyl oder gegebenenfalls substituiertes Phenyl ist, oder für den Fall, dass Y die CH-Gruppe ist, K den Rest eines o-Hydroxybenzaldehyds oder o-Hydroxynaphthaldehyds bedeutet, und X einen faserreaktiven Rest der aliphatischen oder heterocyclischen Reihe, der direkt oder über ein Brückenglied and D und/oder K und/oder B gebunden ist, Ka ein Kation, k = 0 oder 1, m = 1, 2 oder 3 und n = 1 oder 2 bedeutet, wobei die Gruppe $SO_3^{\ominus}$ Ka an D und/oder K und/oder B gebunden ist.

Insbesondere bedeutet Y ein Stickstoffatom.

Insbesondere ist X ein Acryloyl-, Mono-, Di- oder Trihalogenacryloyl- oder -methacryloyl-, Mono- oder Dihalogenpropionyl-, Phenylsulfonylpropionyl-, Methylsulfonylpropionyl-, Vinylsulfonyl-, β-Chloräthylsulfonyl-, β-Sulfatoäthylsulfonylrest oder ein Rest der Mono-, Di- oder Trihalogenpyrimidyl- oder Mono- oder Dihalogentriazinylreihe, wobei X gegebenenfalls über ein Brückenglied der Formel

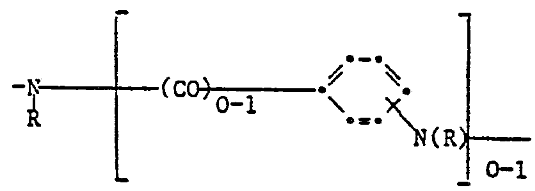

oder $-CH_2-N-$ an D und/oder K und/oder B gebunden ist und R die unter Formel (3) angegebene Bedeutung hat. Vor allem ist X der α,β-Dibrompropionyl- oder α-Bromacryloylrest, der über eine Aminogruppe an D und/oder K und/oder B gebunden ist.

Ganz besonders bevorzugt sind die Chromkomplexe der Formel (3), worin B den Rest von Oxalsäure, Malonsäure, Zitronensäure, Apfelsäure, Weinsäure, Brenzkatechin, Phthalsäure, Milchsäure, Salicylsäure, Sulfosalicylsäure, durch ein oder zwei Reste X und gegebenenfalls Sulfo oder Acetylamino substituierte Salicylsäure, L als farbloser monofunktioneller Ligand Wasser, D ein Benzolrest, der ausser durch die metallisierbare Gruppe noch durch Sulfo, Nitro, Halogen, Sulfamoyl, Methoxy und den Rest X substituiert sein kann, oder ein Naphthalinrest, der ausser durch die metallisierbare Gruppe noch durch Sulfo, Nitro, Halogen und den Rest X substituiert sein kann, K, falls Y ein Stickstoffatom ist, ein in Nachbarstellung zu der Azobrücke über —O— oder —N(R)— gebundener Benzolrest, der durch $C_{1-5}$-Alkyl, Hydroxy, Diäthylamino, Sulfo und den Rest X substituiert sein kann, ein Naphthalinrest, der durch Chlor, Acetylamino, Sulfamoyl, Sulfo und den Rest X substituiert sein kann, wobei X direkt oder über den Phenylaminorest an den Naphthalinkern gebunden ist, ein 1-Phenyl-3-methylpyrazolon-(5)-rest, der im Phenylring durch Sulfo, Halogen und den Rest X substituiert sein kann, ein 1-(2',2''-Disulfostilben)-3-methylpyrazolon-(5)-rest, der den Rest X in 4''-Stellung enthält, ein Acetessigsäureanilidrest, der im Phenylring durch Chlor substituiert sein kann, oder ein 1-Methyl-4-hydroxychinol-2-onrest, oder, falls Y die CH-Gruppe ist, der Rest des 2-Hydroxybenzaldehyds ist, und X den über —NH-gebundenen Rest von α,β-Dibrompropionyl, α-Bromacryloyl, β-Chloracryloyl, 2,6-Difluor-5-chlorpyrimidyl, 2,4-Dichlortriazinyl, 2-Chlor-4-isopropoxytriazinyl, 2-Chlor-4-(3'-Sulfophenylamino)-triazinyl, 2-Chlor-4-ethoxytriazinyl, 2-Chlor-4-phenoxytriazinyl, 2-Fluor-4-(3'-Sulfophenylamino)-triazinyl, 2-Fluor-4-(2'-Methylphenylamino)-triazinyl, 2-Fluor-4-isopropylaminotriazinyl, 2-Fluor-5-chlor-6-methylpyrimidinyl, 2-Fluor-5-chlor-6-methylpyrimidinyl, 2-Chlor-4-(2'-Sulfophenylamino)-triazinyl, 2-Chlor-4-aminotriazinyl, 2-Chlor-4-phenylaminotriazinyl oder β-Chloräthylsulfonylbutyryl bedeutet und Ka ein Alkalikation ist.

Ganz besonders bevorzugt sind ferner die Chromkomplexe der Formeln

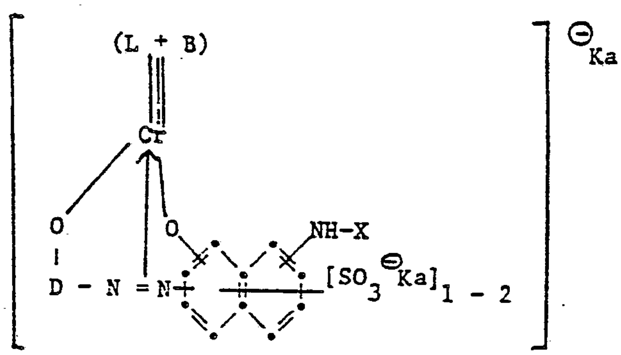

(4)

worin B, L und D die oben angegebenen Bedeutungen haben, Ka ein Alkalikation ist und die Azobrücke in o-Stellung zu dem an das Chromatom gebundenen Sauerstoffatom an den Naphthalinkern gebunden ist, und Xα,β-Dibrompropionyl oder α-Bromacryloyl bedeutet ; und

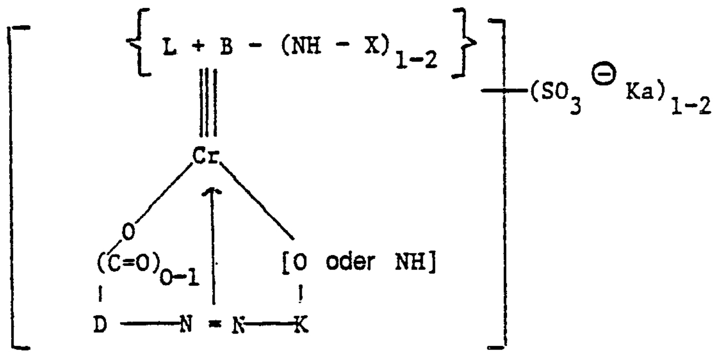

(5)

worin B den Rest einer gegebenenfalls durch Sulfo substituierten Salicylsäure, L Wasser, D einen Benzol- oder Naphthalinrest, der substituiert sein kann durch Sulfo, Nitro und Halogen und K einen gegebenenfalls durch Sulfo oder Halogen substituierten 1-Phenyl-3-methylpyrazolon-(5)-Rest, einen Acetoacetanilidrest, einen gegebenenfalls durch Sulfo substituierten Naphthalinrest oder einen durch $C_{1-5}$-Alkyl substituierten Phenylrest bedeutet, Xα,β-Dibrompropionyl oder α-Bromacryloyl ist, die Azobrücke in Nachbarstellung in dem Rest $-(C{=}O)_{0-1}-O-$ und [0 oder NH] an D und K gebunden ist, und der Chromkomplex der Formel (5) nicht mehr als ein oder zwei Sulfogruppen enthält.

Insbesondere bedeutet B in Formel (4) den Rest der Oxalsäure.

Gegenstand der Erfindung ist ferner ein Verfahren zur Herstellung der Chromkomplexe der Formel (1), welches dadurch gekennzeichnet ist, dass man eine potentiell zwei- oder dreizähnige komplexbildende, organische Verbindung, die den bianionischen Rest B enthält, mit einem 1 : 1-Chromkomplex der Formel

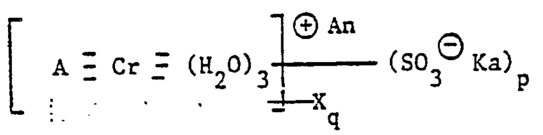

(6)

worin A, X und Ka die unter Formel (1) angegebenen Bedeutungen haben, und p = 0, 1, 2 oder 3, q = 0, 1 oder 2 und An ein Anion ist, in wässrigem Medium, gegebenenfalls in Gegenwart eines von Wasser verschiedenen, farblosen monofunktionellen Liganden L, umsetzt und gegebenenfalls anschliessend den erhaltenen Chromkomplex mit einer den/die faserreaktiven Rest(e) X einführenden Verbindung(en) umsetzt, wobei falls p = 0 ist, der Rest B mindestens eine Sulfogruppe enthält.

Vorzugsweise wird die zwei- oder dreizähnige komplexbildende, organische Verbindung mit dem 1 : 1-Chromkomplex der Formel (6) bei einer Temperatur von 60 bis 100 °C und einem pH von 5 bis 11 umgesetzt.

Die Umsetzung mit einer die Reaktivgruppe(n) einführenden Verbindung erfolgt insbesondere bei einer Temperatur von 15 bis 30 °C und einem pH von 5 bis 8.

In der Literatur sind viele metallisierbare Azo- und Azomethinfarbstoffe beschrieben, die den Rest A liefern können, wie z. B. o,o'-Dihydroxy-, o-Carboxy-o'-hydroxy-, o-Hydroxy-o'-aminoazo- oder Azomethinverbindungen, die insbesondere der Formel

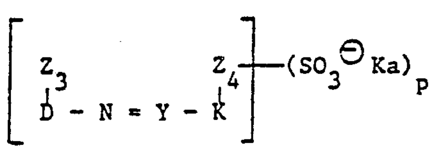

(7)

entsprechen, worin $Z_3$ die Hydroxy-, Carboxy- oder Methoxygruppe, $Z_4$ die Hydroxy- oder HN(R)-Gruppe

ist und D, K, Y, Ka und R und p die unter Formel (2) angegebenen Bedeutungen haben, und D und/oder K gegebenenfalls funktionelle Gruppen enthalten, welche zur Einführung der faserreaktiven Gruppe(n) X geeignet sind, wie z. B. Aminogruppen oder in Aminogruppen überführbare Gruppen wie z. B. die Acetylamino- oder die Nitrogruppe. Die Verbindungen der Formel (7), worin Y ein Stickstoffatom ist, werden in an sich bekannter Weise hergestellt, indem man ein Amin der Formel

$$p(Ka^{\ominus}O_3S)-\overset{Z_3}{\overset{|}{D}}-NH_2 \qquad (8)$$

diazotiert und auf eine Kupplungskomponente der Formel

$$H-\overset{Z_4}{\overset{|}{K}}-(SO_3^{\ominus}Ka)_p \qquad (9)$$

kuppelt, wobei D, K, $Z_3$, $Z_4$, Ka und p die unter Formel (7) angegebenen Bedeutungen haben.

Die Diazotierung der Diazokomponente der Formel (8) erfolgt in der Regel durch Einwirkung salpetriger Säure in wässrigmineralsaurer Lösung bei tiefer Temperatur, die Kupplung auf die Kupplungskomponente der Formel (9) bei sauren, neutralen bis alkalischen pH-Werten.

Als Amine der Formel (8) kommen z. B. in Betracht: 2-Amino-1-hydroxybenzol, 2-Amino-1-methoxybenzol, Anthranilsäure, 4- oder 5-Sulfonamido-anthranilsäure, 3- oder 5-Chloranthranilsäure, 4-Chlor- und 4,6-Dichlor-2-amino-1-hydroxybenzol, 4- oder 5- oder 6-Nitro-2-amino-1-hydroxybenzol, 4-Chlor- und 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Methoxy-2-amino-1-hydroxybenzol, 2-Amino-1-hydroxybenzol-5-methyl- und 5-benzylsulfon, 2-Amino-1-hydroxybenzol-4-methyl-, -äthyl-, -chlor-methyl- und butylsulfon, 6-Chlor-, 5-Nitro- und 6-Nitro-2-amino-1-hydroxybenzol-4-methylsulfon, 2-Amino-1-hydroxybenzol-4- oder -5-sulfamid, -sulf-N-methyl- und -sulf-N-β-hydroxyäthylamid, 2-Amino-1-methoxybenzol-4-sulfanilid, 4-Methoxy-5-chlor-2-amino-1-hydroxybenzol, 4-Methyl-2-amino-1-hydroxybenzol, 4-Chlor-5-nitro-2-amino-1-hydroxybenzol, 5-Nitro-4-methyl-2-amino-1-hydroxybenzol, 5-Nitro-4-methoxy-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 4-Nitro-2-amino-1-hydroxybenzol-5- oder -6-sulfonsäureamid, 4- oder 5-Chloranisidin, 4- oder 5-Nitro-anisidin, 2-Methoxy-5-methylanilin, 2,5-Dimethoxyanilin, 2-Anisidin-4- oder -5-β-hydroxyäthylsulfon, 4-Methyl-6-sulfo-2-amino-1-hydroxybenzol, 2-Amino-4-sulfo-1-hydroxybenzol, 4-Chlor-6-sulfo-2-amino-1-hydroxybenzol, 6-chlor-4-sulfo-2-amino-1-hydroxybenzol, 5-Nitro-4-sulfo-2-amino-1-hydroxybenzol, 4-Nitro-6-sulfo-2-amino-1-hydroxybenzol, 6-Nitro-4-sulfo-2-amino-1-hydroxybenzol, 4-Nitro-6-acetylamino-2-amino-1-hydroxybenzol, 4-Acetylamino-2-amino-1-hydroxybenzol, 4-Nitro-6-sulfo-2-amino-1-hydroxybenzol, 4-Acetylamino-6-sulfo-2-amino-1-hydroxybenzol, 5-Acetylamino-2-amino-1-hydroxybenzol, 6-Acetylamino-4-sulfo-2-amino-1-hydroxybenzol, 4-Chlor-2-amino-1-hydroxybenzol-5-sulfamid, 2-Amino-1-hydroxybenzol-4-(N-2'-Carboxyphenyl)sulfamid, 2-Amino-1-hydroxybenzol-5-methylsulfon, 1-Amino-2-hydroxy-4-sulfonaphthalin, 1-Amino-2-hydroxy-4-sulfo-6-nitronaphthalin, 1-Amino-2-hydroxy-4-sulfo-6-acetamidonaphthalin, 1-Amino-2-hydroxy-4,8-disulfonaphthalin, 1-Amino-2-hydroxy-6-sulfonaphthalin, 1-Amino-2-hydroxy-7-sulfonaphthalin, 1-Amino-2-hydroxy-8-sulfonaphthalin, 2-Amino-1-hydroxy-4-sulfonaphthalin, 2-Amino-1-hydroxy-6-sulfonaphthalin, 2-Amino-1-hydroxy-4,8-disulfonaphthalin.

Die Kupplungskomponenten der Formel (9) können sich z. B. von folgenden Gruppen von Kupplungskomponenten ableiten:

— In o-Stellung zur OH-Gruppe kuppelnde Naphthole, die gegebenenfalls mit Halogen, insbesondere Chlor, Amino, Acylamino, Acyl, $C_{1-4}$-Alkyl, $C_{1-4}$-Alkoxy, Sulfonamido-, N-mono- oder N,N-disubstituierten Sulfonamidogruppen, Sulfo- und Sulfongruppen substituiert sind.

— In o-Stellung zur Aminogruppe kuppelnde Naphthylamine, die gegebenenfalls mit Halogen, insbesondere Brom, $C_{1-4}$-Alkyl, $C_{1-4}$-Alkoxy, Sulfonamido-, mono- oder disubstituierten Sulfonamido-, Sulfo- oder Sulfongruppen substituiert sind.

— 5-Pyrazolone oder 5-Aminopyrazole, die in 1-Stellung einen gegebenenfalls mit Halogen, wie z. B. Chlor, Nitro, $C_{1-4}$-Alkyl- und Alkoxygruppen, Sulfonamido-, N-alkylierten Sulfonamidogruppen, Sulfo oder Sulfongruppen und insbesondere Aminogruppen substituierten Phenyl- oder Naphthylrest besitzen.

— 2,6-Dihydroxy-3-cyano- oder -3-carbonamido-4-alkylpyridine und 6-Hydroxy-2-pyridone, die in 1-Stellung durch gegebenenfalls substituiertes $C_{1-4}$-Alkyl, z. B. Methyl, Isopropyl, β-Hydroxyäthyl, β-Aminoäthyl, γ-Isopropoxypropyl oder durch $—NH_2$ oder eine substituierte Aminogruppe wie z. B. Dimethylamino oder Diäthylamino substituiert sind, in 3-Stellung eine Cyano- oder Carbonamidogruppe und in 4-Stellung eine $C_{1-4}$-Alkylgruppe, insbesondere Methyl, tragen.

— Acetessigsäureanilide und Benzoylessigsäureanilide, die im Anilidkern gegebenenfalls mit $C_{1-4}$-Alkyl-, Alkoxy-, Alkylsulfonylgruppen, $C_{1-4}$-Hydroxyalkyl-, Alkoxyalkyl- oder Cyanalkylsulfonylgruppen,

Sulfonamido-, N-alkylierten Sulfonamidogruppen, Sulfo, Acetylamino und Halogen substituiert sein können.

— Phenole, die mit niedrigmolekularen Acylaminogruppen und/oder mit 1 bis 5 Kohlenstoffatome enthaltenden Alkylgruppen substituiert sind und in o-Stellung kuppeln, sowie Hydroxyphenole, insbesondere Resorcin.

— Chinolone, wie z. B. Chinol-2-one insbesondere 1—$C_{1-4}$-Alkyl-4-hydroxychinol-2-on.

Beispiele solcher Kupplungskomponenten sind: 2-Naphthol, 1-Naphthol, 1-Hydroxynaphthalin-4- oder -5- oder -8- sulfonsäure oder -3,6- oder -4,8- disulfonsäure 1,3- oder 1,5-Dihydroxynaphthalin, 1-Hydroxy-7-aminonaphthalin-3-sulfonsäure, 2-Naphthol-6-sulfonamid, 1-Hydroxy-7-amino oder -7- N-methyl- oder N-acetylaminonaphthalin-3-sulfonsäure, 2-Naphthol-6-β-hydroxyäthylsulfon, 1-Hydroxy-6-amino- oder -6-N-Methyl- oder -6-N-Acetylaminonaphthalin-3-sulfonsäure, 1-Hydroxy-7-aminonaphthalin-3,6-disulfonsäure, 1-Hydroxy-6-aminonaphthalin-3,5-disulfonsäure, 1-Acetylamino-7-naphthol, 1-Hydroxy-6-N-(4′-aminophenyl)aminonaphthalin-3-sulfonsäure, 1-Hydroxy-5-aminonaphthalin-3-sulfonsäure, 1-Propionylamino-7-naphthol, 2-Hydroxy-6-aminonaphthalin-4-sulfonsäure, 1-Carbomethoxy-amino-7-naphthol, 1-Hydroxy-8-aminonaphthalin-5-sulfonsäure, 1-Carboäthoxy-amino-7-naphthol, 1-Hydroxy-8-aminonaphthalin-5,7-disulfonsäure, 1-Carbopropoxy-amino-7-naphthol, 1-Hydroxy-8-aminonaphthalin-3-sulfonsäure, 1-Dimethylaminosulfonyl-amino-7-naphthol, 6- oder 8-Acetylamino-2-naphthol, 1-Hydroxy-8-amino-naphthalin- 3,5- oder -3,6-disulfonsäure, 4-Acetylamino-2-naphthol, 2-Hydroxy-5-aminonaphthalin-4,7-disulfonsäure, 4-Methoxy-1-naphthol, 4-Acetylamino-1-naphthol, 1-Naphthol-3-, -4-, -5- oder -8-sulfonamid, 2-Naphthol-3-, -4-, -5-, -6-, -7- oder -8-sulfonamid, 5,8-Dichlor-1-naphthol, 5-Chlor-1-naphthol, 2-Naphthylamin, 2-Naphthylamin-1- oder 5- oder -6- sulfonsäure, 2-Aminonaphthalin-5-, -6- oder -7-sulfonamid, 2-Aminonaphthalin-6-sulfonsäure-N-methyl-, -äthyl-, -isopropyl-, -β-oxyäthyl- oder -γ-methoxypropylamid, 2-Aminonaphthalin-6-sulfanilid, 2-Aminonaphthalin-6-sulfonsäure-N-methylanilid, 1-Aminonaphthalin-3-, -4- oder -5-sulfonamid, 1-Aminonaphthalin-5-methyl- oder -äthylsulfon, 5,8-Dichlor-1-aminonaphthalin, 2-Phenylaminonaphthalin, 2-N-Methylaminonaphthalin, 2-N-Aethylaminonaphthalin, 2-Phenylaminonaphthalin-5-, -6- oder -7-sulfonamid, 2-(3′-Chlorphenyl-amino)-naphthalin-5-, -6- oder -7-sulfonamid, 6-Methyl-2-aminonaphthalin, 6-Brom-2-amino-naphthalin, 6-Methoxy-2-aminonaphthalin, 1,3-Dimethylpyrazolon, 3-Methyl-5-pyrazolon, 1-Phenyl-3-methyl-5-pyrazolon, 1-Phenyl-3-carbonamido-5-pyrazolon, 1-(2′-, 3′- oder 4′-Methylphenyl)-3-methyl-5-pyrazolon, 1-[3′- oder 4′-(β-Hydroxyäthylsulfonyl)-phenyl]-3-methyl-5-pyrazolon, 1-(2′-Methoxyphenyl)-3-methyl-5-pyrazolon, 1-(2′-, 3′- oder 4′-Chlorphenyl)-3-methyl-5-pyrazolon, 1-(2′-, 3′- oder 4′-Nitrophenyl)-3-methyl-5-pyrazolon, 1-(2′, 5′- oder 3′,4′-Dichlorphenyl)-3-methyl-5-pyrazolon, 1-(2′-, 3′- oder 4′-Sulfamoylphenyl)-3-methyl-5-pyrazolon, 1-(2′-, 3′- oder 4′-Methylsulfonylphenyl)-3-methyl-5-pyrazolon, 2,6-Dihydroxy-3-cyano-4-methylpyridin, 1-Methyl-3-cyano-4-äthyl-6-hydroxypyridon-(2), 1-Amino-3-cyano-4-methyl-6-hydroxypyridon-(2), 1-Phenyl-3-carbonamido-4-methyl-6-hydroxypyridon-(2), Acetoacetanilid, Acetoacet-o-, -m- oder -p-sulfoanilid, Acetoacet-4-(β-hydroxyäthylsulfonyl)-anilid, Acetoacet-o-anisidid, Acetoacetnaphthylamid, Acetoacet-o-toluidid, Acetoacet-o-chloranilid, Aceto-acet-m- oder -p-chloranilid, Acetoacetanilid-3- oder -4-sulfonamid, Acetoacet-3- oder -4-aminoanilid, Acetoacet-m-xylidid, Benzoylessigsäureanilid, 4-Methylphenol, 3-Dialkylaminophenol, besonders 3-Dimethylamino- und 3-Diäthylaminophenol, 4-t-Butylphenol, 4-t-Amylphenol, 2- oder 3-Acetylamino-4-methylphenol, 2-Methoxycarbonylamino-4-methylphenol, 2-Aethoxycarbonylamino-4-methylphenol, Resorcin, 3,4-Dimethylphenol und 2,4-Dimethylphenol, 3-Amino-4-sulfophenol, 1-(4′-Aminophenyl)-3-methyl-5-pyrazolon, 1-(2′-, 3′- oder 4′-Sulfophenyl)-3-methyl-5-pyrazolon, 1-(2′-Chlor-4′- oder -5′-sulfophenyl)-3-methyl-5-pyrazolon, 1-(2-Methyl-6′-chlorphenyl)-3-methyl-5-pyrazolon, 1-(2′-Methyl-4′-sulfophenyl)-3-methyl-5-pyrazolon, 1-(2′-, 3′- oder 4′-Chlor- oder Methyl- oder Sulfophenyl)-3-carboxy-5-pyrazolon, 1-[5′-sulfonaphthyl(2′)]-3-methyl-5-pyrazolon, 1-[4″-Amino-2′,2″-disulfostilben-(4′)]-3-methyl-5-pyrazolon, 1-Aethyl-3-cyano-4-methyl-6-hydroxypyridon-(2), 1-Aethyl-3-sulfomethyl-4-methyl-6-hydroxypyridon-(2), 2,6-Dihydroxy-3-cyano-4-sulfomethylpyridin, 2,4,6-Trihydroxypyrimidin, 1-Methyl-4-hydroxychinol-2-on.

Für die Herstellung der Azomethinfarbstoffe der Formel (7) werden in bekannter Weise die oben genannten aromatischen Amine der Formel (8) mit o-Hydroxybenzaldehyden oder o-Hydroxynaphthaldehyden kondensiert.

Geeignete Aldehyde sind beispielsweise: 2-Hydroxybenzaldehyd, 3- und 5-Methyl-2-hydroxybenzaldehyd, 3,5- und 3,6-Dimethyl-2-hydroxybenzaldehyd, 5-Butyl-2-hydroxybenzaldehyd, 5-Chlor- oder -Brom-2-hydroxybenzaldehyd, 3- und 4-Chlor-2-hydroxybenzaldehyd, 3,5-Dichlor-2-hydroxybenzaldehyd, 3-Chlor-5-methyl-2-hydroxybenzaldehyd, 3-Methyl-5-chlor-2-hydroxybenzaldehyd, 3- und 4- und 5-Nitro-2-hydroxybenzaldehyd, 3,5-Dinitro- und 4-Chlor-5-nitro-2-hydroxybenzaldehyd, 4-Methoxy-2-hydroxybenzaldehyd, 1-Hydroxy-2-naphthaldehyd und dessen in 4-Stellung chlorierter Abkömmling; und 2-Hydroxy-1-naphthaldehyd.

Bevorzugt sind diejenigen erfindungsgemässen Chromkomplexe, worin Y ein Stickstoffatom und K der Rest einer Kupplungskomponente der Naphthalinreihe ist, insbesondere der Rest einer Aminonaphtholmono- oder disulfonsäure.

Gegebenenfalls kann eine freie Aminogruppe im Rest D und/oder K nach der Kupplung mit einem Acylierungs- oder Alkylierungsmittel in eine Acylamino- oder Alkylaminogruppe umgewandelt werden, und ebenso kann eine Hydroxygruppe im Rest D und/oder K durch Alkylierung in eine Alkoxygruppe übergeführt werden.

Eine Verfahrensvariante zur Herstellung des 1 : 1-Chromkomplexazomethinfarbstoffes der Formel (6) ist dadurch gekennzeichnet, dass man den 1 : 1-Chromkomplex der Formel (6) statt mit dem Azomethin der Formel (7) auch mit einem Gemisch des Amins der Formel (8) und einem o-Hydroxybenzaldehyd oder einem o-Hydroxynaphthaldehyd herstellen kann.

Die Amine der Formel (8), die Kupplungskomponenten der Formel (9) und die o-Hydroxybenzaldehyde oder die o-Hydroxynaphthaldehyde können in Aminogruppen überführbare Reste, wie z. B. die Acetylamino- und die Nitrogruppe, enthalten. Beispielsweise kann eine Acetylaminogruppe durch Verseifen und eine Nitrogruppe durch Reduktion in eine Aminogruppe überführt werden, vorteilhafterweise im Anschluss an die Herstellung der Farbstoffe der Formel (7) oder die Herstellung des 1 : 1-Chromkomplexes der Formel (6).

Die Herstellung der 1 : 1-Chromkomplexe geschieht nach an sich bekannten Methoden. Man stellt z. B. den 1 : 1-Chromkomplex der Verbindung der Formel (6) her, indem man die metallfreie Verbindung in saurem Medium mit einem Salz des dreiwertigen Chroms wie Chromchlorid, Chromfluorid oder Chromsulfat umsetzt, gegebenenfalls in Anwesenheit von löslichkeitsfördernden oder die Chromierung beschleunigenden Mitteln, wie z. B. Alkoholen oder Hydroxycarbonsäuren. Anschliessend lässt man den 1 : 1-Komplex bei pH-Werten von 5-11 mit einer Verbindung, welche den Rest B einführt, reagieren.

Als den Rest B einführende Verbindungen kommen z. B. insbesondere in Betracht: Salicylsäure, 4- oder 5-Sulfosalicylsäure, 3-, 4- oder 5-Amino-2-hydroxybenzoesäure, 5-Amino-2-hydroxy-3-sulfobenzoesäure, 1-Hydroxynaphthalin-8-carbonsäure, Phthalsäure, 1,2-Dihydroxybenzol, 3,4,6-Trihydroxybenzoesäure, Oxalsäure, Malonsäure, Milchsäure, 2-Hydroxybernsteinsäure, Weinsäure, Citronensäure, 4-Amino-6-sulfo-2-hydroxybenzoesäure, 3-Amino-5-sulfo-2-hydroxybenzoesäure, 3,5-Diaminosalicylsäure.

Erfolgt die Umsetzung des 1 : 1-Chromkomplexes der Formel (6) mit der den Rest B einführenden organischen Verbindung gegebenenfalls in Gegenwart eines der weiter oben angegebenen von Wasser verschiedenen farblosen monofunktionellen Liganden L, so erhält man einen Chromkomplex der Formel

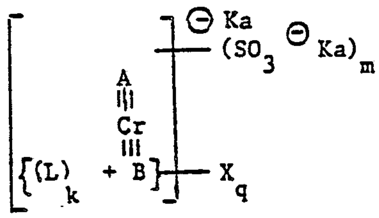 (10)

worin A, B, L, Ka, X, k und m die unter Formel (1) angegebenen Bedeutungen haben und $q = 0$, 1 oder 2 ist.

Falls die Reaktivgruppe(n) X in dem Chromkomplex der Formel (1) an den Rest A gebunden ist, erfolgt die Einführung der Reaktivgruppe(n) zweckmässigerweise nach Herstellung des 1 : 1-Chromkomplexes der Formel (6) oder vorzugsweise im Anschluss an die Umsetzung des 1 : 1-Chromkomplexes der Formel (6) mit der den Rest B einführenden organischen Verbindung. Falls die Reaktivgruppe(n) X in dem Chromkomplex der Formel (1) an den Rest B gebunden ist, erfolgt deren Einführung vorzugsweise im Anschluss an die Umsetzung mit dem 1 : 1-Chromkomplex der Formel (6).

Die Einführung der faserreaktiven Gruppe(n) X in den 1 : 1-Chromkomplex der Formel (6) oder in den Chromkomplex der Formel (10) erfolgt in an sich bekannter Weise dadurch, dass man diese Chromkomplexe mit einem oder zwei den (die) Rest(e) X einführenden oder bildenden Mittel(n) umsetzt, wobei die Reste A und/oder B in den Formeln (6) und (10) funktionelle Gruppen, welche die Bindung der faserreaktiven Gruppe(n) X ermöglichen, enthalten müssen. Solche zur Bindung der Reste X geeignete Gruppen sind z. B. gegebenenfalls monoalkylierte Aminogruppen, wie beispielsweise $—NH_2$, $—N(CH_3)H$ oder $—N(C_2H_5)H$ oder z. B. die β-Oxyäthylsulfonylgruppe.

Die Einführung der Reaktivgruppe(n), die über eine Oxy-, Thio- oder vorzugsweise Aminogruppe gebunden ist (sind), erfolgt dadurch, dass man die Chromkomplexe der Formeln (6) und (10) mit einem (oder zwei) Acylierungsmittel(n), welche(s) einen oder zwei gegebenenfalls voneinander verschiedene Rest(e) X einführt (einführen), umsetzt.

Die Bildung der direkt an die Reste A und/oder B gebundenen faserreaktiven Gruppe(n), wie z. B. die β-Sulfatoäthylsulfonylgruppe, erfolgt in an sich bekannter Weise, z. B. durch Sulfatierung der oben genannten β-Oxyäthylsulfonylgruppe.

Gegenstand der Erfindung ist ferner ein Verfahren zum Färben textiler Materialien mit Chromkomplexen, welches dadurch gekennzeichnet ist, dass man eine wässrige Flotte, welche eine den Rest B einführende Verbindung und den 1 : 1-Chromkomplex der Formel

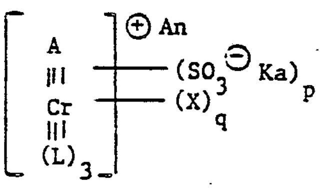 (11)

worin A, L und X die unter Formel (1) angegebenen Bedeutungen haben, und p = 0 bis 3, q = 0 bis 2 und An ein Anion ist, das textile Material und gegebenenfalls weitere Zusätze enthält, verwendet, die Flotte gegebenenfalls stufenweise auf 100 °C erhitzt, anschliessend alkalisch stellt und die Färbung fertigstellt. Falls p = 0 ist, muss die den Rest B einführende Verbindung mindestens eine $SO_3^{\ominus}Ka$ Gruppe enthalten, und falls q = 0 ist, muss die den Rest B einführende Verbindung mindestens einen faserreaktiven Rest X enthalten.

Insbesondere setzt man die den Rest B einführende Verbindung und den 1 : 1-Chromkomplex der Formel (11) in dem molaren Verhältnis 2 : 1 bis vorzugsweise 1 : 1 ein.

Eine bevorzugte Verfahrensvariante ist dadurch gekennzeichnet, dass man die Färbeflotte, welche die oben angegebenen Komponenten enthält, innerhalb von 10 bis 45 Minuten auf 60 bis 80 °C erwärmt, diese Flottentemperatur für 10 bis 45 Minuten beibehält und anschliessend innerhalb von 10 bis 30 Minuten auf 100 °C aufheizt, diese Temperatur für 30 bis 90 Minuten beibehält, auf 85 °C abkühlt, den pH der Flotte auf 8 bis 9 einstellt und während weiteren 10 bis 30 Minuten bei 85 °C behandelt.

Als weitere Zusätze kann die Flotte z. B. eine anorganische oder organische Säure, insbesondere Essigsäure, ein Alkali- oder Ammoniumsalz, insbesondere Ammoniumsulfat und gegebenenfalls ein Egalisiermittel enthalten.

Der Chromkomplex der Formel (11) wird, wie weiter oben beschrieben, durch Umsetzung eines Azo- oder Azomethinfarbstoffes, insbesondere eines solchen Farbstoffes der Formel (2), gegebenenfalls in Gegenwart eines von Wasser verschiedenen Liganden L, mit einem der genannten Chromierungsmittel erhalten, wobei die Einführung der faserreaktiven Reste in einer beliebigen Stufe des Verfahrens erfolgen kann, vorzugsweise nach der Herstellung des 1 : 1-Chromkomplexes.

In dem erfindungsgemässen Verfahren verwendet man insbesondere 1 : 1-Chromkomplexe der Formel

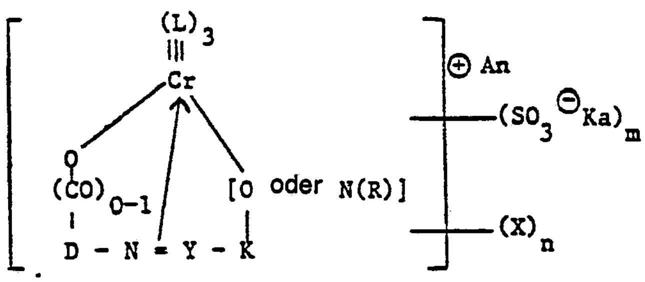

(12)

worin D, K, L, R, Ka, X, Y, m und n die unter Formel (3) angegebenen Bedeutungen haben und An ein Anion ist; vorzugsweise verwendet man Chromkomplexe der Formel

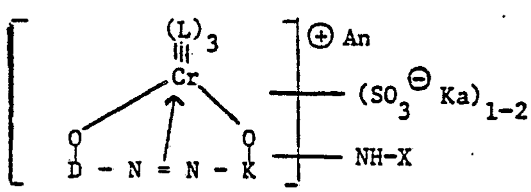

(13)

worin D, K, L, Ka und X die unter Formel (4) angegebenen Bedeutungen haben und An ein Anion ist.

In dem erfindungsgemässen Verfahren kommen als den Rest B einführende Verbindungen sämtliche der weiter oben genannten Verbindungen in Betracht, wobei in dem Rest B enthaltene acylierbare Aminogruppen, die nicht an der Komplexbildung beteiligt sind, vorgängig mit einem den faserreaktiven Rest X einführenden Acylierungsmittel umgesetzt sein können.

Gegebenenfalls kann das erfindungsgemässe Verfahren in Gegenwart einer von Wasser verschiedenen farblosen monofunktionellen Verbindung L ausgeführt werden, wobei die vorgängig genannten Verbindungen in Betracht kommen.

Bevorzugte Verfahren sind dadurch gekennzeichnet, dass man

a) eine wässrige Flotte, welche Oxalsäure, Malonsäure, Zitronensäure, Apfelsäure, Weinsäure, Brenzkatechin, Phthalsäure, Milchsäure oder Salicylsäure als den Rest B einführende Verbindung un den 1 : 1-Chromkomplex der Formel

(Siehe Formel Seite 12 f.)

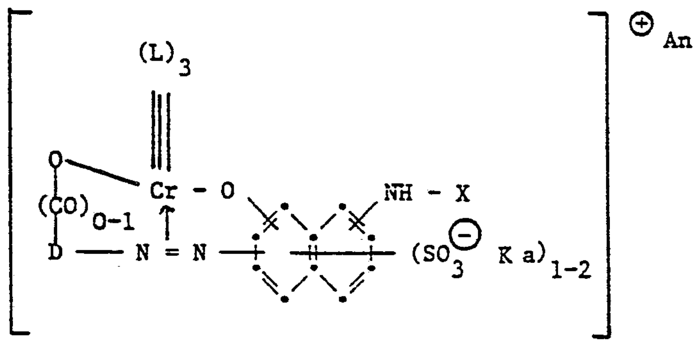

(14)

worin L, Ka und An die unter Formel (11) angegebenen Bedeutungen haben, D ein Benzolrest ist, der ausser durch die $-(CO)_{0-1}-O$-Gruppe, welche in o-Stellung zur Azogruppe and D gebunden ist, noch durch Sulfo, Nitro, Sulfamoyl und Methoxy substituiert sein kann, oder ein Naphthalinrest ist, der ausser durch die Gruppe $-(C{=}O)_{0-1}-O$, welche in o-Stellung zur Azogruppe an D gebunden ist, noch durch Sulfo und Nitro substituiert sein kann und die Azobrücke in o-Stellung zu dem Rest —O— an den Naphthalinkern gebunden ist und X α,β-Dibrompropionyl oder α-Bromacryloyl bedeutet, verwendet ;

b) eine wässrige Flotte verwendet, welche Oxalsäure und den 1 : 1-Chromkomplex der Formel (14) enthält ;

c) eine wässrige Flotte verwendet, welche eine gegebenenfalls durch Sulfo substituierte α,β-Dibrompropionylaminosalicylsäure oder α-Bromacryloylaminosalicylsäure als den Rest B einführende Verbindung und den 1 : 1-Chromkomplex der Formel

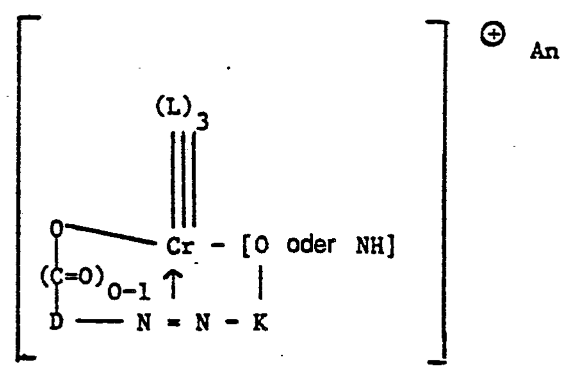

(15)

worin L Wasser, D einen Benzol- oder Naphthalinrest, der substituiert sein kann durch Sulfo, Nitro und Halogen und K einen gegebenenfalls durch Sulfo oder Halogen substituierten 1-Phenyl-3-methylpyrazolon-(5)-Rest, einen Acetoacetanilidrest, eine gegebenenfalls durch Sulfo substituierten Naphthalinrest oder einen durch $C_{1-5}$-Alkyl substituierten Phenylrest bedeutet, die Azobrücke in Nachbarstellung zu dem Rest $-(C{=}O)_{0-1}-O$- und [O oder NH] an D und K gebunden ist, und An die unter Formel (11) angegebene Bedeutung hat, enthält.

Nach dem erfindungsgemässen Verfahren wird somit der Chromkomplex der Formel (1) während des Färbens gebildet, wobei die gleichen färberischen Vorteile erhalten werden wie mit den in Substanz hergestellten, isolierten Farbstoffen der Formel (1).

Die erfindungsgemässen Chromkomplexe der Formel (1) sowie die in dem erfindungsgemässen Färbeverfahren hergestellten Chromkomplexe eignen sich zum Färben von stickstoffgruppenhaltigen oder hydroxygruppenhaltigen Materialien, wie z. B. Wolle, Seide, Leder, synthetische Polyamide und Baumwolle. Man erhält egale Färbungen in gelben, braunen, orangen, roten, blauen, grauen, grünen und schwarzen Tönen mit guten Allgemeinechtheiten, insbesondere sehr guter Reib-, Nass-, Nassreib- und Lichtechtheit. Ferner sind die erfindungsgemässen Farbstoffe sehr gut mit faserreaktiven Säurefarbstoffen kombinierbar. Das oben genannte Textilmaterial kann in den verschiedensten Verarbeitungsformen vorliegen, wie z. B. als Faser, Garn, Gewebe oder Gewirke.

Aus der FR-A-2 333 029 sind ähnliche Chromkomplexe bekannt. Diese weisen jedoch nicht alle guten Eigenschaften der erfindungsgemässen Chromkomplexe auf. Aus der FR-A-1 310 178 und der DE-C-933 622 bekannte Chromkomplexe unterscheiden sich von den erfindungsgemässen Chromkomplexen auf charakteristische Weise durch das Fehlen von Sulfonsäuregruppen bzw. das Fehlen von faserreaktiven Gruppen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

## Beispiel 1

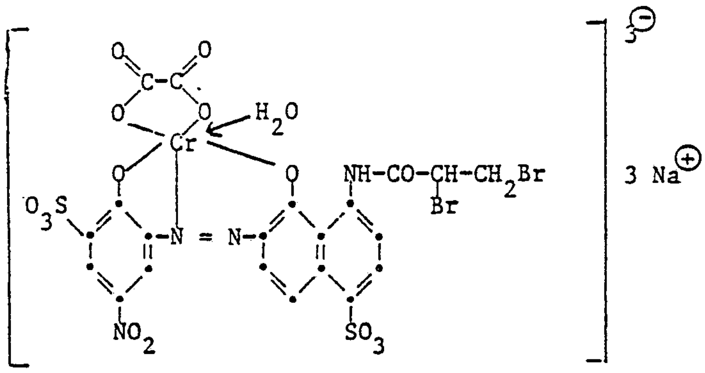

48,44 T des Monoazofarbstoffes, der durch Diazotierung von 4-Nitro-6-sulfo-2-aminophenol und Kupplung der Diazoverbindung auf 1-Naphthol-8-amino-5-sulfonsäure erhalten wird, werden in bekannter Weise zum 1 : 1-Chromkomplex umgesetzt. Das Produkt wird in 400 T Wasser suspendiert und 12,7 T Oxalsäure · $2H_2O$ werden zugefügt. Unter Erwärmen auf 75-80° wird der pH mit NaOH(2N) auf 7-7,3 gehalten, Lösung tritt ein. Unter ständiger pH-Kontrolle wird 1 h bei 75-80° gerührt.

Nach beendeter Anlagerung wird auf 20-25° gekühlt. 34 T 1,2-Dibrompropionyl-chlorid, mit 5 ml Aceton verdünnt, werden in 20-30 Min. bei 20-25° zugetropft, der pH wird mit NaOH(2N) auf 6,5-7 gehalten. Nach zweistündigem Rühren unter pH-Kontrolle wird der erhaltene reaktive Chrom-Komplex klärfiltriert und die Lösung eingedampft. Der erhaltene Farbstoff färbt Wolle nach dem im Färbebeispiel 2 angegebenen Verfahren in faseregalen marineblauen Tönen mit ausgezeichneten Echtheiten.

Beispiel 2

53,9 T des 1 : 1 Chromkomplexes des Monoazofarbstoffes, der durch alkalische Kupplung von 1-Diazo-2-naphthol-4-sulfonsäure auf 2-Amino-5-naphthol-7-sulfonsäure erhalten wird, werden in 500 Teilen Wasser mit verdünnter Natronlauge bei pH 7 gelöst. Nach Zugabe von 11,25 T Oxalsäure wird der pH-Wert mit verdünnter Natronlauge auf 6,5 eingestellt und das Reaktionsgemisch 30 Min. bei 90-95 °C gerührt. Die Farbstofflösung wird auf 50 °C gekühlt und mit 15 Teilen Natriumbicarbonat versetzt. Nach 10-minütigem Rühren wird mit 200 Teilen Eis auf 10-15 °C gekühlt und in ca. 1 Stunde 30 Teile 1,2-Dibrompropionylchlorid zugetropft und weitere 2-3 Stunden bei Raumtemperatur nachgerührt. Der gebildete, gelöste Farbstoff der Formel

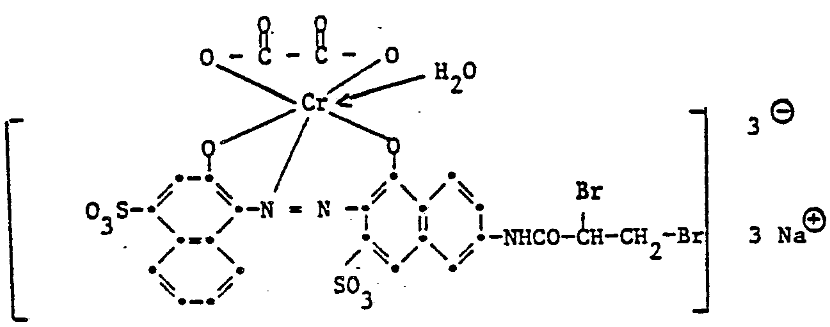

wird zur Trockne eingedampft. Der in Form eines sehr gut wasserlöslichen, dunklen Pulvers erhaltene Farbstoff färbt Wolle egal gemäss dem Verfahren des Färbebeispiels 2 in dunkelblauen Tönen mit ausgezeichneten Echtheitseigenschaften.

Weitere Farbstoffe mit ähnlichen Eigenschaften erhält man in analoger Weise durch Umsetzen der 1 : 1 Chromkomplexe der in der folgenden Tabelle I in Kolonne I angegebenen Monoazoverbindungen mit den in Kolonne II aufgeführten farblosen Verbindungen und anschliessende Acylierung des erhaltenen Chromkomplexes mit 1,2-Dibrompropionyl-chlorid. Diese färben Wolle egal auch in schwach saurem pH-Bereich in den in Kolonne III angegebenen Nuancen.

(Siehe Tabelle I Seite 14 ff.)

| Beispiel | I | II | III |
|---|---|---|---|
| 3 | 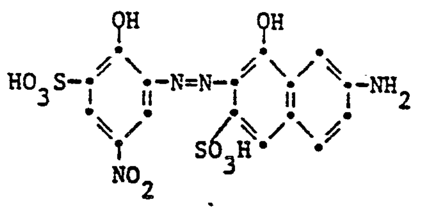 | Oxalsäure | grau |
| 4 | 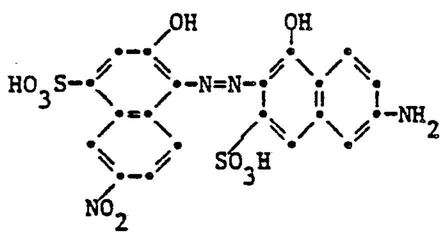 | Oxalsäure | grau |
| 5 | 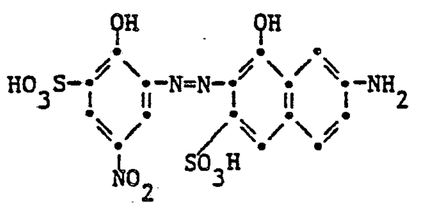 | Malonsäure | grau |
| 6 | 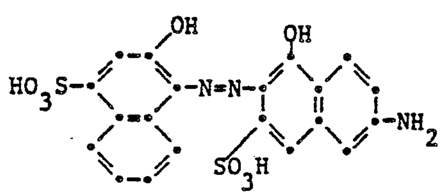 | Malonsäure | blau |
| 7 | dito | Zitronensäure | blau |
| 8 | dito | Apfelsäure | blau |
| 9 | dito | Weinsäure | blau |
| 10 | dito | Brenzkatechin | blau |
| 11 | dito | Phthalsäure | blau |

| Beispiel | I | II | III |
|---|---|---|---|
| 12 | 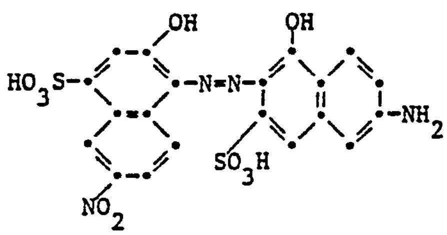 | Salicylsäure | grau |
| 13 | dito | Malonsäure | grau |
| 14 | dito | Zitronensäure | grau |
| 15 | dito | Apfelsäure | grau |
| 16 | dito | Weinsäure | grau |
| 17 | dito | Milchsäure | grau |
| 18 | 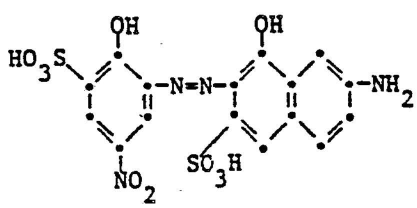 | Salicylsäure | rotst. grau |
| 19 | dito | Zitronensäure | rotst. grau |
| 20 | dito | Apfelsäure | rotst. grau |
| 21 | dito | Weinsäure | rotst. grau |
| 22 | dito | Milchsäure | rotst. grau |
| 23 | 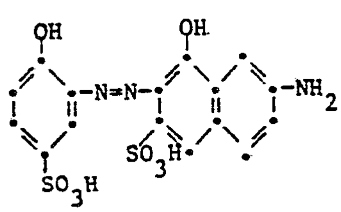 | Oxalsäure | violett |

| Beispiel | I | II | III |
|---|---|---|---|
| 24 | 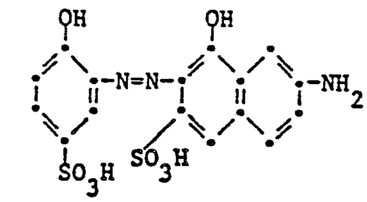 | Malonsäure | violett |
| 25 | 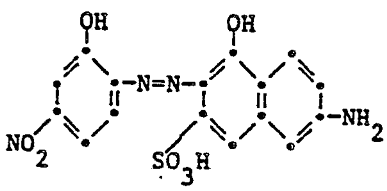 | Oxalsäure | blau-grau |
| 26 | 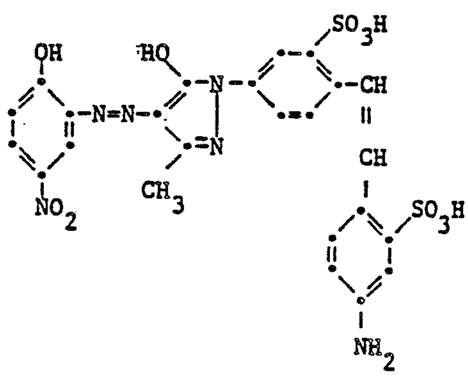 | Oxalsäure | orange |
| 27 | 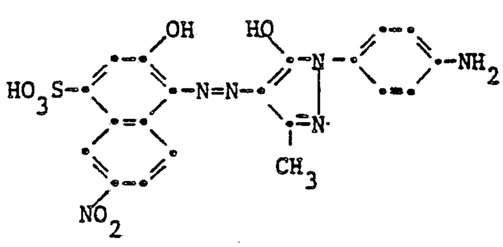 | Oxalsäure | rot |

| Beispiel | I | II | III |
|---|---|---|---|
| 28 | 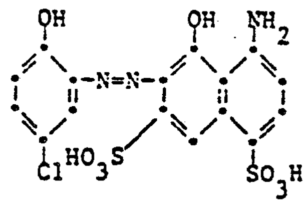 | Oxalsäure | blau |
| 29 | dito | Malonsäure | blau |
| 29a | dito | Weinsäure | grau |
| 30 | 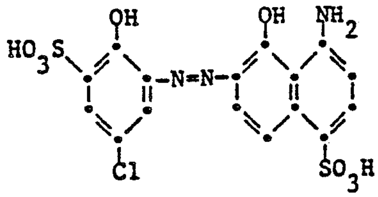 | Oxalsäure | marine-blau |
| 31 | dito | Malonsäure | violett-grau |
| 32 | dito | Weinsäure | grau |
| 33 | dito | Zitronensäure | grau |
| 34 | 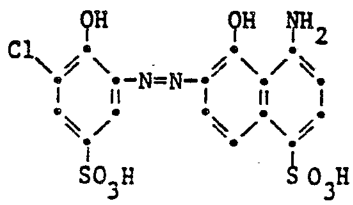 | Oxalsäure | grau |
| 35 | dito | Aepfelsäure | grau |
| 36 | dito | Weinsäure | grau |

| Beispiel | I | II | III |
|---|---|---|---|
| 37 | 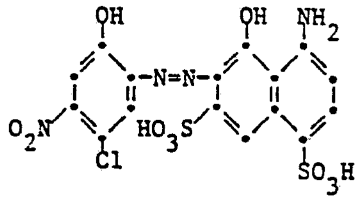 | Oxalsäure | marine-blau |
| 38 | dito | Weinsäure | grau |
| 39 | 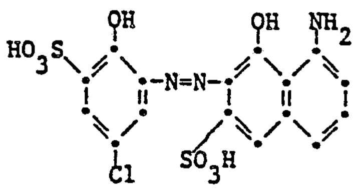 | Oxalsäure | marine-blau |
| 40 | 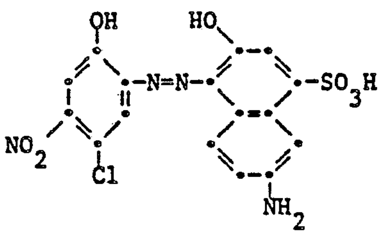 | Salicylsäure | grün-grau |
| 41 | 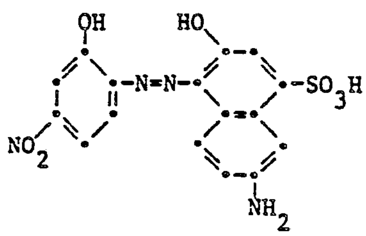 | 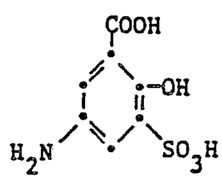 | grün-grau |
| 42 | dito | Oxalsäure | grau |
| 43 | 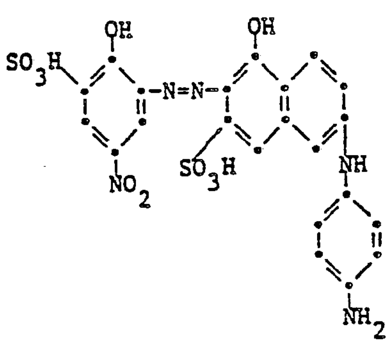 | Oxalsäure | grau |

| Beispiel | I | II | III |
|---|---|---|---|
| 44 | dito | Weinsäure | grau |
| 45 | 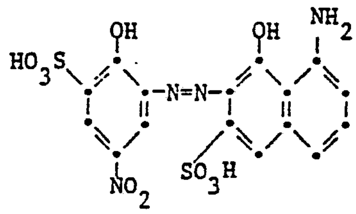 | Oxalsäure | grau |
| 46 | 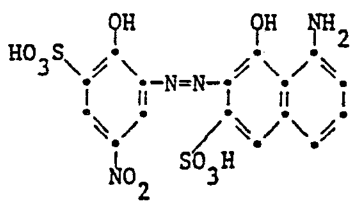 | Malonsäure | grau-blau |
| 47 | 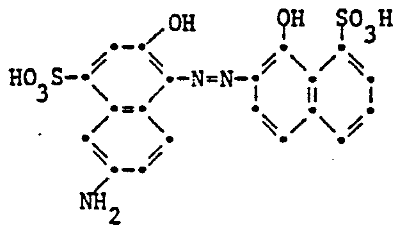 | Oxalsäure | grau |
| 48 | 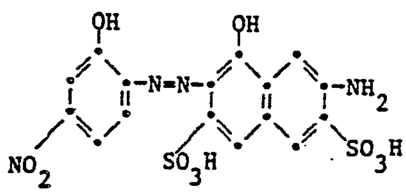 | Oxalsäure | grau |
| 49 | 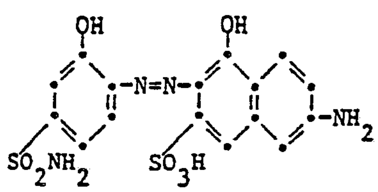 | Oxalsäure | grau |
| 50 | 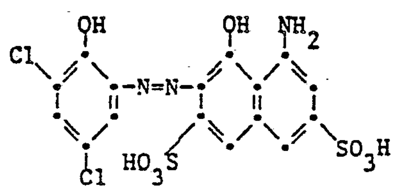 | Oxalsäure | marine-blau |
| 51 | dito | Malonsäure | marine-blau |
| 52 | 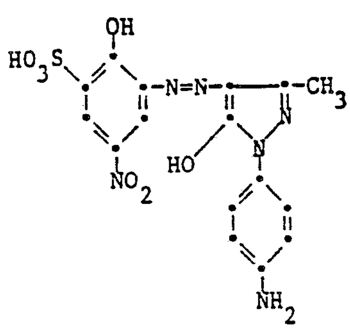 | Oxalsäure | orange |

Beispiel 53

41,9 Teile des Monoazofarbstoffes aus diazotierter 1-Hydroxy-2-amino-4-nitrobenzol-6-sulfonsäure und 1-Phenyl-3-methyl-5-pyrazolon werden in Form des 1 Atom Chrom pro Molekül Azofarbstoff enthaltenden 1 : 1-Chromkomplexes unter Rühren in 500 Teilen Wasser bei pH 7 gelöst.

Nach Zugabe von 15,5 Teilen 2-Hydroxy-5-aminobenzoesäure wird das Reaktionsgemisch auf 90 °C erwärmt und gleichzeitig durch Zutropfen einer verdünnten Natriumhydroxydlösung ein pH-Bereich von 6,5-7,5 eingehalten, wobei eine klare Lösung des einheitlichen Anlagerungsproduktes entsteht.

Nach Abkühlen auf 10-15 °C und Zugabe von 15 Teilen Natriumbicarbonat wird eine Lösung von 30 Teilen 1,2-Dibrompropionsäurechlorid in 30 Teilen Aceton innerhalb 1 Stunde unter intensivem Rühren zugetropft und das Reaktionsgemisch weitere 3 Stunden bei Raumtemperatur nachgerührt.

Der entstandene Farbstoff von folgender Konstitution

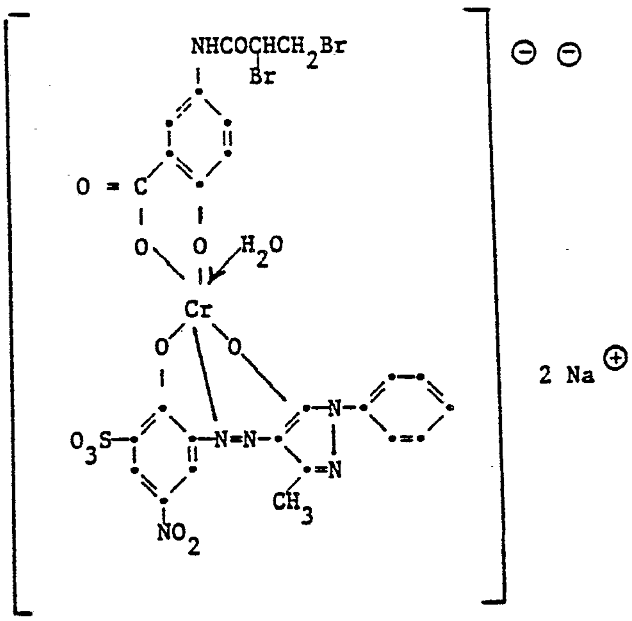

wird aus der klaren Reaktionslösung durch Zugabe von Natriumchlorid abgeschieden, durch Filtration isoliert und nach Waschen des Filterkuchens mit verdünnter Natriumchloridlösung im Vakuum bei 60° getrocknet. Der neue Farbstoff ist sehr gut wasserlöslich und ergibt auf Wolle nach den angegebenen Färbevorschriften volle, nass- und lichtechte Orangetöne.

Ein Farbstoff von gleicher Konstitution wird erhalten, wenn der oben erwähnte 1 : 1-Chromkomplex mit 37 Teilen in üblicher Weise hergestellter 2-Hydroxy-5-(N-dibrompropionyl)amino-benzoesäure in wässriger Lösung bei pH 6-6,5 und 50-60 °C zum einheitlichem Mischkomplex umgesetzt wird.

Weitere Farbstoffe mit ähnlichen Eigenschaften erhält man in analoger Weise durch Umsetzen der 1 : 1-Chromkomplexe der in der folgenden Tabelle II in Kolonne I angegebenen Monoazoverbindungen mit den in Kolonne II aufgeführten farblosen Verbindungen und anschliessende Acylierung des erhaltenen Chromkomplexes mit 1,2-Dibrompropionylchlorid. In Kolonne III sind die auf Wolle erzielbaren Nuancen der Farbstoffe angegeben.

(Siehe Tabelle II Seite 21 ff.)

Tabelle II

| Bei-spiel | I | II | III |
|---|---|---|---|
| 54 | 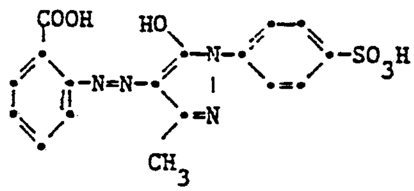 | 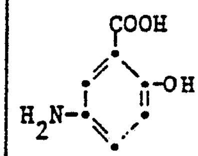 | oliv-gelb |
| 55 | dito | 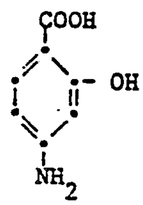 | gelb |
| 56 | dito | 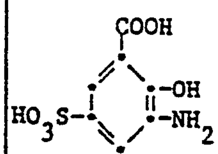 | gelb |
| 57 | dito | 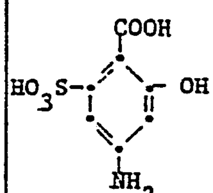 | gelb |
| 58 | 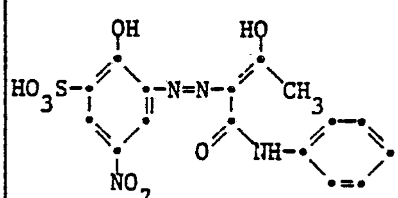 | 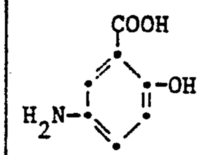 | braun-gelb |
| 59 | dito | 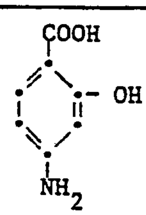 | gelb |

Tabelle

| Beispiel | I | II | III |
|---|---|---|---|
| 60 | 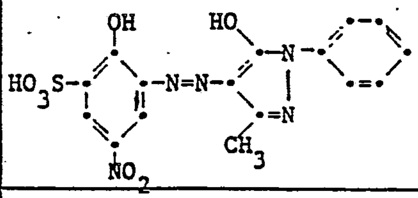 | 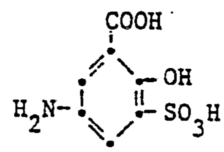 | orange |
| 61 | dito | 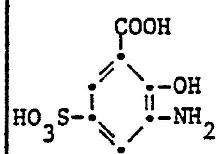 | orange |
| 62 | dito | 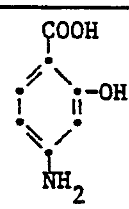 | orange |
| 63 | dito | 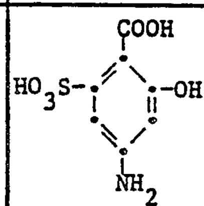 | orange |
| 64 | 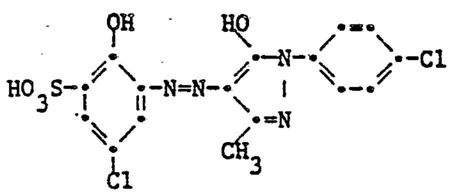 | 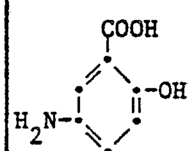 | braun-rot |
| 65 | dito | 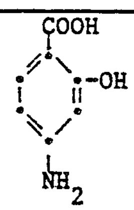 | rot |

Tabelle

| Beispiel | I | II | III |
|---|---|---|---|
| 66 | 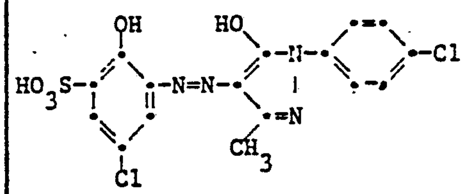 | 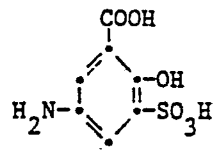 | rot |
| 67 | 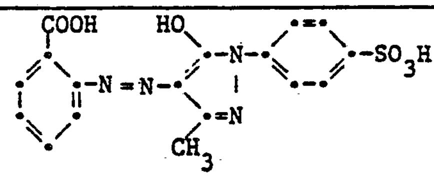 | dito | gelb |
| 68 | 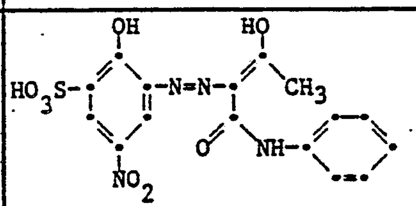 | dito | gelb |
| 69 | 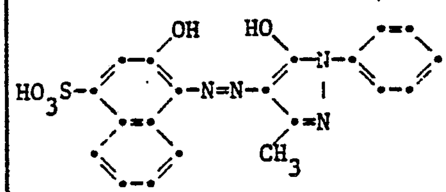 | dito | bordeaux |
| 70 | 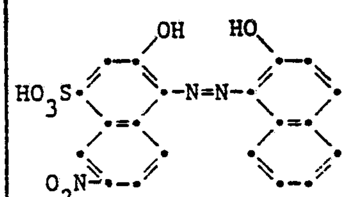 | dito | schwarz |
| 71 | 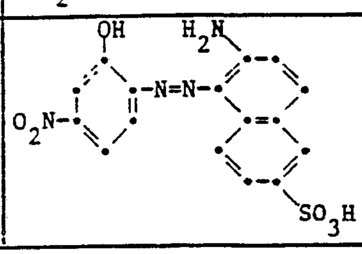 | dito | dunkelgrün |

Tabelle

| Beispiel | I | II | III |
|---|---|---|---|
| 72 | 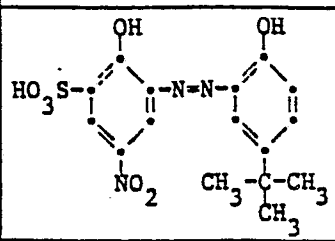 | 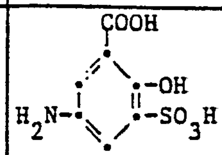 | braun |
| 73 | 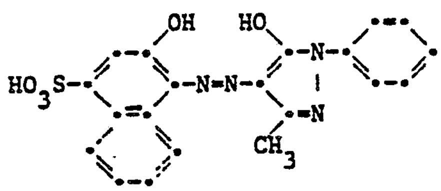 | 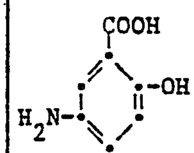 | bordeaux |
| 74 | dito | 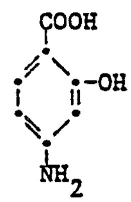 | bordeaux |
| 75 | dito | 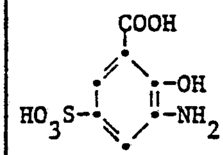 | bordeaux |
| 76 | dito | 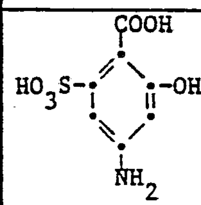 | bordeaux |
| 77 | 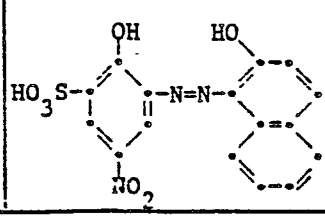 | 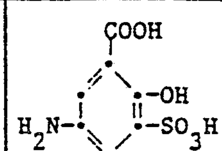 | violett-braun |

Tabelle

| Beispiel | I | II | III |
|---|---|---|---|
| 78 | 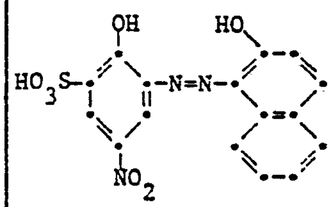 | 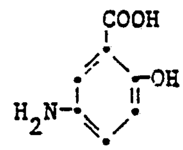 | braun-violett |
| 79 | 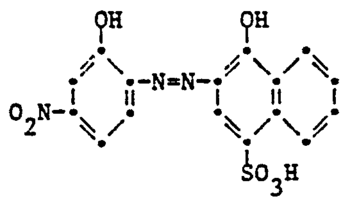 | 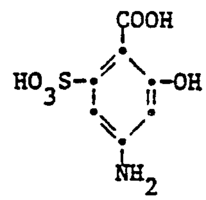 | rotstichig blau |
| 80 | 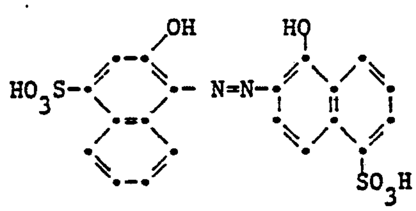 | 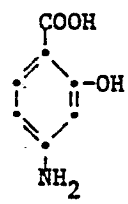 | blau |
| 81 | 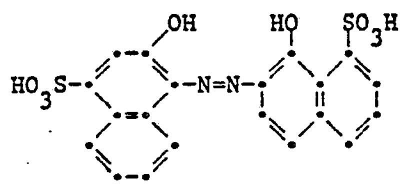 | 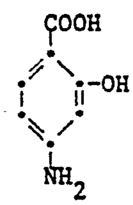 | grün-blau |
| 82 | 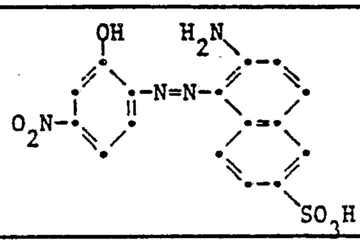 | 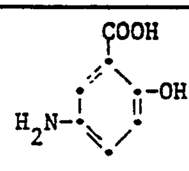 | dunkel-grün |
| 83 | dito | 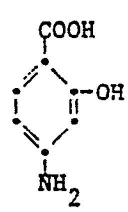 | grün |

Tabelle

| Bei-spiel | I | II | III |
|---|---|---|---|
| 84 | 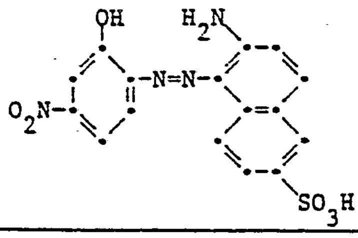 | 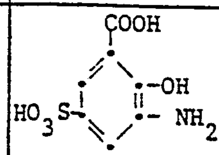 | oliv-grün |
| 85 | dito | 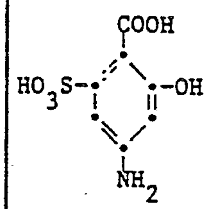 | grün |
| 86 | 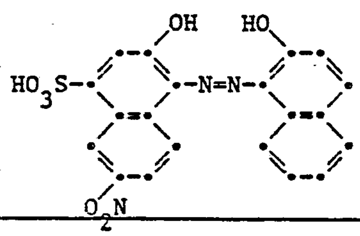 | 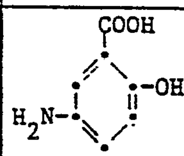 | rotsti-chig schwarz |
| 87 | dito | 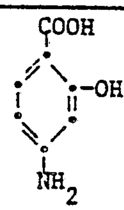 | schwarz |
| 88 | dito | 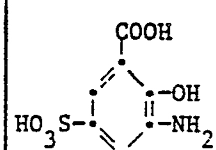 | schwarz |
| 89 | 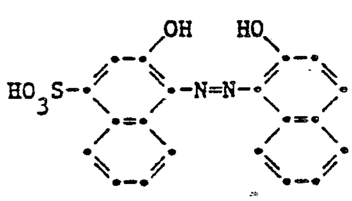 | 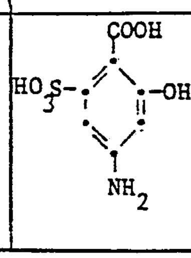 | blau |

Beispiel 90

38,9 Teile des Monoazofarbstoffs aus diazotierter 1-Hydroxy-2-amino-4-nitrobenzol-6-sulfonsäure und 2-Hydroxynaphthalin in Form des 1 Atom Chrom pro Molekül Azoverbindung enthaltenden 1 : 1-Chromkomplexes werden unter Rühren in 600 Teilen Wasser von 65 °C angeschlämmt und durch Zugabe von 5n-Natriumhydroxydlösung bis zum pH-Wert 9,0-9,5 in Lösung gebracht. Unter Einhaltung einer Temperatur von 65-70 °C wird anschliessend innerhalb 1 Stunde die Lösung von 36,0 Teilen krist. Natriumsulfid ($Na_2S \cdot 9H_2O$) in 100 Teilen Wasser zugetropft. Die unter Farbumschlag von Rotviolett nach Dunkelblau verlaufende Reduktion der Nitrogruppe ist nach weiteren 2 Stunden Rühren beendet. Der erhaltene, aminogruppentragende 1 : 1-Chromkomplex wird durch Neutralisieren der Reaktionslösung und Zugabe von Natriumchlorid abgeschieden, durch Filtration isoliert und mit verdünnter Natriumchloridlösung gewaschen. Der erhaltene Filterkuchen wird unter Rühren und Zugabe von verdünnter Natriumhydroxydlösung in 600 Teilen Wasser von 70 °C bei pH 7-7,5 gelöst. Nach Zugabe einer neutralen Lösung von 14 Teilen Salicylsäure in 100 Teilen Wasser wird das Reaktionsgemisch auf 90-95 °C erhitzt und unter Einhalten von pH 7,0-7,5 solange gerührt, bis die Anlagerung zum einheitlichen, blauen Mischkomplex vollständig ist. Anschliessend wird die Reaktionslösung auf 10-15° gekühlt und innerhalb 1 Stunde mit einer Lösung von 30 Teilen 1,2-Dibrompropionylchlorid in 30 Teilen Aceton versetzt, wobei zugleich durch Zutropfen von 2n-Natriumhydroxydlösung ein pH-Bereich von 6,0-6,5 eingehalten wird. Nach weiteren 2 Stunden Rühren bei Raumtemperatur wird der Farbstoff von folgender Konstitution

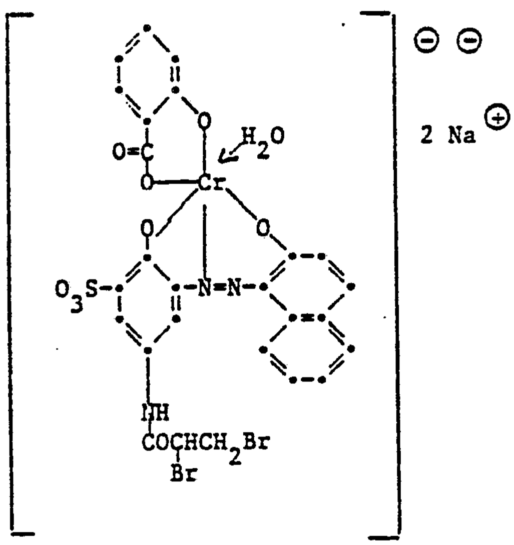

durch Zugabe von Natriumchlorid aus der Reaktionslösung abgeschieden, durch Filtration isoliert und im Vakuum bei 60-70 °C getrocknet.

Der neue, leicht wasserlösliche Farbstoff ergibt auf Wolle nach den angegebenen Verfahren volle, rotstichige Dunkelviolettnuancen mit sehr guten Echtheitseigenschaften.

Weitere Farbstoffe mit ähnlichen Eigenschaften sind in analoger Weise zugänglich durch Umsetzen der in der folgenden Tabelle III in Kolonne I angegebenen, als 1 : 1-Chromkomplexe vorliegenden, aminogruppenhaltigen Monoazoverbindungen mit den in Kolonne II aufgeführten, farblosen Verbindungen und anschliessende Acylierung des erhaltenen Chromkomplexes mit 1,2-Dibrompropionylchlorid. In Kolonne III sind die mit den neuen Farbstoffen auf Wolle erzielbaren Nuancen angegeben.

(Siehe Tabelle III Seite 28 ff.)

Tabelle III

| Beispiel | I | II | III |
|---|---|---|---|
| 91 | 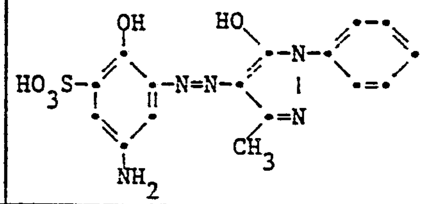 | 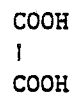 | orange |
| 92 | dito | 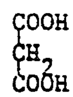 | orange |
| 93 | dito | 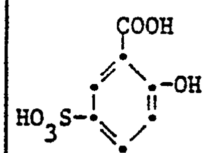 | orange |
| 94 | 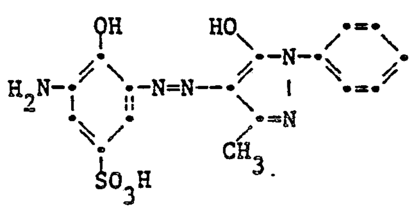 | 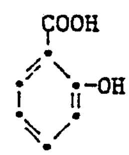 | rotstichig orange |
| 95 | 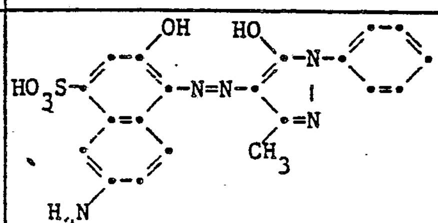 | 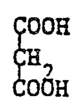 | bordeaux |
| 96 | dito | 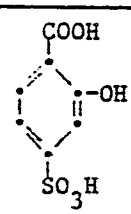 | bordeaux |

Tabelle

| Beispiel | I | II | III |
|---|---|---|---|
| 97 | 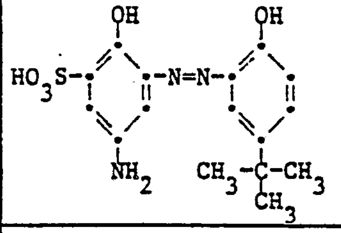 | 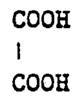 | braun |
| 98 | dito | 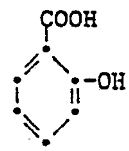 | braun |
| 99 | 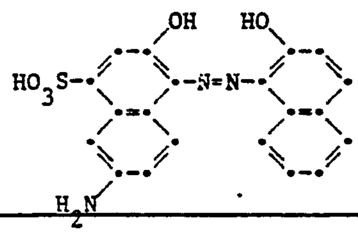 | 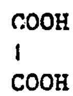 | grau-blau |
| 100 | dito | 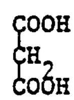 | grau-blau |
| 101 | dito | 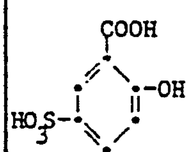 | grünstichig blau-grau |
| 102 | dito | 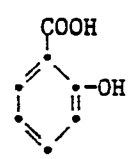 | grünstichig blau-grau |

Weitere Farbstoffe mit ähnlichen Eigenschaften erhält man in analoger Weise durch Umsetzen der 1 : 1-Chromkomplexe der in der folgenden Tabelle IV in Kolonne I angegebenen Amminomonoazoverbindungen, welche mit den in Kolonne II angegebenen Reaktivgruppen umgesetzt sind, mit den in Kolonne III aufgeführten farblosen Verbindungen. Die neuen Farbstoffe färben Wolle egal in den in Kolonne IV angegebenen Nuancen.

(Siehe Tabelle IV Seite 30 ff.)

Tabelle IV

| Beispiel | I | II | III | IV |
|---|---|---|---|---|
| 103 | 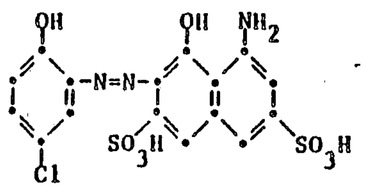 | 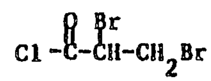 | Oxalsäure | marine - blau |
| 104 | dito | dito | Malonsäure | grüngrau |
| 105 | dito | dito | Salicylsäure | violettblau |
| 106 | dito | dito | Aepfelsäure | grau |
| 107 | dito | dito | Weinsäure | grau |
| 108 | dito | dito | Zitronensäure | grau |
| 109 | 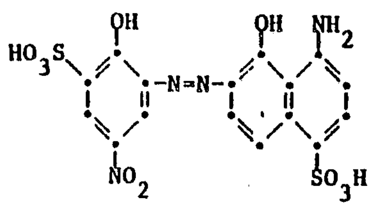 | 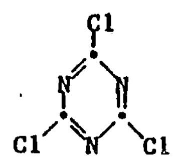 | Oxalsäure | grüngrau |
| 110 | dito | dito | Malonsäure | violettgrau |

| Beispiel | I | II | III | IV |
|---|---|---|---|---|
| 111 | 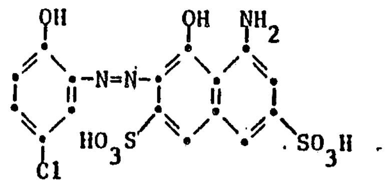 | 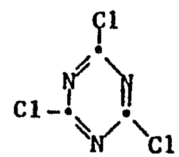 | Oxalsäure | grau |
| 112 | dito | 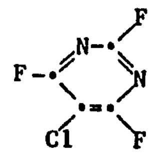 | Oxalsäure | grünschwarz |
| 113 | 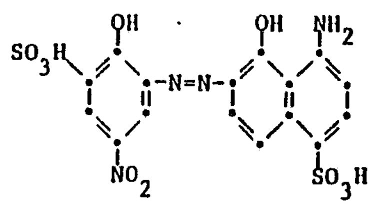 | 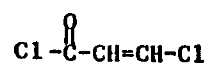 | Oxalsäure | grünblau |
| 114 | dito | 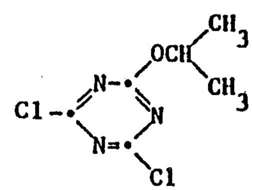 | Oxalsäure | grau |

| Beispiel | I | II | III | IV |
|---|---|---|---|---|
| 115 | 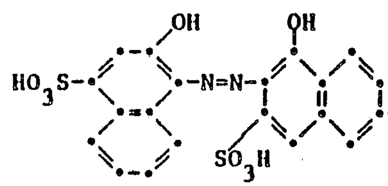 | 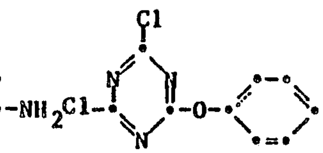 | Oxalsäure | blau |
| 116 | dito | 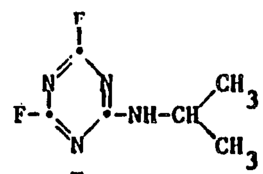 | dito | blau |
| 117 | dito | 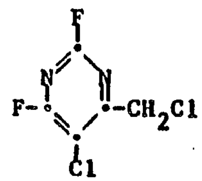 | dito | blau |
| 118 | dito | 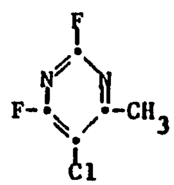 | dito | blau |
| 119 | dito | 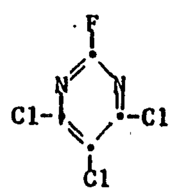 | dito | blau |

| Beispiel | I | II | III | IV |
|---|---|---|---|---|
| 120 | 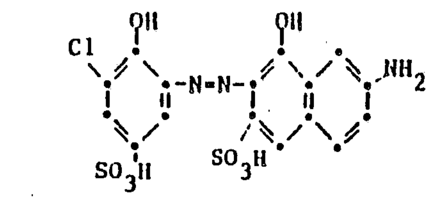 | $ClCO-CHBrCH_2Br$ | Oxalsäure | violett |
| 121 | 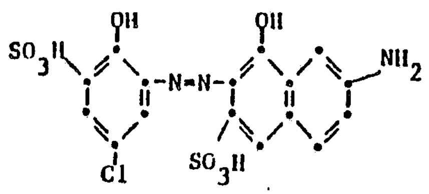 | dito | dito | marineblau |
| 122 | 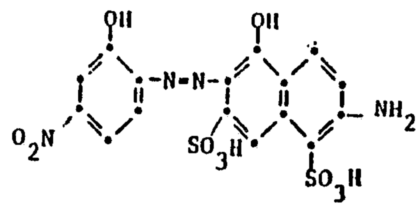 | dito | dito | blau |
| 123 | 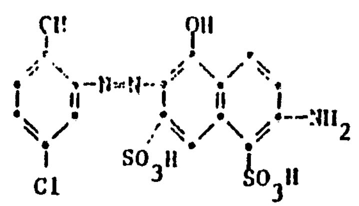 | dito | dito | blauviolett |

| Beispiel | I | II | III | IV |
|---|---|---|---|---|
| 124 | 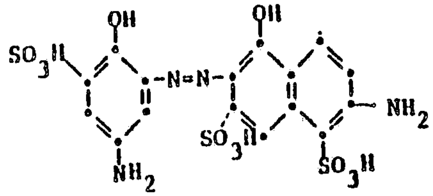 | $ClCO-CHBrCH_2Br$ | Oxalsäure | grau |
| 125 | 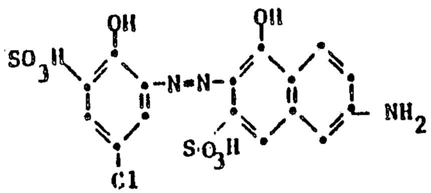 | dito | dito | violett |
| 126 | 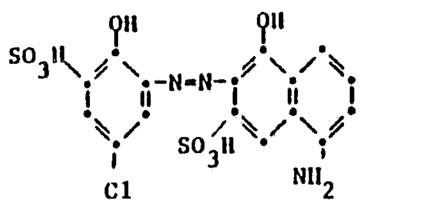 | dito | dito | violettblau |
| 127 | 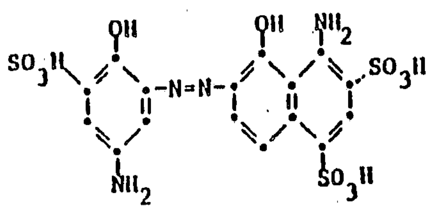 | dito | dito | grau |

| Beispiel | I | II | III | IV |
|---|---|---|---|---|
| 128 | 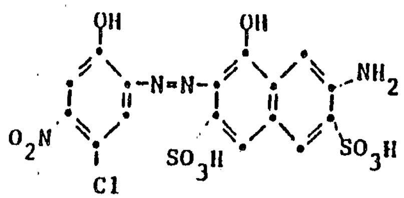 | $ClCOCHBrCH_2Br$ | Oxalsäure | graublau |
| 129 | 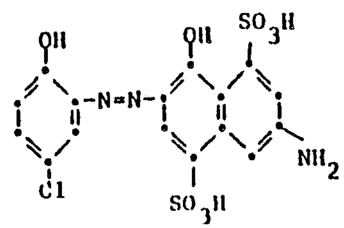 | dito | dito | rotstichig grau |
| 130 | 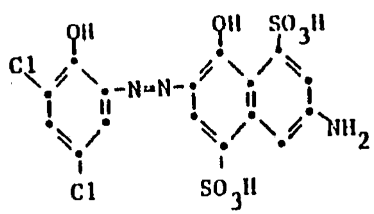 | dito | dito | dito |
| 131 | 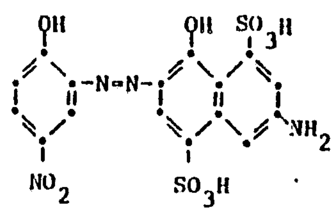 | dito | dito | grauviolett |

| Beispiel | I | II | III | IV |
|---|---|---|---|---|
| 132 | 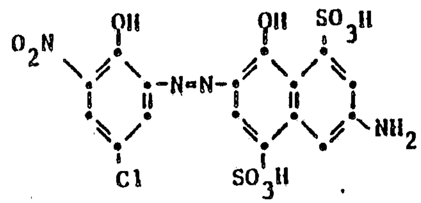 | $ClCOCHBrCH_2Br$ | Oxalsäure | grau |
| 133 | 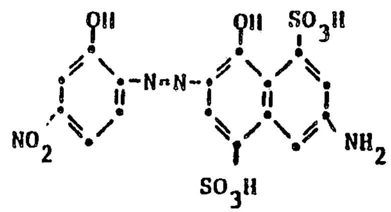 | dito | dito | grünstichig grau |
| 134 | 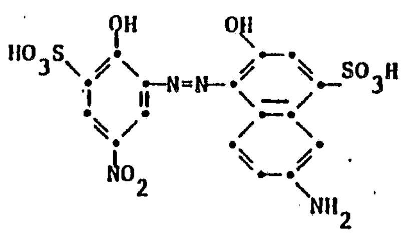 | dito | dito | grau |
| 135 | 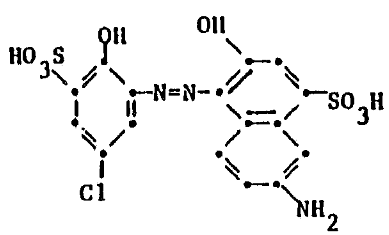 | dito | dito | marineblau |

| Beispiel | I | II | III | IV |
|---|---|---|---|---|
| 136 | 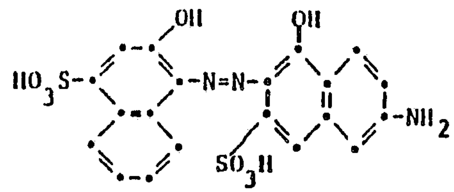 | 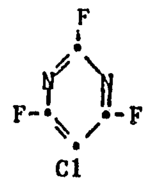 | Oxalsäure | marine-blau |
| 137 | dito | $ClCOCH_2Cl$ | dito | dito |
| 138 | dito | $ClCOCH_2CH_2Cl$ | dito | dito |
| 139 | dito | $ClCOCH=CH_2$ | dito | dito |
| 140 | dito | $ClCOCBr=CH_2$ | dito | dito |
| 141 | 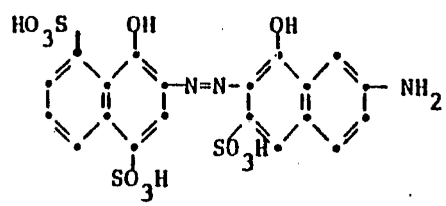 | $ClCOCHBrCH_2Br$ | dito | blau |

| Beispiel | I | II | III | IV |
|---|---|---|---|---|
| 142 | 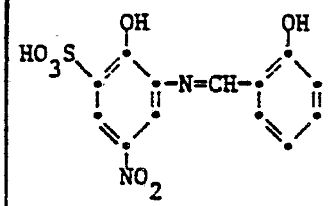 | 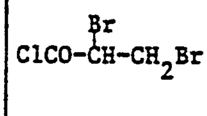 | 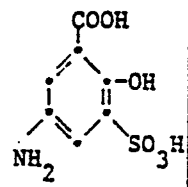 | gelb |
| 143 | 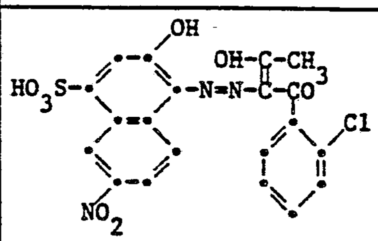 | dito | dito | braun-orange |
| 144 | 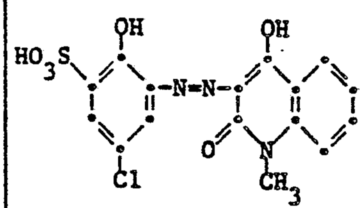 | dito | dito | blaust. rot |
| 145 | 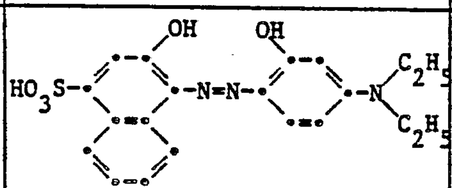 | dito | dito | blau |
| 146 | 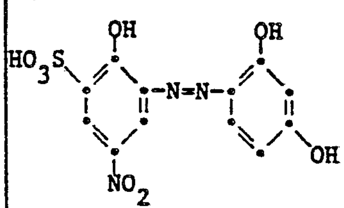 | dito | dito | rot |
| 147 | 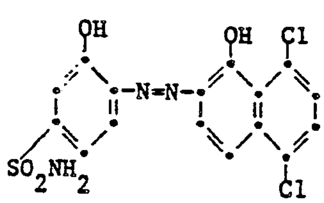 | dito | dito | rotst. blau |

| Beispiel | I | II | III | IV |
|---|---|---|---|---|
| 148 | 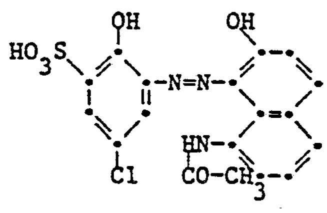 | 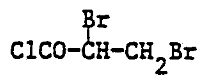 | 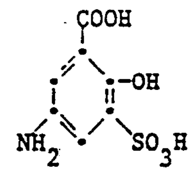 | grau-blau |
| 149 | 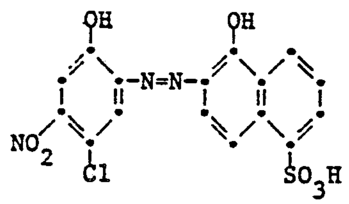 | dito | dito | dito |
| 150 | 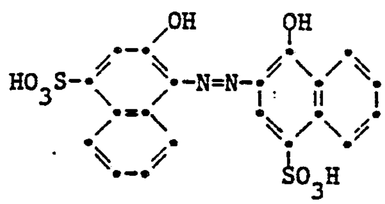 | dito | dito | dito |
| 151 | 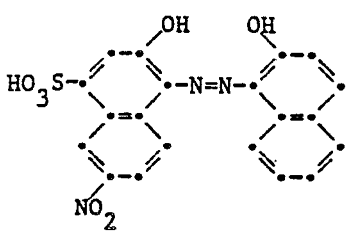 | dito | 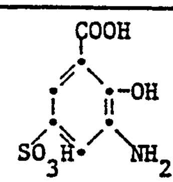 | schwarz |
| 152 | 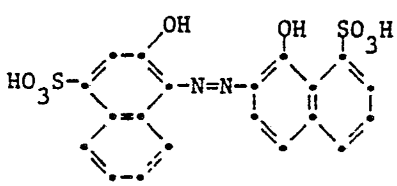 | 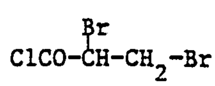 | 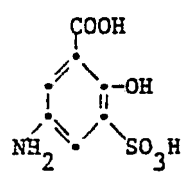 | marine-blau |

| Beispiel | I | II | III | IV |
|---|---|---|---|---|
| 153 | 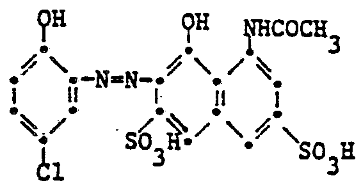 | 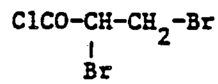 | 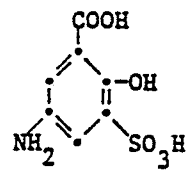 | marine-blau |
| 154 | 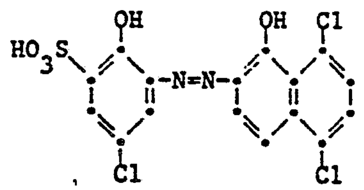 | dito | dito | dito |
| 155 | 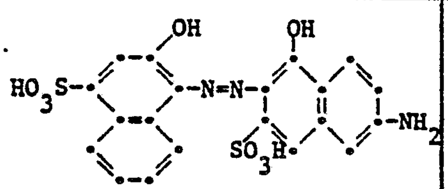 | dito | dito | dito |
| 156 | 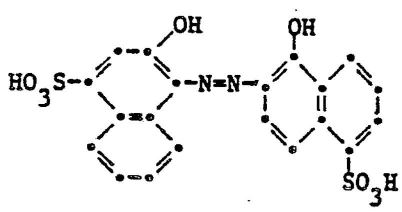 | dito | dito | dito |
| 157 | 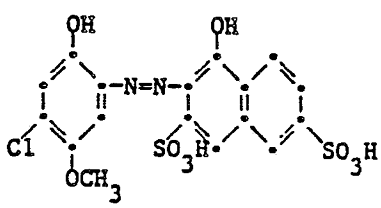 | dito | dito | dito |
| 158 | 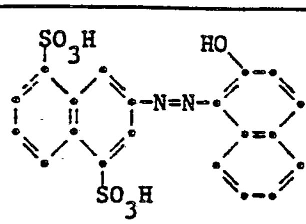 | dito | dito | dito |

| Beispiel | I | II | III | IV |
|---|---|---|---|---|
| 159 | 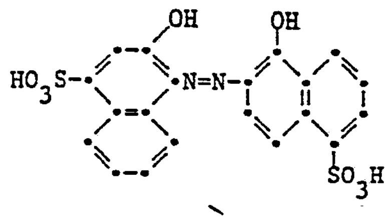 | $ClCO-CH(Br)-CH_2-Br$ | 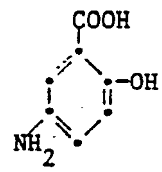 | marine-blau |
| 160 | 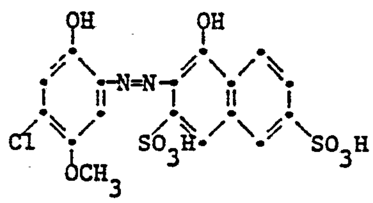 | dito | dito | dito |
| 161 | 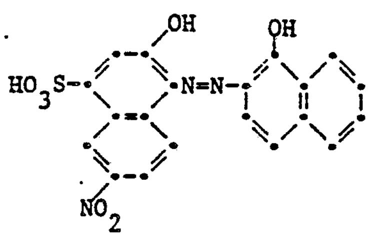 | dito | dito | schwarz |
| 162 | 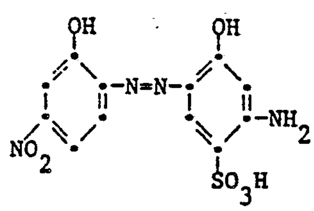 | dito | 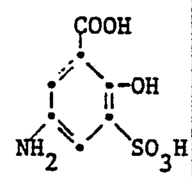 | violett |
| 163 | 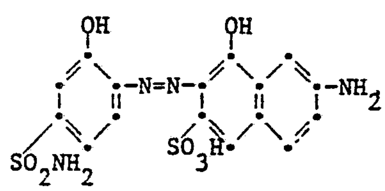 | dito | Oxalsäure | grau |

| Beispiel | I | II | III | IV |
|---|---|---|---|---|
| 164 | 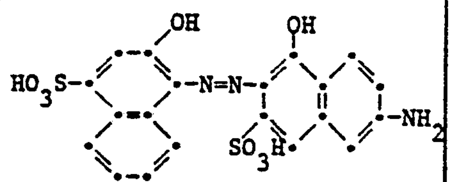 | 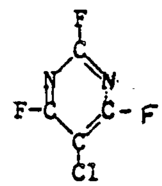 | Oxalsäure | blau |
| 165 | dito | 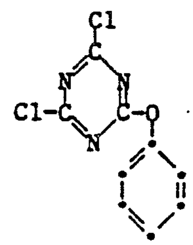 | dito | blau |
| 166 | 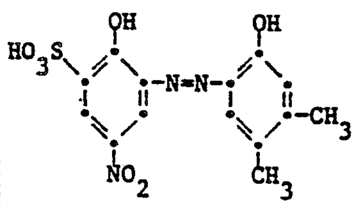 | 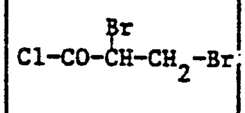 | 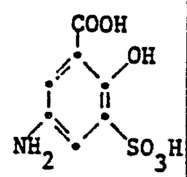 | rotst. braun |
| 167 | 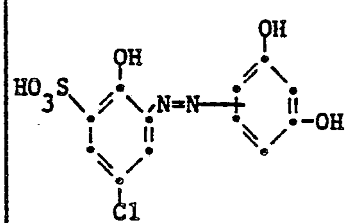 | dito | dito | rot |
| 168 | 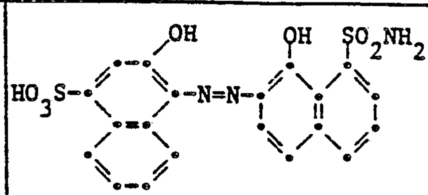 | dito | dito | blau |
| | | | | |

| Beispiel | I | II | III | IV |
|---|---|---|---|---|
| 169 | 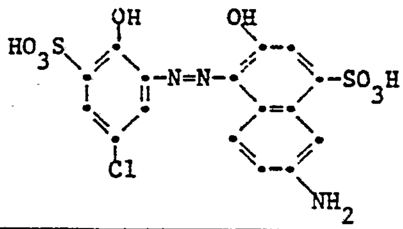 | 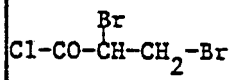 | 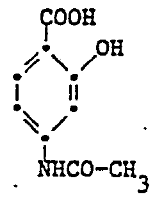 | marine blau |
| 170 | 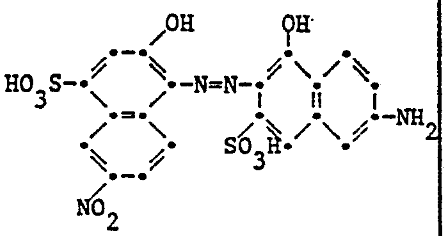 | 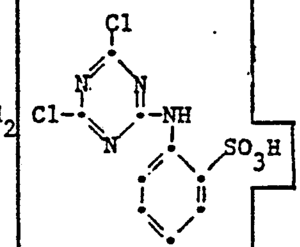 | Oxalsäure | grau |
| 171 | dito | 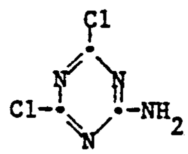 | Oxalsäure | grau |
| 172 | dito | 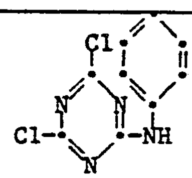 | dito | grau |
| 173 | 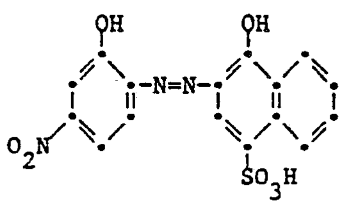 | 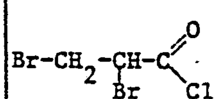 | 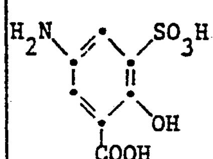 | marine |
| 174 | dito | dito | 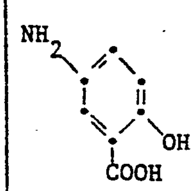 | marine |

| Beispiel | I | II | III | IV |
|---|---|---|---|---|
| 175 | 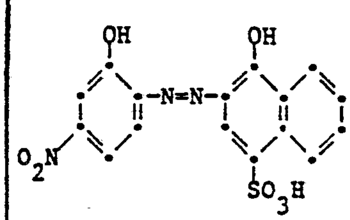 | 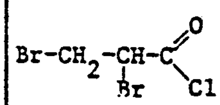 | 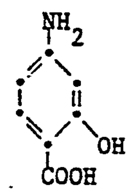 | marine |
| 176 | dito | dito | 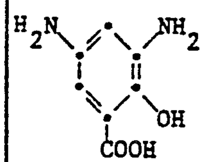 | rotst. grau |
| 177 | 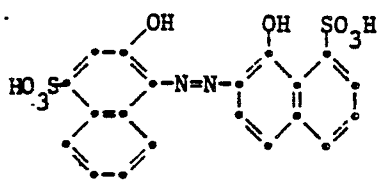 | dito | 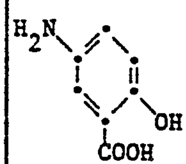 | grau |
| 178 | dito | 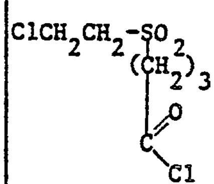 | 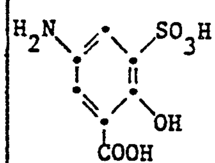 | violett grau |
| 179 | 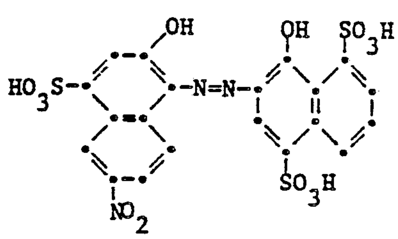 | 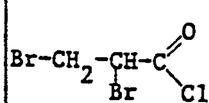 | 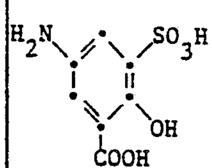 | blau |

| Beispiel | I | II | III | IV |
|---|---|---|---|---|
| 180 | 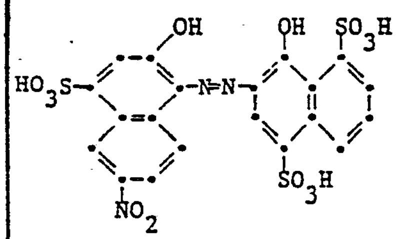 | 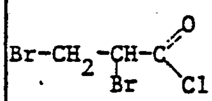 | 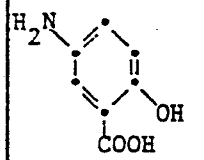 | blau |
| 181 | dito | dito | 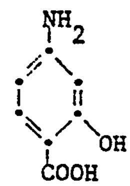 | marine |
| 182 | 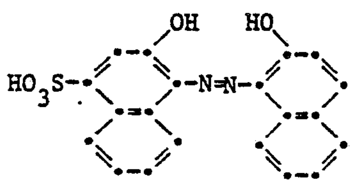 | dito | 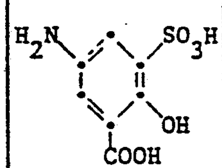 | marine |
| 183 | dito | dito | 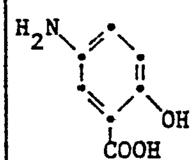 | blau |
| 184 | dito | dito | 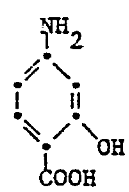 | marine |

| Bei-spiel | I | II | III | IV |
|---|---|---|---|---|
| 185 | 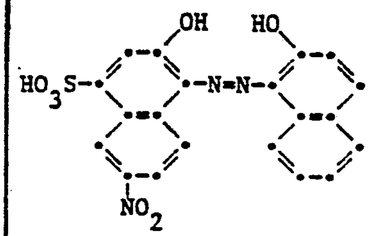 | 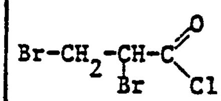 | 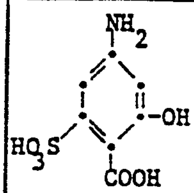 | grau |
| 186 | dito | 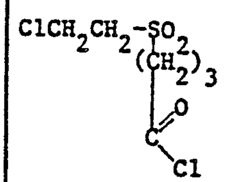 | 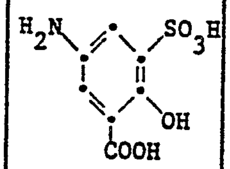 | blau |
| 187 | 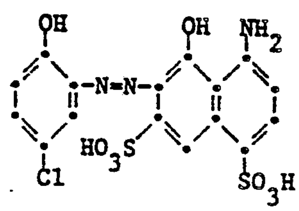 | 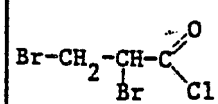 | 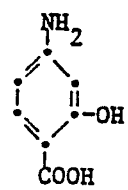 | grün-stich. marine |
| 188 | 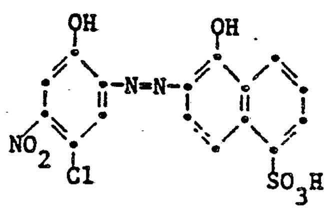 | dito | 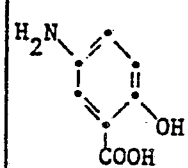 | marine |
| 189 | dito | dito | 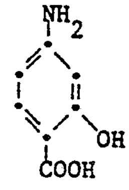 | marine |

| Beispiel | I | II | III | IV |
|---|---|---|---|---|
| 190 | 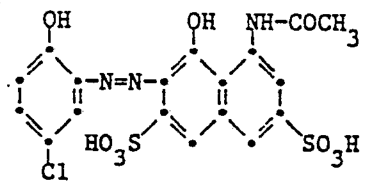 | 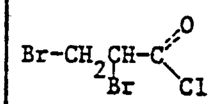 | 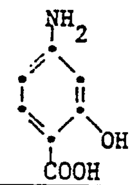 | grau |
| 191 | 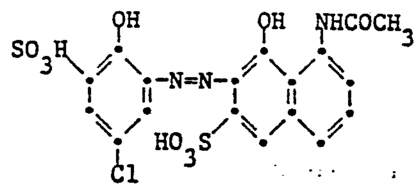 | dito | 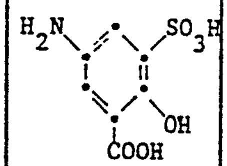 | blau |
| 192 | dito | dito | 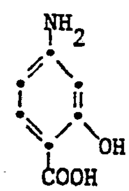 | grün-stich. blau |
| 193 | 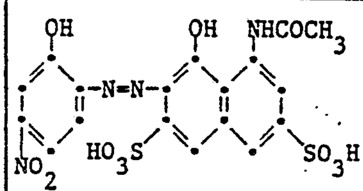 | dito | 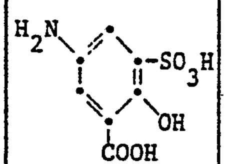 | grün-stich. grau |
| 194 | dito | dito | 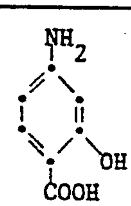 | grün-blau |

| Bei-spiel | I | II | III | IV |
|---|---|---|---|---|
| 195 | 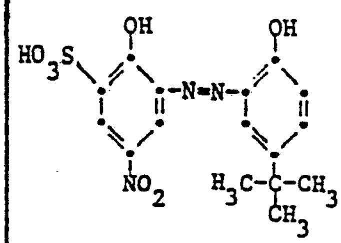 | 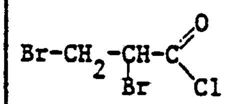 | 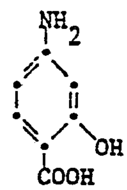 | rot-braun |
| 196 | dito | dito | 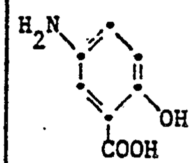 | dito |
| 197 | dito | dito | 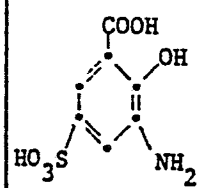 | dito |
| 198 | dito | dito | 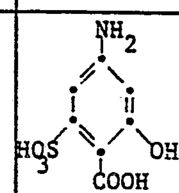 | dito |
| 199 | dito | 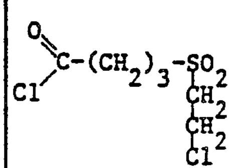 | 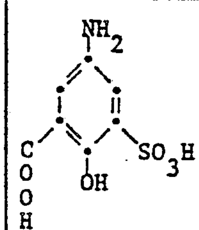 | |
| 200 | 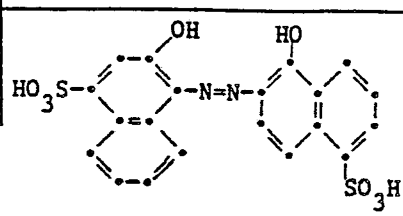 | 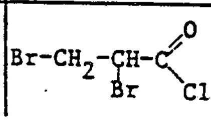 | 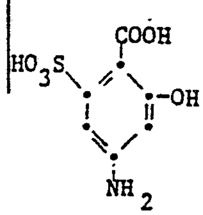 | blau |

Beispiel 201

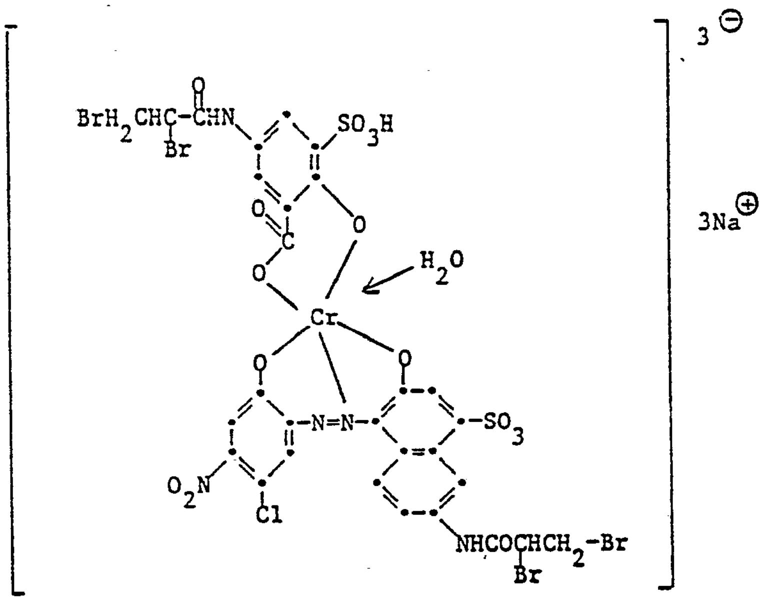

43,9 Teile des 1 : 1 Chromkomplexes des Monoazofarbstoffes, der durch alkalische Kupplung von 4-Chlor-5-nitro-2-amino-phenol auf 2-Naphthol-6-amino-4-sulfo-säure erhalten wird, werden in 400 ml Wasser suspendiert. 47,6 Teile 2-Hydroxy-3-sulfo-5-amino-benzoesäure werden zugefügt. Unter Erwärmen auf 75-80° wird der pH mit 2n Natronlauge auf 6,5-6,7 gehalten, wobei Lösung eintritt. 1 1/2 Stunden wird bei 75-80° unter ständiger pH-Kontrolle gerührt. Nach beendeter Anlagerung wird die Temperatur auf 20-25° absinken gelassen, 68 Teile Dibrompropionylchlorid werden in 20-25 Minuten bei 20-25° zugetropft; der pH wird mit 20 %-iger Sodalösung auf 6,5-6,7 gehalten. Nach beendeter Zugabe wird 2 Stunden nachgerührt und der pH ständig kontrolliert. Die Lösung der erhaltenen, bisreaktiven 1 : 2 Chromkomplexes wird klärfiltriert und dann zur Trockne eingedampft. Der Farbstoff färbt Wolle in graugrünen Tönen mit guten Allgemeinechtheiten.

Färbebeispiel 1

Darstellung des Chromkomplexes der Formel

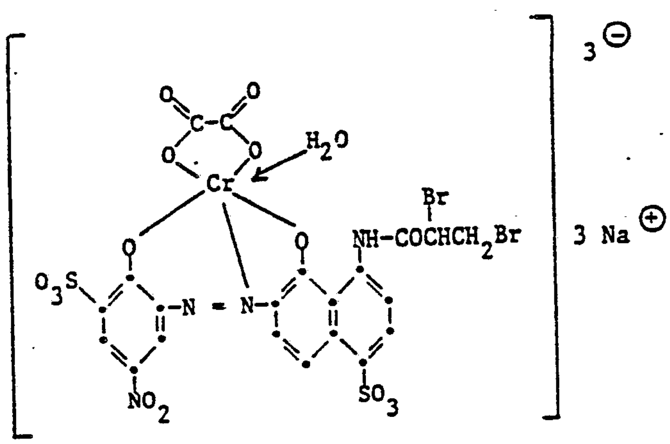

im Färbebad und gleichzeitiges Färben.

10 Teile Wollgewebe werden bei 40° in ein Färbebad eingeführt, das auf 340 Teile Wasser 0,66 Teile des 1 : 1-Chromkomplexes der Formel

(Siehe Formel Seite 50 f.)

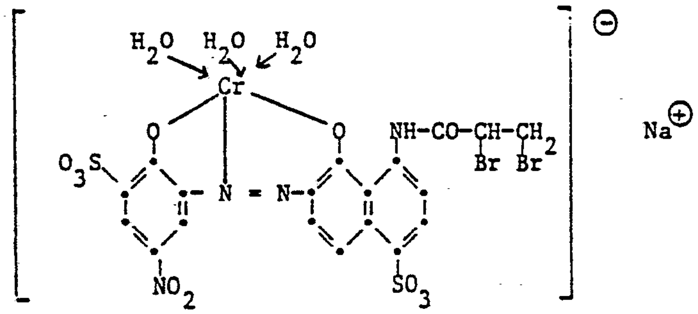

0,66 Teile Kaliumoxalat, 0,4 Teile Ammonsulfat, 0,4 Teile Essigsäure (80 %-ig) und 0,2 Teile eines Egalisierhilfsmittels enthält.

In 20 Minuten wird auf 70-75° aufgeheizt, dann wird diese Temperatur 30 Minuten lang beibehalten. In 15 Minuten wird auf 100 °C aufgeheizt, diese Temperatur wird 90 Minuten beibehalten. In 5 Minuten wird die Temperatur auf 85° absinken gelassen; der pH wird mit 0,4 Teilen einer 25 %igen Ammoniaklösung auf ca. 8,5 gestellt. Nach 15 Minuten bei 85° wird das Wollgewebe aus der Flotte entfernt und gespült. Es liegt eine egale Marineblau-Färbung vor.

Färbebeispiel 2

In 4 000 Teilen Wasser von 50° werden nacheinander 4 Teile 80 %ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

4 Teile des gemäss Beispiel 2 erhaltenen Farbstoffes werden in 100 Teilen Wasser heiss gelöst und dem obigen Färbebad zugegeben. Dann wird mit 100 Teilen vorgenetzten Wollstrickgarns eingegangen und im Verlaufe von 30 Minuten die Temperatur des Bades von 50 auf 80° erhöht. Nach 20 Minuten Färben vei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Ansäuern mit 1 Teil 80 %iger Ameisensäure, Zentrifugieren und Trocknen erhält man ein dunkelblau gefärbtes Wollgarn von sehr guter Nass- und Reibechtheit sowie ausgezeichneter Lichtechtheit.

Färbebeispiel 3

Ein filzfest ausgerüstetes Wollgewebe wird mit der nachfolgend beschriebenen Zubereitung getränkt und auf dem Foulard auf eine Feuchtigkeitsaufnahme von 250 % abgequetscht:

| | |
|---|---|
| 4 | Teile Diaprint REG (säurebeständiges Verdickungsmittel), |
| 1 | Teil Sulfaminsäure |
| 0,2 | Teile Thymol |
| 0,2 | Teile Emulgator |
| 94,6 | Teile Wasser |
| 100 | Teile |

Das imprägnierte Material wird anschliessend in einer heizbaren Presse während 3 Minuten bei 100 bis 105° unter einem Druck von etwa 0,5 kg/cm² mit einem Transferpapier zusammengepresst, welches ein in üblicher Weise mit dem Farbstoff gemäss Beispiel 3 aufgebrachtes Druckmuster trägt. Nach Spülen und Trocknen des Wollgewebes weist dieses ein entsprechendes, tiefschwarzes Druckmuster von sehr guten Echtheitseigenschaften auf.

Färbebeispiel 4

Ein Flanellgewebe aus chlorierter Wolle wird auf einem Foulard mit nachfolgend beschriebener Farbstoffzubereitung getränkt und auf eine Flüssigkeitsaufnahme von 100 % abgequetscht.

| | |
|---|---|
| 50 | Teile des Farbstoffes gemäss Beispiel 4 |
| 300 | Teile Harnstoff |
| 320 | Teile Solvitose OFA à 4 % (Verdickungsmittel) |
| 10 | Teile einer Mischung von anionaktivem Fettalkoholäthersulfat mit nichtionogenen Netzmitteln |
| 10 | Teile des in Färbebeispiel 2 verwendeten Egalisiermittels |
| 10 | Teile Natrium-metabisulfit |

10 Teile Essigsäure 80 %ig
290 Teile Wasser
1 000 Teile Foulardierflotte.

Das imprägnierte Gewebe wird anschliessend in aufgerolltem und luftdicht verpacktem Zustand während 48 Stunden bei Raumtemperatur gelagert. Nach Spülen mit kaltem Wasser wird das Material auf frischem Bad mit soviel Ammoniak zu 24 % behandelt, dass ein pH-Wert von 8,5 erreicht wird und während 15 Minuten bei 80° gehalten. Nach Spülen in warmem Wasser wird zum Schluss mit Essigsäure 80 %ig abgesäuert und getrocknet. Das Wollgewebe ist in einem vollen Schwarz von ausgezeichneten Echtheitseigenschaften gefärbt.

Färbebeispiel 5

2 Teile des gemäss Beispiel 109 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt und dann getrocknet.

Danach imprägniert man das Gewebe mit einer 20° warmen Lösung, die pro Liter 5 g Natriumhydroxid und 300 g Natriumchlorid enthält, quetscht auf 75 % Gewichtszunahme ab, dämpft die Färbung während 30 Sekunden bei 100 bis 101°, spült, seift während einer Viertelstunde in einer 0,3 %igen kochenden Lösung eines ionenfreien Waschmittels, spült und trocknet. Das Baumwollgewebe ist in einem Grauton von guten Echtheitseigenschaften gefärbt.

Färbebeispiel 6

2 Teile des gemäss Beispiel 112 erhältlichen Farbstoffes werden in 100 Teilen Wasser gelöst. Die Lösung gibt man zu 1 900 Teilen kaltem Wasser, fügt 60 Teile Natriumchlorid zu und geht mit 100 Teilen eines Baumwollgewebes in dieses Färbebad ein. Man steigert die Temperatur auf 40°, wobei nach 30 Minuten 40 Teile kalzinierte Soda und nochmals 60 Teile Natriumchlorid zugegeben werden. Man hält die Temperatur 30 Minuten auf 40°, spült und seift dann die Färbung während 15 Minuten in einer 0,3 %igen kochenden Lösung eines ionenfreien Waschmittels, spült und trocknet.

Man erhält ein grünstichig grau gefärbtes Baumwollgewebe mit guten Echtheitseigenschaften.

Färbebeispiel 7

Ein Flanellgewebe aus chlorierter Wolle wird auf einem Foulard mit nachfolgend beschriebener Farbstoffzubereitung getränkt und auf eine Flüssigkeitsaufnahme von 100 % abgequetscht :

50 Teile des Farbstoffes gemäss Beispiel 48
300 Teile Solvitose OFA à 40 % (Verdickungsmittel)
20 Teile einer Mischung von anionaktivem Fettalkoholäthersulfat mit nichtionogenen Netzmitteln
10 Teile des in Färbebeispiel 2 verwendeten Egalisiermittels
20 Teile Essigsäure 80 %ig
600 Teile Wasser
1 000 Teile Foulardierflotte.

Das imprägnierte Gewebe wird anschliessend in einen Dämpfer gebracht und während 20 bis 40 Minuten mit gesättigtem Dampf behandelt. Nach Spülen mit kaltem Wasser wird das Material auf frischem Bad mit soviel 24 %iger Ammoniaklösung behandelt, dass ein pH-Wert von 8,5 erreicht wird und während 15 Minuten bei 80° gehalten. Nach Spülen in warmem Wasser wird zum Schluss mit Essigsäure 80 %ig abgesäuert und getrocknet. Das Wollgewebe ist in einem vollen Schwarzton von ausgezeichneten Echtheitseigenschaften gefärbt.

Färbebeispiel 8

In 1 000 Teilen Wasser von 50° werden nacheinander 4 Teile 80 %ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

3 Teile des gemäss Beispiel 24 erhaltenen Farbstoffes werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht, und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut bei dieser Temperatur nachbehandelt. Nach gründlichem Spülen mit heissem und kaltem Wasser, Absäuern mit 1 Teil 80 %iger Ameisensäure,

Zentrifugieren und Trocknen erhält man ein dunkelviolett gefärbtes Färbegut von sehr guter Nassechtheit sowie ausgezeichneter Lichtechtheit.

Färbebeispiel 9

In 1 000 Teilen Wasser von 50° werden nacheinander 6 Teile 80 %ige Essigsäure, 3 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 6 Teile Ammoniumsulfat gelöst.

3 Teile des gemäss Beispiel 2 erhaltenen Farbstoffes werden in 100 Teilen Wasser heiss gelöst und dem obigen Färbebad zugegeben. Ein Zirkulationsfärbeapparat wird mit 150 Teilen vorgenetzter loser Wolle beschickt und im Verlaufe von 30 Minuten die Temperatur der Flotte von 50° auf 97-99° erhöht und anschliessend 90 Minuten kochend gefärbt. Der Farbstoff zieht fast vollkommen auf das Substrat auf. Nach Abkühlen der Flotte auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80 %iger Ameisensäure, Zentrifugieren und Trocknen erhält man faseregal dunkelblau gefärbtes Substrat mit guter Nass- und Reibechtheit sowie ausgezeichneter Lichtechtheit.

Färbebeispiel 10

In 4 000 Teilen Wasser von 50° werden nacheinander 4 Teile 80 %ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,45 Teile des gemäss Beispiel 2 erhaltenen Farbstoffes und 0,30 Teile des gelben Farbstoffes der Formel

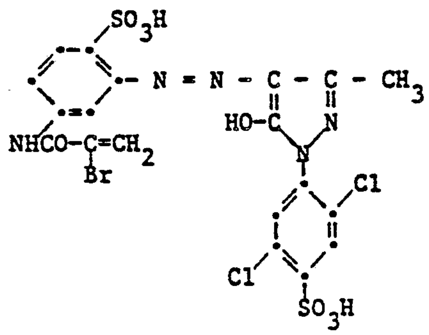

und 0,40 Teile des roten Farbstoffes der Formel

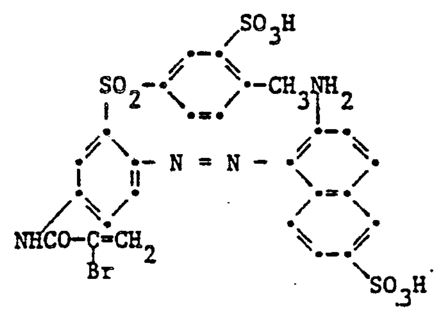

werden in 100 Teilen Wasser heiss gelöst und dem obigen Färbebad zugegeben. Dann wird mit 100 Teilen vorgenetztem Wollgewebe eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80 %iger Ameisensäure, Zentrifugieren und Trocknen erhält man ein faseregal dunkelbraun gefärbtes Wollgewebe von sehr guter Nass- und Reibechtheit sowie ausgezeichneter Lichtechtheit.

Färbebeispiel 11

In 1 000 Teilen Wasser von 50° werden nacheinander 4 Teile 80 %ige Essigsäure, 2 Teile des

Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,6 Teile des gemäss Beispiel 4 erhaltenen Farbstoffes und 0,09 Teile des gelben Farbstoffes der Formel

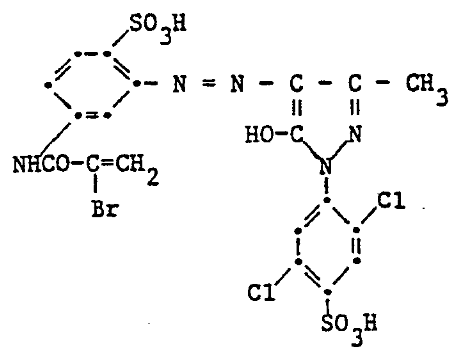

und 0,2 Teile des roten Farbstoffes der Formel

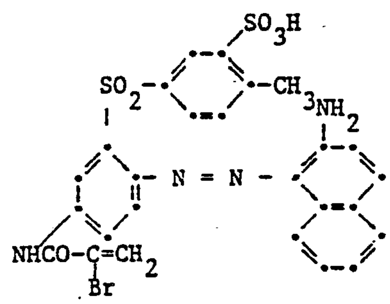

werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80 %iger Ameisensäure, Zentrifugieren und Trocknen erhält man ein grau gefärbtes Färbegut von sehr guter Nassechtheit sowie ausgezeichneter Lichtechtheit.

Färbebeispiel 12

In 4 000 Teilen Wasser von 50 °C werden nacheinander 4 Teile 80 %ige Essigsäure, 2 Teile des Ammoniumsalzes des sauren Schwefelsäureesters des Adduktes aus einem Fettamin (bestehend aus 30 % Hexadecylamin, 25 % Octadecylamin, 45 % Octadecenylamin und 7 Mol Aethylenoxyd) sowie 4 Teile Ammoniumsulfat gelöst. Dem so erhaltenen Färbebad wird eine Lösung von 2,2 Teilen des 1 : 1-Chromkomplexfarbstoffs folgender Konstitution

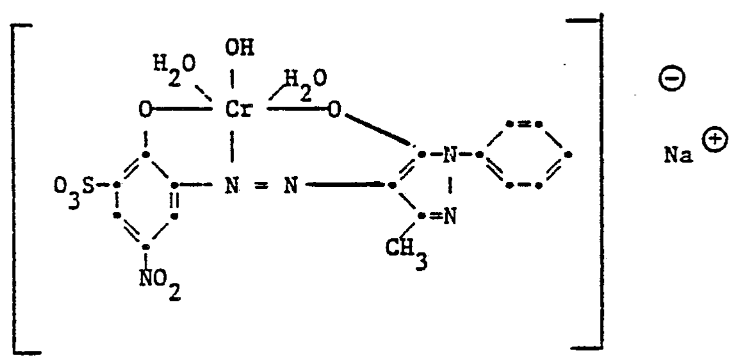

in 100 Teilen Wasser von 50 °C sowie eine Lösung von 1 Teil der durch Acylieren von 2-Hydroxy-4-aminobenzoesäure mit 1,2-Dibrompropionsäurechlorid in üblicher Weise erhältliche Verbindung der Konstitution

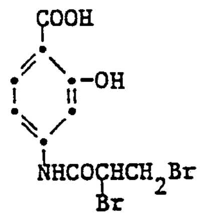

in 50 Teilen Wasser von 50 °C zugegeben.

Dann wird mit 100 Teilen vorgenetzten Wollstrickgarns eingegangen und im Verlaufe von 30 Minuten die Temperatur des Bades von 50 auf 80 °C erhöht. Nach 20 Minuten Färben bei 80 °C wird zum Sieden erhitzt und anschliessend 90 Minuten kochend gefärbt. Das Färbebad enthält dann praktisch keinen Farbstoff mehr. Nach Abkühlen des Bades auf 80 °C wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80 %iger Ameisensäure, Zentrifugieren und Trocknen erhält man ein egal orangerot gefärbtes Wollgarn von sehr guter Nass- und Reibechtheit sowie ausgezeichneter Lichtechtheit.

Anstelle der genannten, farblosen reaktiven Verbindung können auch die analogen Acylierungsprodukte aus 2-Hydroxy-5-aminobenzoesäure, 2-Hydroxy-3-sulfo-5-aminobenzoesäure, 2-Hydroxy-3-amino-5-sulfobenzoesäure bzw. 2-Hydroxy-4-amino-6-sulfobenzoesäure und 1,2-Dibrompropionylchlorid nach dem oben beschriebenen Färbeverfahren verwendet werden. Die resultierenden gelb- bis rotstichig orangen Färbungen zeichnen sich durch ein hohes Echtheitsniveau aus.

Färbebeispiel 13

4 000 Teile Wasser von 70 °C werden mit 8 Teilen Schwefelsäure (96 %) und 5 Teilen wasserfreiem Natriumsulfat versetzt. Nach Zugabe einer Lösung von 4 Teilen des 1 : 1-Chromkomplexfarbstoffs der Konstitution

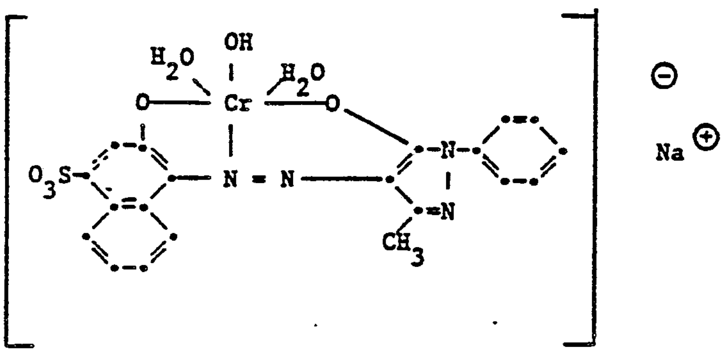

in 100 Teilen Wasser wird mit 100 Teilen vorgenetzten Wollgewebes eingegangen. Die Temperatur des Färbebades wird im Laufe von 30 Minuten auf 98-100 °C gesteigert und während weiterer 90 Minuten beibehalten. Nach Abkühlen auf 80° wird das rosa gefärbte Gewebe in fliessendem heissem und kaltem Wasser gründlich gespült und zuletzt abgeschleudert.

Mit dem noch feuchten, gefärbten Wollgewebe wird anschliessend in ein Färbebad eingegangen, welches in 3 000 Teilen Wasser von 50 °C 1 Teil der farblosen Verbindung der Formel

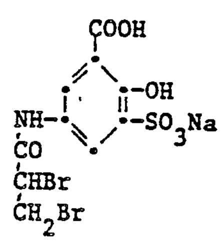

sowie 5 Teile Essigsäure 40 %ig und 5 Teile krist. Natriumacetat enthält.

Die Temperatur des Färbebades wird im Verlaufe von 30 Minuten von 50 auf 80 °C erhöht. Nach 20 Minuten bei 80° wird das Bad zum Sieden erhitzt und anschliessend während 60 Minuten bei Kochtemperatur gehalten.

Nach Abkühlen auf 80 °C wird der pH-Wert durch Zugabe von Ammoniaklösung auf bleibend 8,5 erhöht und das Färbegut noch 20 Minuten lang bei gleicher Temperatur behandelt. Nach Spülen mit heissem und kaltem Wasser, Absäuern mit 1 Teil 80 %iger Ameisensäure, erneutem Spülen, Zentrifugieren und Trocknen erhält man ein faser- und flächenegal bordeauxrot gefärbtes Wollgewebe mit sehr guten Nassechtheiten und guter Lichtechtheit.

**Patentansprüche**

1. Chromkomplexe der Formel

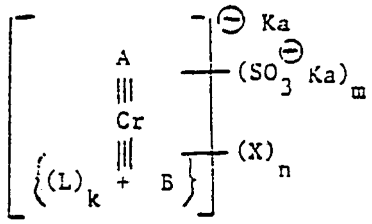

(1)

worin A der Rest eines dicyclisch metallisierbaren Azo- oder Azomethinfarbstoffes, B der Rest einer potentiell zwei- oder dreizähnigen, bianionischen, komplexbildenden, organischen Verbindung, der keine Azo- oder Azomethingruppe enthält, L ein farbloser monofunktioneller Ligand, X ein faserreaktiver Rest, Ka ein Kation, k = 0 oder 1, m = 1, 2 oder 3 und n = 1 oder 2 ist, wobei der Rest X und die Gruppe $SO_3^{\ominus}$ Ka an den Rest A und/oder B gebunden ist.

2. Chromkomplexe gemäss Anspruch 1, worin der Rest A der Formel

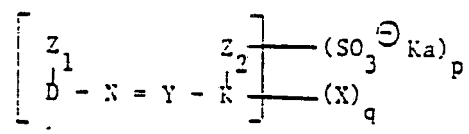

(2)

entspricht, worin D der Rest einer Diazokomponente der Benzol- oder Naphthalinreihe, Y ein Stickstoffatom oder die CH-Gruppe, K für den Fall, dass Y ein Stickstoffatom ist, der Rest einer Kupplungskomponente oder, für den Fall, dass Y die CH-Gruppe ist, der Rest eines o-Hydroxybenzaldehyds oder eines o-Hydroxynaphthaldehyds, $Z_1$ in o-Stellung zu dem Rest —N=Y— die —O— oder —COO-Gruppe und $Z_2$ die —O— oder —N(R)-Gruppe ist, wobei R Wasserstoff, gegebenenfalls substituiertes $C_{1-4}$-Alkyl oder gegebenenfalls substituiertes Phenyl, bedeutet, und $Z_2$ in Nachbarstellung zu dem Rest —N=Y— an K gebunden ist, Ka und X die in Anspruch 1 angegebenen Bedeutungen haben, p = 0, 1, 2 oder 2 und q = 0, 1 oder 2 ist, wobei, falls p = 0 ist, der Rest B mindestens eine ($SO_3^{\ominus}$ Ka)-Gruppe enthält, und falls q = 0 ist, der Rest B mindestens einen faserreaktiven Rest X enthalt.

3. Chromkomplexe gemäss Anspruch 1, worin B der Rest einer potentiell zwei- oder dreizähnigen, bianionischen, komplexbildenden, organischen Verbindung der Benzol-, Naphthalin- oder Heterocyclenreihe oder der aliphatischen Reihe ist, der 1 bis 2 Sulfonsäuregruppen und einen faserreaktiven Rest X enthalten kann.

4. Chromkomplexe gemäss einem der Ansprüche 1 bis 3, worin X einen faserreaktiven Rest der aliphatischen oder heterocyclischen Reihe bedeutet, der direkt oder über ein Brückenglied an den Azo- oder Azomethinfarbstoffrest A und/oder an den Rest B gebunden ist.

5. Chromkomplexe gemäss einem der Ansprüche 1 bis 4 der Formel

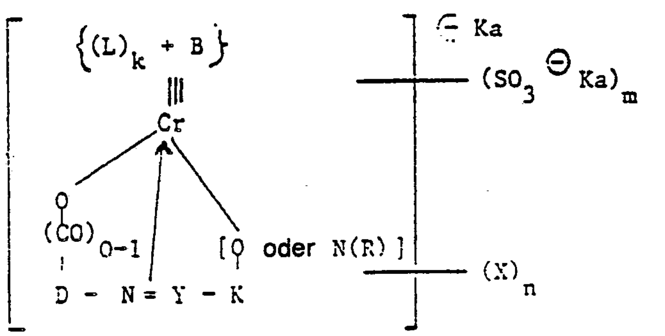

(3)

worin B der Rest einer potentiell zwei- oder dreizähnigen, bianionischen komplexbildenden organischen Verbindung der Benzol-, Naphthalin- oder Heterocyclenreihe oder der aliphatischen Reihe ist, L ein farbloser monofunktioneller Ligand, D der Rest einer Diazokomponente der Benzol- oder Naphthalinreihe, der die $—(CO)_{0-1}—$O-Gruppe in o-Stellung zur —N=Y-Gruppe enthält, Y ein Stickstoffatom oder die —CH-Gruppe, K für den Fall, dass Y ein Stickstoffatom ist, der Rest einer Kupplungskomponente der Benzol- oder Naphthalinreihe oder der 5-Pyrazolon-, 5-Aminopyrazol-, Acetoacetarylid-, Chinolon- oder Benzoylessigsäurearylidreihe ist, der den Rest-[O oder N(R)]- in Nachbarstellung zur Azobrücke enthält, und wobei R Wasserstoff, gegebenenfalls substituiertes $C_{1-4}$-Alkyl oder gegebenenfalls substituiertes Phenyl ist, oder für den Fall, dass Y die CH-Gruppe ist, K den Rest eines o-Hydroxybenzaldehyds oder o-Hydroxynaphthaldehyds bedeutet, X einen faserreaktiven Rest der aliphatischen oder heterocyclischen Reihe, der direkt oder über ein Brückenglied and D und/oder K und/oder B gebunden ist, Ka ein Kation,

k = 0 oder 1, m = 1, 2 oder 3 und n = 1 oder 2 bedeutet, wobei die Gruppe $SO_3^{\ominus}$ Ka an D und/oder K und/oder B gebunden ist.

6. Chromkomplexe gemäss Anspruch 5, worin Y ein Stickstoffatom ist.

7. Chromkomplexe gemäss Anspruch 5, worin B ein Rest der o-Hydroxybenzoesäure-, 8-Carboxy-1-naphtol-, Phthalsäure-, oder Brenzkatechinreihe, oder ein Rest der Formeln

$HOOC-R_1-COOH$, 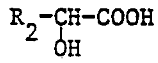, 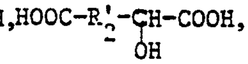, 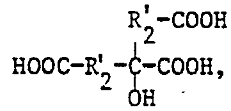,

ist, wobei $R_1$ die direkte Bindung, $C_{1-2}$-Alkylen oder —CH=CH—, $R_2$ $C_{1-4}$-Alkyl und $R'_2$ $C_{1-4}$-Alkylen bedeutet und die Reste $R_1$. $R_2$ und $R'_2$ gegebenenfalls weitersubstituiert sind durch Halogen und $C_{1-4}$-Alkoxy.

8. Chromkomplexe gemäss Anspruch 5, worin X ein Acryloyl-, Mono-, Di- oder Trihalogenacryloyl- oder -methacryloyl-, Mono- oder Dihalogenpropionyl-, Phenylsulfonylpropionyl-, Methylsulfonylpropionyl-, Vinylsulfonyl-, β-Chloräthylsulfonyl-, β-Sulfatoäthylsulfonylrest oder ein Rest der Mono-, Di- oder Trihalogenpyrimidyl- oder Mono- oder Dihalogentriazinylreihe ist, wobei X gegebenenfalls über ein Brückenglied der Formel

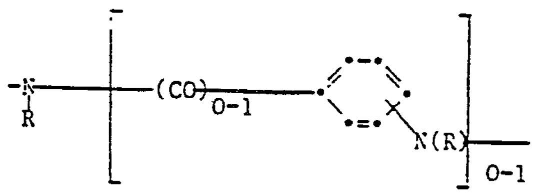 oder 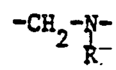

an D und/oder K und/oder K und/oder B gebunden ist und R die in Anspruch 5 angegebene Bedeutung hat.

9. Chrompkomplexe gemäss Anspruch 5, worin B den Rest von Oxalsäure, Malonsäure, Zitronensäure, Apfelsäure, Weinsäure, Brenzkatechin, Phthalsäure, Milchsäure, Salicylsäure, Sulfosalicylsäure, durch ein oder zwei Reste X und gegebenenfalls Sulfo oder Acetylamino substituierte Salicylsäure, L als farbloser monofunktioneller Ligand Wasser, D ein Benzolrest, der ausser durch die metallisierbare Gruppe noch durch Sulfo, Nitro, Halogen, Sulfamoyl, Methoxy und den Rest X substituiert sein kann, oder ein Naphthalinrest, der ausser durch die metallisierbare Gruppe noch durch Sulfo, Nitro, Halogen und den Rest X substituiert sein kann, K, falls Y ein Stickstoffatom ist, ein in Nachbarstellung zu der Azobrücke über —O— oder —N(R)— gebundener Benzolrest, der durch $C_{1-5}$-Alkyl, Hydroxy, Diäthylamino, Sulfo und den Rest X substituiert sein kann, ein Naphthalinrest, der durch Chlor, Acetylamino, Sulfamoyl, Sulfo, und den Rest X substituiert sein kann, wobei X direkt oder über den Phenylaminorest an den Naphthalinkern gebunden ist, ein 1-Phenyl-3-methylpyrazolon-(5)-rest, der im Phenylring durch Sulfo, Halogen und den Rest X substituiert sein kann, ein 1-(2′, 2″-Disulfostilben)-3-methylpyrazolon-(5)-rest, der den Rest X in 4″-Stellung enthält, ein Acetessigsäureanilidrest, der im Phenylring durch Chlor substituiert sein kann, oder ein 1-Methyl-4-hydroxychinol-2-onrest, oder, falls Y die CH-Gruppe ist, der Rest des 2-Hydroxybenzaldehyds ist, und X den über —NH— gebundenen Rest von α,β-Dibrompropionyl, α-Bromacryloyl, β-Chloracryloyl, 2,6-Difluor-5-chlorpyrimidyl, 2,4-Dichlortriazinyl, 2-Chlor-4-isopropoxytriazinyl, 2-Chlor-4-(3′-Sulfophenylamino)-triazinyl, 2-Chlor-4-ethoxytriazinyl, 2-Chlor-4-phenoxytriazinyl, 2-Fluor-4-(3′-Sulfophenylamino)-triazinyl, 2-Fluor-4-(2′-Methylphenylamino)-triazinyl, 2-Fluor-4-isopropylaminotriazinyl, 2-Fluor-5-chlor-6-chlormethylpyrimidinyl, 2-Fluor-5-chlor-6-methylpyrimidinyl, 2-Chlor-4-(2′-sulfophenylamino)-triazinyl, 2-Chlor-4-aminotriazinyl, 2-Chlor-4-phenylaminotriazinyl oder β-Chloräthylsulfonylbutyryl bedeutet und Ka ein Alkalikation ist.

10. Chromkomplexe gemäss Anspruch 9 der Formel

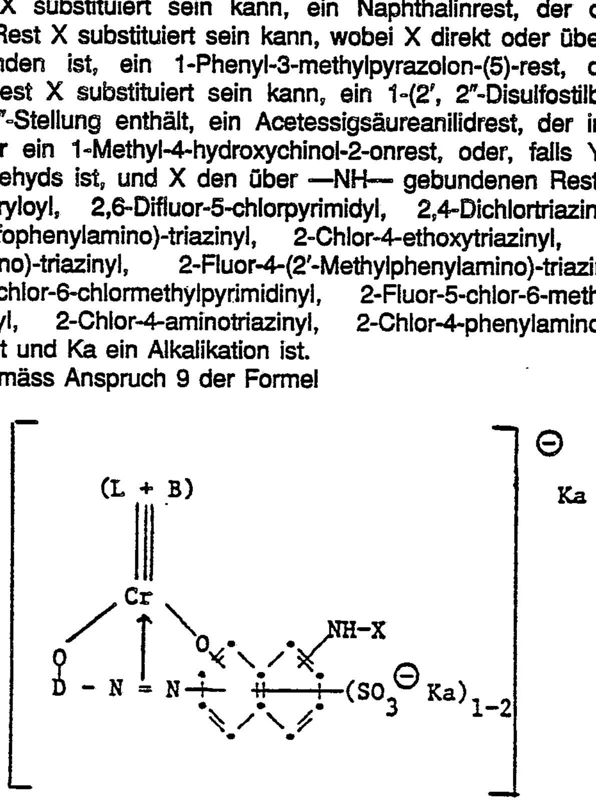 (4)

worin B, L und D die in Anspruch 9 angegebenen Bedeutungen haben, Ka ein Alkalikation ist und die Azobrücke in o-Stellung zu dem an das Chromatom gebundenen Sauerstoffatom an den Naphthalinkern gebunden ist, und Xα, β-Dibrompropionyl oder α-Bromacryloyl bedeutet.

11. Chromkomplex gemäss einem der Ansprüche 9 und 10, worin B den komplex gebundenen Rest von Oxalsäure bedeutet.

12. Chromkomplex gemäss Anspruch 9 der Formel

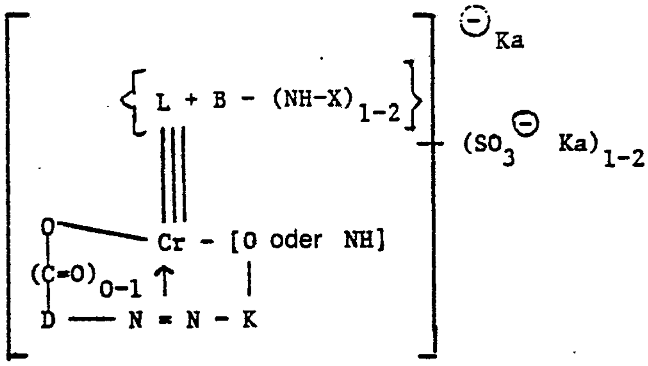 (5)

worin B den Rest einer gegebenenfalls durch Sulfo substituierten Salicylsäure, L Wasser, D einen Benzol- oder Naphthalinrest, der substituiert sein kann durch Sulfo, Nitro und Halogen und K einen gegebenenfalls durch Sulfo oder Halogen substituierten 1-Phenyl-3-methylpyrazolon-(5)-Rest, einen Acetoacetanilidrest, einen gegebenenfalls durch Sulfo substituierten Naphthalinrest oder einen durch $C_{1-5}$-Alkyl substituierten Phenylrest bedeutet, Xα,β-Dibrompropionyl oder α-Bromacryloyl ist, die Azobrücke in Nachbarstellung zu dem Rest $-(C=O)_{0-1}-O-$ und [O oder NH] an D und K gebunden ist, und der Chromkomplex der Formel (5) nicht mehr als ein oder zwei Sulfogruppen enthält.

13. Chromkomplexe gemäss einem der Ansprüche 5 und 9, worin X der α,β-Dibrompropionyl- oder α-Bromacryloylrest ist, der über einer Aminogruppe an D und/oder K gebunden ist.

14. Verfahren zur Herstellung der Chromkomplexe gemäss Anspruch 1, dadurch gekennzeichnet, dass man eine potentiell zwei- oder dreizähnige komplexbildende organische Verbindung, die den bianionischen Rest B enthält, mit einem 1 : 1-Chromkomplex der Formel

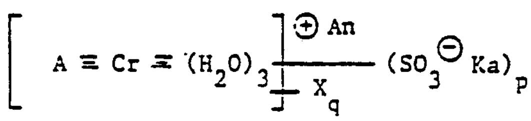 (6)

worin A, X und Ka die in Anspruch 1 angegebenen Bedeutungen haben, und p = 0, 1, 2 oder 3, q = 0, 1 oder 2 und An ein Anion ist, in wässrigem Medium, gegebenenfalls in Gegenwart eines von Wasser verschiedenen, farblosen, monofunktionellen Liganden L umsetzt und gegebenenfalls anschliessend den erhaltenen Chromkomplex mit einer den/die faserreaktiven Rest(e) einführenden Verbindung(en) umsetzt, wobei, falls p = 0 ist, der Rest B mindestens eine Sulfogruppe enthält.

15. Verfahren gemäss Anspruch 14, dadurch gekennzeichnet, dass man die potentiell zwei- oder dreizähnige, komplexbildende, organische Verbindung, die den bianionischen Rest B enthält, mit dem 1 : 1-Chromkomplex der Formel (6) bei einer Temperatur von 60 bis 100° und einem pH von 5 bis 11 umsetzt.

16. Verfahren gemäss Anspruch 14, dadurch gekennzeichnet, dass man die Umsetzung mit einer die Reaktivgruppe(n) einführenden Verbindung bei einer Temperatur von 15 bis 30 °C und einem pH von 5 bis 8 ausführt.

17. Verfahren zum Färben textiler Materialien mit Chromkomplexen gemäss den Ansprüchen 1 bis 13, dadurch gekennzeichnet, dass man eine wässrige Flotte, welche eine den Rest B einführende Verbindung und den 1 : 1-Chromkomplex der Formel

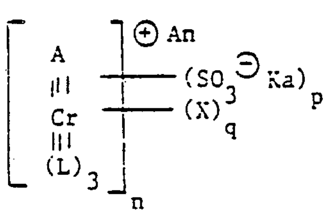 (11)

worin A, L, X und Ka die in Anspruch 1 angegebenen Bedeutungen haben, und p = 0 bis 3, q = 0 bis 2 und An ein Anion ist, das textile Material und gegebenenfalls weitere Zusätze enthält, verwendet, die Flotte gegebenenfalls stufenweise auf 100 °C erhitzt, anschliessend alkalisch stellt und die Färbung fertigstellt, wobei, falls p = 0 ist, die den Rest B einführende Verbindung mindestens eine $SO_3^{\ominus}$ Ka Gruppe enthält,

und falls q = 0 ist, die den Rest B einführende Verbindung mindestens einen faserreaktiven Rest X enthält.

18. Verfahren gemäss Anspruch 17, dadurch gekennzeichnet, dass man die den Rest B einführende Verbindung und den 1 : 1-Chromkomplex der Formel (11) im molaren Verhältnis 2 : 1 bis 1 : 1 einsetzt.

19. Verfahren gemäss Anspruch 17, dadurch gekennzeichnet, dass man die Färbeflotte, welche die in Anspruch 15 angegebenen Komponenten enthält, innerhalb von 10 bis 45 Minuten auf 60 bis 80 °C erwärmt, diese Flottentemperatur für 10 bis 45 Minuten beibehält und anschliessend innerhalb von 10 bis 30 Minuten auf 100 °C aufheizt, diese Temperatur für 30 bis 90 Minuten beibehält, auf 85 °C abkühlt, den pH der Flotte auf 8 bis 9 einstellt und während weiteren 10 bis 30 Minuten bei 85 °C färbt.

20. Verfahren gemäss Anspruch 17, dadurch gekennzeichnet, dass man eine wässrige Flotte, welche Oxalsäure, Malonsäure, Zitronensäure, Apfelsäure, Weinsäure, Brenzkatechin, Phthalsäure, Milchsäure oder Salicylsäure als den Rest B einführende Verbindung und den 1 : 1-Chromkomplex der Formel

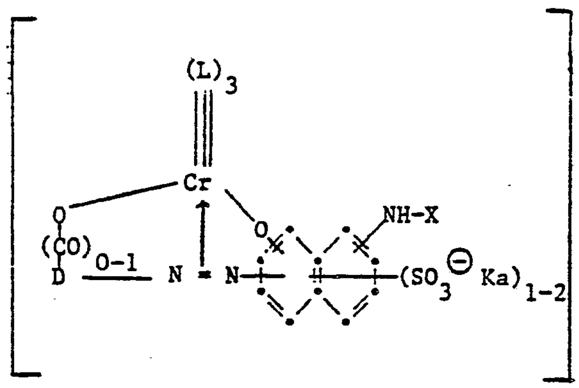

(14)

worin L, Ka und An die in Anspruch 17 angegebenen Bedeutungen haben, D ein Benzolrest ist, der ausser durch die —(CO)$_{0-1}$—O-Gruppe, welche in o-Stellung zur Azogruppe an D gebunden ist, noch durch Sulfo, Nitro, Sulfamoyl und Methoxy substituiert sein kann, oder ein Naphthalinrest ist, der ausser durch die Gruppe —(C=O)$_{0-1}$—O, welche in o-Stellung zur Azogruppe an D gebunden ist, noch durch Sulfo und Nitro substituiert sein kann und die Azobrücke in o-Stellung zu dem Rest —O— an den Naphthalinkern gebunden ist, und X α,β-Dibrompropionyl oder α-Bromacryloyl bedeutet, verwendet.

21. Verfahren gemäss Anspruch 20, dadurch gekennzeichnet, dass man Oxalsäure als den Rest B einführende Verbindung verwendet.

22. Verfahren gemäss Anspruch 17, dadurch gekennzeichnet, dass man eine wässrige Flotte verwendet, welche eine gegebenenfalls durch Sulfo substituierte α,β-Dibrompropionylaminosalicylsäure oder α-Bromacryloylaminosalicylsäure als Rest B einführende Verbindung und den 1 : 1-Chromkomplex der Formel

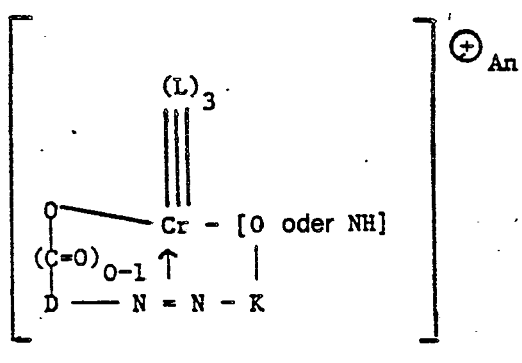

(15)

worin L Wasser, D einen Benzol- oder Naphthalinrest, der substituiert sein kann, durch Sulfo, Nitro und Halogen und K einen gegebenenfalls durch Sulfo oder Halogen substituierten 1-Phenyl-3-methylpyrazolon-(5)-Rest, einen Acetoacetanilidrest, einen gegebenenfalls durch Sulfo substituierten Naphthalinrest oder einen durch $C_{1-5}$-Alkyl substituierten Phenylrest bedeutet, die Azobrücke in Nachbarstellung zu dem Rest —(C=O)$_{0-1}$—O— und [O oder NH] an D und K gebunden ist, und An die in Anspruch 17 angegebene Bedeutung hat, enthält.

23. Verfahren gemäss Anspruch 17, dadurch gekennzeichnet, dass die Flotte als weitere Zusätze eine anorganische oder organische Säure, insbesondere Essigsäure, ein Alkali- oder Ammoniumsalz, insbesondere Ammoniumsulfat, und gegebenenfalls ein Egalisiermittel enthält.

24. Verfahren gemäss Anspruch 17, dadurch gekennzeichnet, dass man als textile Materialien synthetisches oder natürliches Polyamid verwendet.

25. Verwendung der Chromkomplexe gemäss Anspruch 1 zum Färben textiler Materialien.

26. Das gemäss einem der Ansprüche 17 oder 25 gefärbte Textilmaterial.

## Claims

1. A chromium complex of the formula

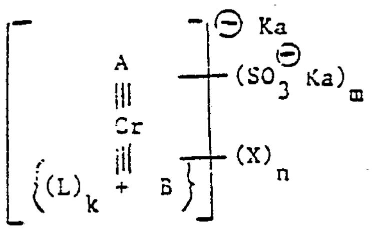

(1)

in which A is the radical of a dicyclically metallisable azo or azomethine dye, B is the radical of a potentially bi- or tridentate bianionic complexible organic compound which contains no azo or azomethine group, L is a colourless monofunctional ligand, X is a fibrereactive radical, Ka is a cation, k is 0 or 1, m is 1, 2 or 3, n is 1 or 2, and the X radical and the $SO_3$ Ka group are each bonded to the radical A and/or B.

2. A chromium complex according to claim 1 in which the radical A has the formula

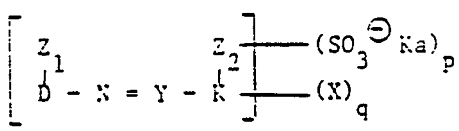

(2)

in which D is the radical of a diazo component of the benzene or naphthalene series, Y is a nitrogen atom or a CH group, K, in the event that Y is a nitrogen atom, is the radical of a coupling component, or in the event that Y is a CH group is the radical of an o-hydroxybenzaldehyde or an o-hydroxynaphthaldehyde $Z_1$, which is in the o-position to the —N=Y— radical, is a —O— or —COO— group, and $Z_2$ is a —O— or —N(R)— group where R is hydrogen, substituted or unsubstituted $C_{1-4}$ alkyl or substituted or unsubstituted phenyl, and $Z_2$ is bonded to K in the adjacent position to the —N=Y— radical, Ka and X are as defined in claim 1, p is 0, 1, 2 or 3 and q is 0, 1 or 2, and if p is 0 the B radical contains at least one $SO_3^{\ominus}$ Ka group and if q is 0 at least one fibre-reactive radical X.

3. A chromium complex according to claim 1 in which B is the radical of a potentially at bi- or tridentate bianionic complexible organic compound of the benzene, naphthalene or heterocyclic series or of the aliphatic series and can contain 1 or 2 sulfonic acid groups and a fibre-reactive radical X.

4. A chromium complex according to any one of claims 1 to 3 in which X is a fibre-reactive radical of the aliphatic or heterocyclic series which is bonded to the azo or azomethine dye radical A and/or to the radical B either directly or via a bridge member.

5. A chromium complex according to any one of claims 1 to 4 of the formula

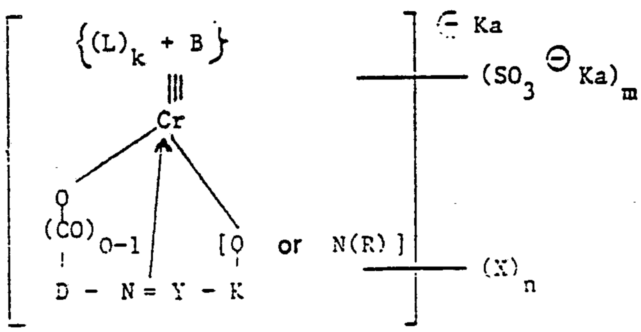

(3)

in which B is the radical of a potentially bi- or tridentate bianionic complexible organic compound of the benzene, naphthalene or heterocyclic series or the aliphatic series, L is a colourless monofunctional ligand, D is the radical of a diazo component of the benzene or naphthalene series which contains the $-(CO)_{0-1}-$O-group in the o-position relative to the —N=Y-group, Y is a nitrogen atom or a —CH group, K, in the event that Y is a nitrogen atom, is the radical of a coupling component of the benzene or naphthalene series or of the 5-pyrazolone, 5-aminopyrazole, acetoacetarylide, quinolone or benzoylacetarylide series which contains the —[O or N(R)]— radical adjacent to the azo bridge and R is hydrogen, substituted or unsubstituted $C_{1-4}$ alkyl or substituted or unsubstituted phenyl, or, in the event that Y is a CH group, K is the radical of an o-hydroxybenzaldehyde or o-hydroxynaphthaldehyde, and X is a fibre-reactive radical of the aliphatic or heterocyclic series which is bonded to D and/or K and/or B either directly or via a bridge member, Ka is a cation, k is 0 or 1, m is 1, 2 or 3 and n is 1 or 2, and the $SO_3^{\ominus}$ Ka group is bonded to D and/or K and/or B.

6. A chromium complex according to claim 5 in which Y is a nitrogen atom.

7. A chromium complex according to claim 5 in which B is a radical of the o-hydroxybenzoic acid, 8-carboxy-1-naphthol, phthalic acid or pyrocatechol series or a radical of the formulae

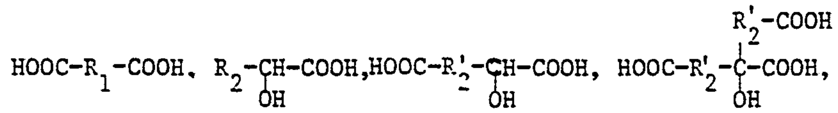

where $R_1$ is a direct bond, $C_{1-2}$ alkylene or —CH=CH—, $R_2$ is $C_{1-4}$ alkyl, $R'_2$ is $C_{1-4}$ alkylene, and the radicals $R_1$, $R_2$ and $R'_2$ can be further substituted by halogen and $C_{1-4}$-alkoxy.

8. A chromium complex according to claim 5 in which X is an acryloyl, monohalogenoacryloyl, dihalogenoacryloyl, trihalogenoacryloyl, monohalogenomethacryloyl, dihalogenomethacryloyl, trihalogenomethacryloyl, monohalogenopropionyl, dihalogenopropionyl, phenylsulfonylpropionyl, methylsulfonylpropionyl, vinylsulfonyl, β-chloroethylsulfonyl or β-sulfatoethylsulfonyl radical or a radical of the monohalogenopyrimidyl, dihalogenopyrimidyl or trihalogenopyrimidyl or monohalogenotriazinyl or dihalogenotriazinyl series and can be bonded to D and/or K and/or B via a bridge member of the formula

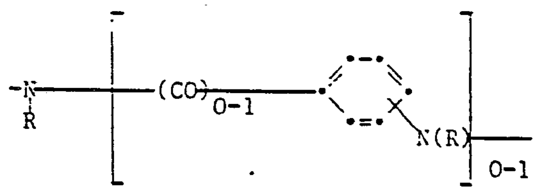

or

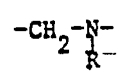

and R is a defined in claim 5.

9. A chromium complex according to claim 5 in which B is the radical of oxalic acid, malonic acid, citric acid, malic acid, tartaric acid, pyrocatechol, phthalic acid, lactic acid, salicyclic acid, sulfosalicylic acid or salicylic acid which is substituted by one or two radicals X and can be substituted by sulfo or acetylamino, a colourless monofunctional ligand L is water, D is a benzene radical which, in addition to being substituted by the metallisable group, can also be additionally substituted by sulfo, nitro, halogen, sulfamoyl, methoxy and the radical X, or is a naphthalene radical which, in addition to being substituted by a metallisable group, can also additionally be substituted by sulfo, nitro, halogen and the radical X, K, in the event that Y is a nitrogen atom, is a benzene radical which is bonded via —O— or —N(R)— to the position adjacent to the azo bridge and which can be substituted by $C_{1-5}$ alkyl, hydroxyl, diethylamino, sulfo and the radical X, a naphthalene radical which can be substituted by chlorine, acetylamino, sulfamoyl, sulfo and the radical X, X being bonded to the naphthalene nucleus either directly or via the phenylamino radical, a 1-phenyl-3-methylpyrazol-5-one radical which can be substituted in the phenyl ring by sulfo, halogen and the radical X, a 1-(2′, 2″-disulfostilbene)-3-methylpyrazol-5-one radical which contains the radical X in the 4″-position, an acetoacetanilide radical which can be substituted in the phenyl ring by chlorine, or a 1-methyl-4-hydroxyquinol-2-one radical, or, in the event that Y is a CH group, is the radical of 2-hydroxybenzaldehyde, X is an α,β-dibromopropionyl, α-bromoacryloyl, β-chloroacryloyl, 2,6-difluoro-5-chloropyrimidyl, 2,4-dichlorotriazinyl, 2-chloro-4-isopropoxytriazinyl, 2-chloro-4-(3′-sulfophenylamino)-triazinyl, 2-chloro-4-ethoxytriazinyl, 2-chloro-4-phenoxytriazinyl, 2-fluoro-4-(3′-sulfophenylamino)-triazinyl, 2-fluoro-4-(2′-methylphenylamino)-triazinyl, 2-fluoro-4-isopropylamino-triazinyl, 2-fluoro-5-chloro-6-methylpyrimidinyl, 2-fluoro-5-chloro-6-methylpyrimidinyl, 2-chloro-4-(2′-sulfophenylamino)-triazinyl, 2-chloro-4-aminotriazinyl, 2-chloro-4-phenylaminotriazinyl or β-chloroethyl-sulfonylbutyryl radical which is bonded via —NH—, and Ka is an alkali metal cation.

10. A chromium complex according to claim 9 of the formula

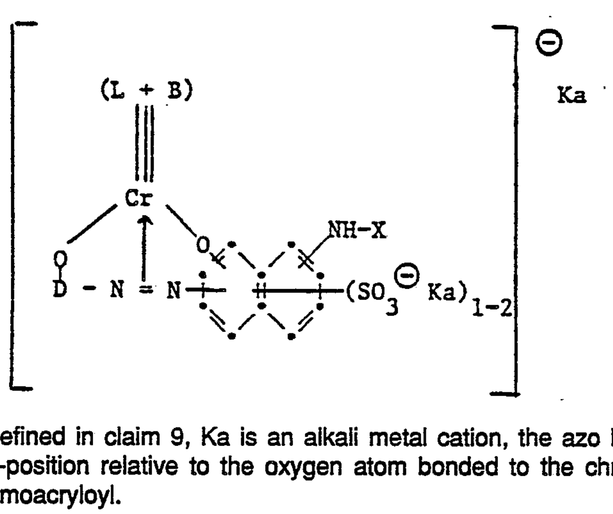

(4)

in which B, L and D are as defined in claim 9, Ka is an alkali metal cation, the azo bridge is bonded to the naphthalene nucleus in the o-position relative to the oxygen atom bonded to the chromium atom, and X is α,β-dibromopropionyl or α-bromoacryloyl.

11. A chromium complex according to either of claims 9 and 10 in which B is the complexed radical of oxalic acid.

12. A chromium complex according to claim 9 of the formula

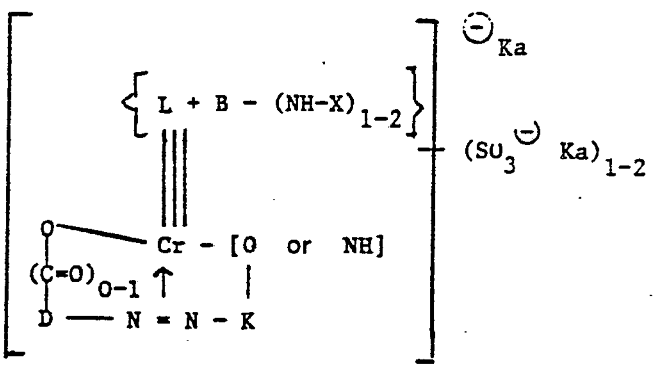

(5)

in which B is the radical of a salicylic acid which can be substituted by sulfo, L is water, D is a benzene or naphthalene radical which can be substituted by sulfo, nitro and halogen, K is a 1-phenyl-3-methyl-pyrazol-5-one radical which can be substituted by sulfo or halogen, or is an acetoacetanilide radical, a naphthalene radical which can be substituted by sulfo or a phenyl radical which is substituted by $C_{1-5}$ alkyl, X is α,β-dibromoproprionyl or α-bromoacryloyl, the azo bridge is bonded to D or K in a position adjacent to the $-(C{=}O)_{0-1}-O-$ and [O or NH] radical, and the chromium complex of the formula (5) contains no more than 1 or 2 sulfo groups.

13. A chromium complex according to any one of claims 5 and 9 in which X is an α,β-dibromopropionyl or α-bromoacryloyl radical which is bonded to D and/or K via an amino group.

14. A process for preparing the chromium complex according to claim 1, which comprises reacting a potentially bi- or tridentate complexible organic compound which contains the bianionic radical B with a 1 : 1 chromium complex of the formula

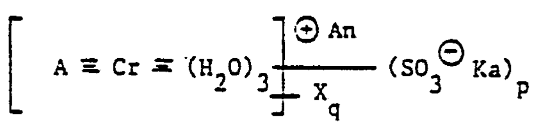

(6)

in which A, X and Ka are as defined in claim 1, p is 0, 1, 2 or 3, q is 0, 1 or 2, and An is an anion, in an aqueous medium in the absence or presence of a colourless monofunctional ligand L other than water, and if desired subsequently reacting the resulting chromium complex with a compound, or compounds, which introduce(s) the fibre-reactive radical(s), and wherein if p is 0 the radical contains at least one sulfo group.

15. A process according to claim 14, wherein the potentially bi- or tridentate complexible organic compound which contains the bianionic radical B is reacted with the 1 : 1 chromium complex of the formula (6) at a temperature of 60 to 100° and at pH 5-11.

16. A process according to claim 14, wherein the reaction with a compound which introduces the reactive group(s) is carried out at a temperature of 15 to 30 °C and at pH 5-8.

17. A process for dyeing textile materials with a chromium complex according to claims 1 to 13, which comprises using an aqueous liquor which contains a compound introducing the radical B, the 1 : 1 chromium complex of the formula

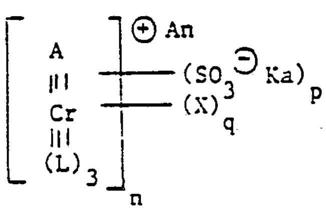

(11)

in which A, L, X and Ka are as defined in claim 1, p is 0 to 3, q is 0 to 2 and An is an anion, and the textile material and can, if desired, also contain further additives, heating the liquor to 100 °C in continuous or stepwise fashion and then bringing it to an alkaline pH, and completing the dyeing, and wherein if p is 0 the compound introducing the radical B contains at least one $SO_3^{\ominus}$ Ka group and if q is 0 at least one fibre-reactive radical X.

18. A process according to claim 17, wherein the compound introducing the radical B and the 1 : 1

chromium complex of the formula (11) are deployed in a molar ratio of 2 : 1 to 1 : 1.

19. A process according to claim 17, wherein the dyeing liquor which contains the components indicated in claim 15 is raised to 60 to 80 °C in the course of 10 to 45 minutes, is held at said temperature for 10 to 45 minutes, is then raised to 100 °C in the course of 10 to 30 minutes, is maintained at said temperature for 30 to 90 minutes, is cooled down to 85 °C, is brought to pH 8-9 and is used for dyeing at 85 °C for a further 10 to 30 minutes.

20. A process according to claim 17, wherein use is made of an aqueous liquor which contains oxalic acid, malonic acid, citric acid, malic acid, tartaric acid, pyrocatechol, phthalic acid, lactic acid or salicylic acid as the compound introducing the radical B and the 1 : 1 chromium complex of the formula

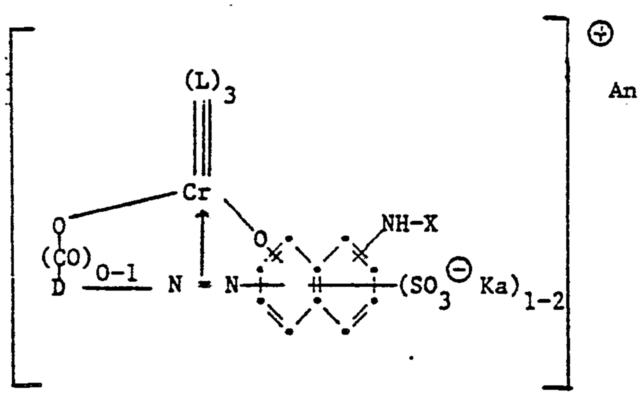

(14)

in which L, Ka and An are as defined in claim 17, D is a benzene radical which, in addition to being substituted by the —(CO)$_{0-1}$—O— group, which is bonded to D in the o-position relative to the azo group, can also be additionally substituted by sulfo, nitro, sulfamoyl and methoxy, or is a naphthalene radical which, in addition to being substituted by the —(C=O)$_{0-1}$—O group, which is bonded to D in the o-position relative to the azo group, can also be additionally substituted by sulfo and nitro, the azo bridge is bonded to the naphthalene nucleus in the o-position relative to the —O-radical, and X is α, -dibromopropionyl or β-bromoacryloyl.

21. A process according to claim 20, wherein oxalic acid is used as the compound introducing the radical B.

22. A process according to claim 17, wherein use is made of an aqueous liquor which contains an unsubstituted or sulfo-substituted α,β-dibromopropionylaminosalicylic acid or α-bromoacryloylaminosalicylic acid as the compound introducing the radical B and the 1 : 1 chromium complex of the formula

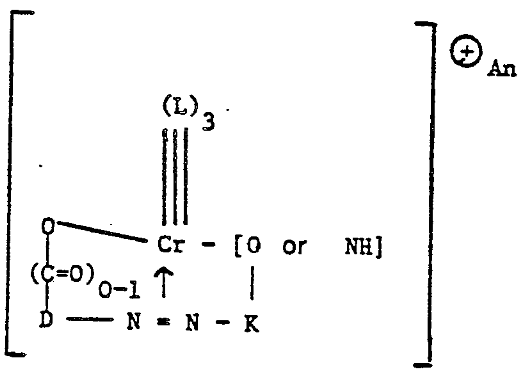

(15)

in which L is water, D is a benzene or naphthalene radical which can be substituted by sulfo, nitro and halogen, K is a 1-phenyl-3-methylpyrazol-5-one radical which can be substituted by sulfo or halogen, an acetoacetanilide radical, a naphthalene radical which can be substituted by sulfo or a phenyl radical which is substituted by $C_{1-5}$ alkyl, the azo bridge is bonded to D and K in positions adjacent to the —(C=O)$_{0-1}$—O— and [O or NH] radicals, and An is as defined in claim 17.

23. A process according to claim 17, wherein the liquor contains as further additives an inorganic or organic acid, in particular acetic acid, and an alkali metal or ammonium salt, in particular ammonium sulfate and can, if desired, also contain a levelling agent.

24. A process according to claim 17, wherein the textile materials are made of synthetic or natural polyamide.

25. Use of the chromium complex according to claim 1 for dyeing textile materials.

26. Textile material dyed according to any one of claims 17 or 25.

**Revendications**

1. Complexes de chrome de formule

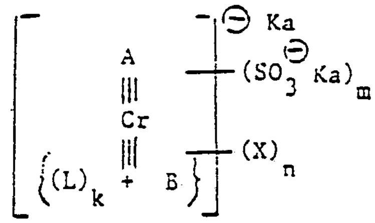

(1)

dans laquelle A est le résidu d'un colorant azoïque ou azométhine pouvant subir une métallation dicyclique, B est le résidu d'un composé organique complexant, bianionique, potentiellement bidenté ou tridenté, qui ne contient aucun groupe azoïque ou azométhine, L est un ligand monofonctionnel incolore, X est un résidu réactif sur les fibres, Ka est un cation, k = 0 ou 1, m = 1, 2 ou 3 et n = 1 ou 2, le résidu X et le groupe $SO_3^{\ominus}$ Ka étant liés au résidu A et/ou B.

2. Complexes de chrome selon la revendication 1, dans lesquels le résidu A correspond à la formule

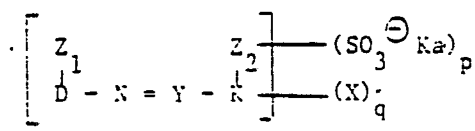

(2)

dans laquelle D est le résidu d'un composant diazo de la série du benzène ou du naphtalène, Y est un atome d'azote ou le groupe CH, K, quand Y est un atome d'azote, représente le résidu d'un composant de copulation ou encore, quand Y est le groupe CH, représente le résidu d'un o-hydroxybenzaldéhyde ou d'un o-hydroxynaphtaldéhyde, $Z_1$, en position ortho par rapport au résidu —N=Y— est le groupe —O— ou —COO—, et $Z_2$ est le groupe —O— ou —N(R)—, où R est un hydrogène ou un radical alkyle en $C_1$-$C_4$ éventuellement substitué ou phényle éventuellement substitué, et $Z_2$ est lié à K en position voisine du radical —N=Y—, Ka et X ont les significations données dans la revendication 1, p = 0, 1, 2 ou 3, et q = 0, 1 ou 2, le résidu B contenant au moins un groupe ($SO_3^{\ominus}$ Ka) lorsque p = 0 et le résidu B contenant au moins un résidu réactif sur les fibres X si q = 0.

3. Complexes de chrome selon la revendication 1, dans lesquels B est le résidu d'un composé organique complexant, bianionique, potentiellement bidenté ou tridenté, de la série du benzène, du naphtalène ou hétérocyclique, ou de la série aliphatique, pouvant contenir un ou deux groupes acides sulfoniques et un résidu X réactif sur les fibres.

4. Complexes de chrome selon l'une des revendications 1 à 3, dans lesquels X est un résidu réactif sur les fibres de la série aliphatique ou hétérocyclique, qui est lié, directement ou par l'intermédiaire d'un chaînon pontant, au résidu de colorant azoïque ou azométhine A et/ou au résidu B.

5. Complexes de chrome selon l'une des revendications 1 à 4, de formule

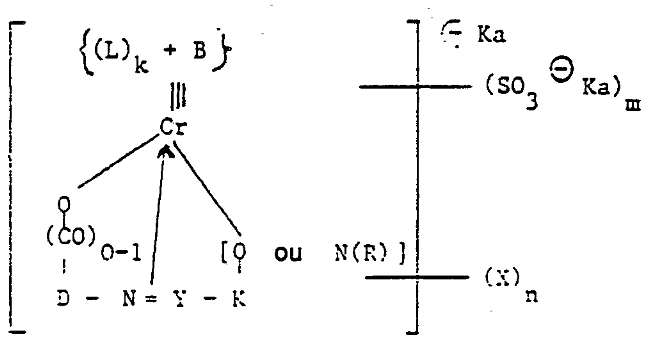

(3)

dans laquelle B est le résidu d'un composé organique complexant bianionique potentiellement bidenté ou tridenté, de la série du benzène, du naphtalène ou hétérocyclique ou de la série aliphatique, L est un ligand monofonctionnel incolore, D est le résidu d'un composant diazo de la série du benzène ou du naphtalène, qui contient le groupe $-(CO)_{0-1}-O-$ en position ortho par rapport au groupe —N=Y—, Y est un atome d'azote ou le groupe —CH, K, quand Y est un atome d'azote, représente le résidu d'un composant de copulation de la série du benzène ou du naphtalène, ou de la série de la 5-pyrazolone, du 5-aminopyrazole, de l'acétoacétarylide, de la quinolone ou de l'arylide de l'acide benzoylacétique, qui contient le résidu —[O ou N(R)]— en position voisine du pont azoïque, et où R est un hydrogène ou un radical alkyle en $C_1$-$C_4$ éventuellement substitué ou phényle éventuellement substitué, ou encore, si Y est le groupe CH, K représente le résidu d'un ortho-hydroxybenzaldéhyde ou d'un ortho-hydroxy- naphtaldéhyde, X est un résidu, réactif sur les fibres, de la série aliphatique ou hétérocyclique, qui est lié directement ou par l'intermédiaire d'un chaînon pontant à D et/ou à K et/ou à B, Ka est un cation, k = 0 ou 1, m = 1, 2 ou 3, et n = 1 ou 2, le groupe $SO_3^{\ominus}$ Ka étant lié à D et/ou à K et/ou à B.

6. Complexes de chrome selon la revendication 5, dans lesquels Y est un atome d'azote.

7. Complexes de chrome selon la revendication 5, dans lequels B est un résidu de la série de l'acide o-hydroxybenzoïque, du 8-carboxy-1-naphtol, de l'acide phtalique, ou du pyrocatéchol ou un résidu issu des formules suivantes

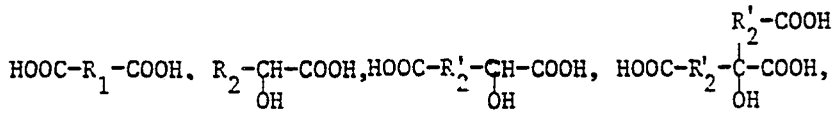

où $R_1$ est une liaison directe ou un enchaînement alkylène en $C_1$-$C_2$ ou —CH=CH—, $R_2$ est un radical alkyle en $C_1$-$C_4$ et $R'_2$ un enchaînement alkylène en $C_1$-$C_4$, et les résidus $R_1$, $R_2$ et $R'_2$ portent éventuellement des substituants supplémentaires halogène et alcoxy en $C_1$-$C_4$.

8. Complexes de chrome selon la revendication 5, dans lesquels X est un radical acryloyle, mono-, di- ou trihalogénoacryloyle ou -méthacryloyle, mono- ou dihalogéno-propionyle, phénylsulfonylpropionyle, méthylsulfonylpropionyle, vinylsulfonyle, β-chloroéthylsulfonyle, β-sulfatoéthylsulfonyle, ou un résidu de la série du mono- di- ou trihalogénopyrimidyle ou du mono- ou dihalogénotriazinyle, où X est, éventuellement par l'intermédiaire d'un chaînon pontant de formule

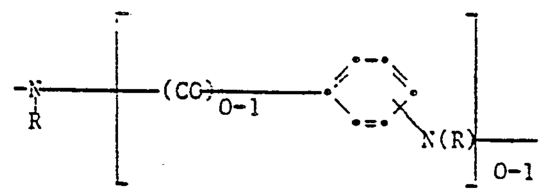

ou de

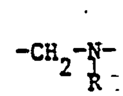

lié à D et/ou à K et/ou à B, et R a les significations données dans la revendication 5.

9. Complexes de chrome selon la revendication 5, dans lesquels B est le résidu de l'acide oxalique, de l'acide malonique, de l'acide citrique, de l'acide malique, de l'acide tartrique, du pyrocatéchol, de l'acide phtalique, de l'acide lactique, de l'acide salicylique, de l'acide sulfosalicylique, de l'acide salicylique substitué par un ou deux radicaux X et éventuellement par sulfo ou acétylamino, L, en tant que ligand monofonctionnel incolore, est l'eau, D est un résidu benzène qui, outre par le groupe métallable, peut encore être substitué par sulfo, nitro, halogène, sulfamoyle, méthoxy et le radical X, ou encore un résidu naphtalène qui, outre par le groupe métallable, peut encore être substitué par sulfo, nitro, halogène et le radical X, K, si Y est un atome d'azote, représente un radical benzène lié en position voisine de celle du pont azoïque par l'intermédiaire de —O— ou de —N(R)—, lequel peut être substitué par alkyle en $C_1$-$C_5$, hydroxy, diéthylamino ou sulfo, et par le radical X, un radical naphtalène pouvant être substitué par chlore, acétylamino, sulfamoyle ou sulfo et par le radical X, où X est lié au noyau naphtalène directement ou par l'intermédiaire d'un radical phénylamino, un radical 1-phényl-3-méthylpyrazolone-(5)- pouvant être substitué dans le noyau phényle par sulfo ou halogène et par le radical X, un radical 1-(2', 2"-disulfostilbène)-3-méthyl-pyrazolone-(5)-, contenant le résidu X en position 4", un radical acétoacétanilide pouvant être substitué par du chlore dans le noyau phényle, ou un radical 1-méthyl-4-hydroxyquinol-2-one, ou encore, si Y est le groupe CH, le résidu du 2-hydroxybenzaldéhyde, et X est le résidu, lié par l'intermédiaire de —NH—, de α,β-dibromopropionyle, α-bromoacryloyle, β-chloroacryloyle, 2,6-difluoro-5-chloropyrimidyle, 2,4-di-chlorotriazinyle, 2-chloro-4-isopropoxytriazinyle, 2-chloro-4-(3'-sulfophénylamino)-triazinyle, 2-chloro-4-éthoxytriazinyle, 2-chloro-4-phénoxytriazinyle, 2-fluoro-4-(3'-sulfophénylamino)-triazinyle, 2-fluoro-4-(2'-méthylphénylamino)-triazinyle, 2-fluoro-4-isopropylaminotriazinyle, 2-fluoro-5-chloro-6-chlorométhylpyrimidinyle, 2-fluoro-5-chloro-6-méthylpyrimidinyle, 2-chloro-4-(2'-sulfophénylamino)-triazinyle, 2-chloro-4-aminotriazinyle, 2-chloro-4-phénylaminotriazinyle ou β-chloroéthylsulfonylbutyryle, et Ka est un cation de métal alcalin.

10. Complexes de chrome selon la revendication 9, de formule

(Voir Formule page 65)

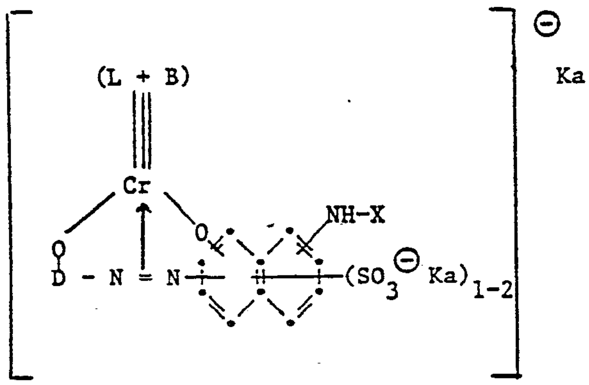

(4)

dans laquelle B, L et D ont les significations données dans la revendication 9, Ka est un cation de métal alcalin et le point azoïque est lié au noyau naphtalène en position ortho par rapport à l'atome d'oxygène lié à l'atome de chrome, et X est le radical α,β-dibromopropionyle ou α-bromoacryloyle.

11. Complexes de chrome selon l'une des revendications 9 et 10, où B est le résidu, lié en un complexe, de l'acide oxalique.

12. Complexes de chrome selon la revendication 9, de formule

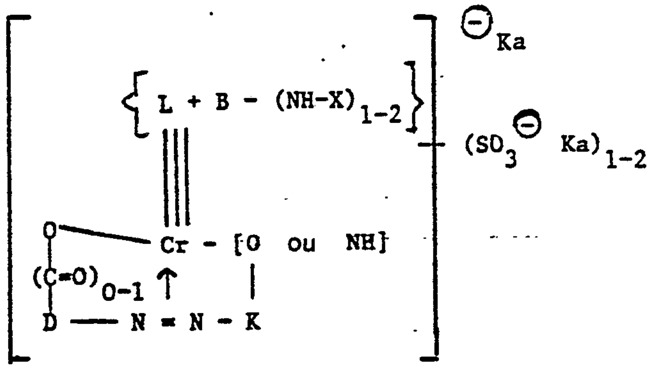

(5)

dans laquelle B est le résidu d'un acide salicylique éventuellement substitué par sulfo, L est l'eau, D est un résidu benzène ou naphtalène, pouvant être substitué par sulfo, nitro ou halogène, et K est un résidu 1-phényl-3-méthylpyrazolone-(5)- éventuellement substitué par sulfo ou halogène, un résidu acétoacétanilide, un résidu naphtalène éventuellement substitué par sulfo ou un radical phényle substitué par alkyle en $C_1$-$C_5$, X est le radical α,β-dibromopropionyle ou α-bromoacryloyle, le pont azoïque est lié à D et K en position voisine du radical $-(C=O)_{0-1}-O-$ et de [O ou NH], et le complexe de chrome de formule (5) ne contient pas plus d'un ou deux groupes sulfo.

13. Complexes de chrome selon l'une des revendications 5 et 9, où X est le radical α,β-dibromopropionyle ou α-bromoacryloyle, lié à D et/ou K par l'intermédiaire d'un groupe amino.

14. Procédé pour la préparation des complexes de chrome selon la revendication 1, caractérisé en ce qu'on fait réagir un composé organique complexant potentiellement bidenté ou tridenté, qui contient le résidu bianionique B, avec un complexe de chrome 1 : 1 de formule

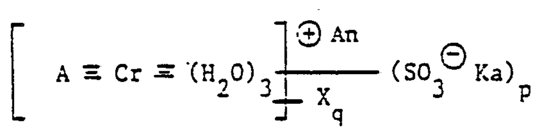

(6)

dans laquelle A, X et Ka ont les significations données dans la revendication 1, et p = 0, 1, 2 ou 3, q = 0, 1 ou 2 et An est un anion, en milieu aqueux, éventuellement en présence d'un ligand monofonctionnel incolore L différent de l'eau, et éventuellement, on fait réagir ensuite le complexe de chrome tel qu'obtenu avec un ou plusieurs composés introduisant le ou les résidus réactifs sur les fibres, le résidu B contenant au moins un groupe sulfo lorsque p = 0.

15. Procédé selon la revendication 14, caractérisé en ce qu'on fait réagir le composé organique complexant potentiellement bi ou tridenté, et contenant le résidu bianionique B, avec le complexe de chrome 1 : 1 de formule (6) à une température de 60 à 100 °C et à un pH de 5 à 11.

16. Procédé selon la revendication 14, caractérisé en ce qu'on procède à la réaction avec un composé introduisant le ou les groupes réactifs, à une température de 15 à 30 °C et à un pH de 5 à 8.

17. Procédé pour la teinture de matières textiles avec des complexes de chrome selon les revendications 1 à 13, caractérisé en ce qu'on utilise un bain aqueux qui contient un composé introduisant le résidu B et un complexe de chrome 1 : 1 de formule

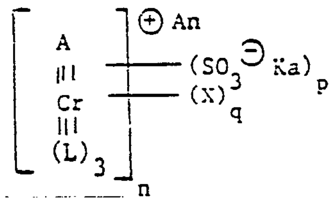

(11)

dans laquelle A, L, X et Ka ont les significations données dans la revendication 1, et p = 0 à 3, q = 0 à 2 et An est un anion, la matière textile et éventuellement d'autres additifs, en ce qu'on chauffe le bain, éventuellement par étapes, à 100 °C, en ce qu'on le rend ensuite alcalin et termine la teinture, le composé introduisant le résidu B contenant au moins un groupe $SO_3^{\ominus}$ Ka lorsque p = 0, et le composé introduisant le résidu B contenant au moins un résidu X réactif sur les fibres lorsque q = 0.

18. Procédé selon la revendication 17, caractérisé en ce qu'on utilise le composé introduisant le résidu B et le complexe de chrome 1 : 1 de formule 11 dans un rapport en moles de 2 : 1 à 1 : 1.

19. Procédé selon la revendication 17, caractérisé en ce qu'on amène, en 10 à 45 minutes, le bain de teinture contenant les composants indiqués dans la revendication 15 à 60 à 80 °C, on maintient cette température de bain pendant 10 à 45 minutes, puis on amène à 100 °C en 10 à 30 minutes, on reste à cette température pendant 30 à 90 minutes, on refroidit à 85 °C, on ajuste le pH du bain à 8-9 et on procède à la teinture pendant encore 10 à 30 minutes à 85 °C.

20. Procédé selon la revendication 17, caractérisé en ce qu'on utilise un bain aqueux contenant de l'acide oxalique, de l'acide malonique, de l'acide citrique, de l'acide malique, de l'acide tartrique, du pyrocatéchol, de l'acide phtalique, de l'acide lactique ou de l'acide salicylique en tant que composé introduisant le résidu B, et le complexe de chrome 1 : 1 de formule

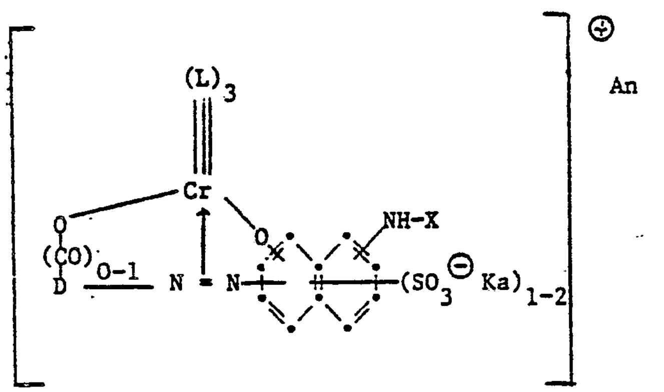

(14)

dans laquelle L, Ka et An ont les significations données dans la revendication 17, D est un résidu benzène qui, outre par le groupe $-(CO)_{0-1}-O-$, lequel est lié à D en position ortho par rapport au groupe azoïque, peut être encore substitué par sulfo, nitro, sulfamoyle ou méthoxy, ou est un radical naphtalène qui, outre par le groupe $-(CO)_{0-1}-O-$, qui est lié à D en position ortho par rapport au groupe azoïque, peut encore être substitué par sulfo ou nitro, et le pont azoïque est lié au noyau naphtalène en position ortho par rapport au radical —O—, et X est le radical α,β-dibromopropionyle ou α-bromoacryloyle.

21. Procédé selon la revendication 20, caractérisé en ce qu'on utilise de l'acide oxalique en tant que composé introduisant le résidu B.

22. Procédé selon la revendication 17, caractérisé en ce qu'on utilise un bain aqueux contenant un acide α,β-dibromopropionyl-aminosalicylique ou α-bromoacryloylaminosalicylique éventuellement substitué par sulfo en tant que composé introduisant le résidu B, et le complexe de chrome 1 : 1 de formule

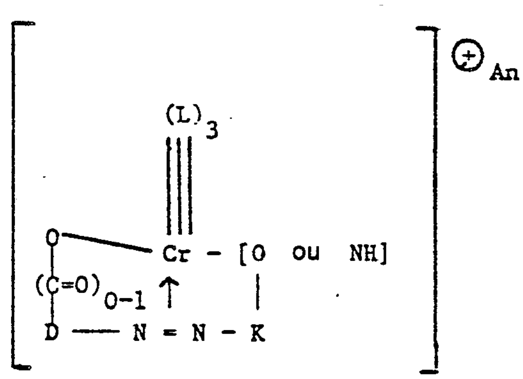

(15)

dans laquelle L est l'eau, D est un résidu benzène ou naphtalène pouvant être substitué par sulfo, nitro ou halogène, et K est un résidu 1-phényl-3-méthylpyrazolone-(5)- éventuellement substitué par sulfo ou halogène, un radical acétoacétanilide, un résidu naphtalène éventuellement substitué par sulfo ou un résidu phényle substitué par alkyle en $C_1$-$C_5$, le pont azoïque étant lié à D et K en position voisine du radical $-(C=O)_{0-1}-O$ et de [O ou NH], et An a la signification donnée dans la revendication 17.

23. Procédé selon la revendication 17, caractérisé en ce que le bain contient, en tant qu'additifs supplémentaires, un acide minéral ou organique, en particulier l'acide acétique, un sel de métal alcalin ou d'ammonium, en particulier le sulfate d'ammonium, et éventuellement un agent d'unisson.

24. Procédé selon la revendication 17, caractérisé en ce qu'on utilise comme matières textiles du polyamide synthétique ou naturel.

25. Utilisation des complexes de chrome selon la revendication 1 pour la teinture de matières textiles.

26. Matière textile teinte selon l'une des revendications 17 ou 25.